# EUROPÄISCHE PATENTSCHRIFT

(11) **EP 0 620 345 B1**
(45) Veröffentlichungstag und Bekanntmachung des Hinweises auf die Patenterteilung: **22.01.1997**
(21) Anmeldenummer: 94104207.9
(22) Anmeldetag: 17.03.1994
(51) Int. Cl.: E05C 17/30, F16F 9/02

(54) **Feststeller zum Feststellen relativ zueinander beweglicher Objekte**
Positioner for positioning two objects movable to each other
Dispositif de positionnement pour positioner deux objects mobiles l'un par rapport à l'autre

(30) Priorität: 18.03.1993 DE 4308669; 11.08.1993 DE 4326968
(43) Veröffentlichungstag der Anmeldung: 19.10.1994
(73) Patentinhaber: Stabilus GmbH, D-56070 Koblenz (DE)
(72) Erfinder: Schüttler, Oliver, D-56729 Monreal (DE)
(74) Vertreter: Weickmann, Heinrich, Dipl.-Ing.

(56) Entgegenhaltungen:
- DE-A- 1 459 182
- FR-A- 2 594 473
- US-A- 4 099 602

## Beschreibung

Die Erfindung betrifft einen Feststeller zum Feststellen zweier relativ zueinander beweglicher Objekte gegen äußere Kräfte in zwei gegenläufigen Bewegungsrichtungen, wobei der Feststeller in beiden Bewegungsrichtungen eine der Bewegungseinleitung entgegenwirkende Haltekraft und einen - verglichen mit der Haltekraft kleineren - der fortgesetzten Bewegung entgegenwirkenden Bewegungswiderstand erzeugt, wobei weiter dieser Feststeller ausgeführt ist mit zwei relativ zueinander beweglichen Feststeller-Baugruppen, von denen eine mit einem der Objekte und eine andere mit dem anderen der Objekte gekoppelt ist, wobei weiter durch Relativbewegung dieser Feststeller-Baugruppen mindestens zwei ein Arbeitsfluid enthaltende, volumenveränderliche Arbeitskammern in der Größe ihres jeweiligen Arbeitsvolumens derart beeinflußbar sind, daß sich das Volumenverhältnis dieser Arbeitskammer in Abhängigkeit von der Bewegungsrichtung gegensinnig verändert, wobei weiter diese Arbeitskammern durch ein Fluiden-Austauschsystem miteinander verbunden sind, welches einen Fluidenaustausch zwischen den beiden Arbeitskammern in beiden Austauschrichtungen gestattet, und zwar so, daß der Fluidendurchflußwiderstand während eines Fluidenaustauschvorgangs bei dessen Beginn größer ist als im weiteren Verlauf.

Ein solcher Feststeller ist insbesondere zur Feststellung von Türen und Fenstern aus der DE-C-1 459 182 bekannt.

Bei dem bekannten Feststeller ist in einem beidendig abgeschlossenen Zylinder eine Kolbenstange durch das eine Zylinderende dichtend hindurchgeführt. Die Kolbenstange ist innerhalb des Hohlraums des Zylinders mit einem Trennkolben verbunden, der zwei Arbeitskammern voneinander trennt. Die beiden Arbeitskammern sind durch zwei Strömungswege miteinander verbunden, die innerhalb des Kolbens verlaufen. Jeder Bewegungsrichtung ist ein Rückschlagventil zugeordnet, das jeweils nur in einer Strömungsrichtung aufmachen kann. Jedes Rückschlagventil umfaßt einen Ventilkörper, welcher durch eine Federvorspannung in Absperrstellung gegen eine Zuströmöffnung vorgespannt ist und diese im Stillstand der Kolbenstange gegenüber dem Zylinder absperrt. Wenn die Kolbenstange in einer bestimmten Bewegungsrichtung gegenüber dem Zylinder bewegt wird, so bildet sich in einer der Arbeitskammern ein Überdruck aus. Dieser Überdruck wirkt auf eines der Rückschlagventile im Öffnungssinn ein. Bei Beginn der Bewegung der Kolbenstange wirkt dieser Druck zunächst nur auf eine kleine Fläche des Ventilkörpers, welche durch den Querschnitt der diesem Ventilkörper zugeordneten Zuströmöffnung bestimmt ist. Wegen der Kleinheit dieses Querschnitts der Zuströmöffnung ist ein erheblicher Überdruck in der Arbeitskammer erforderlich, um den Ventilkörper von der Dichtposition gegenüber der Zuströmöffnung abzuheben. Erst dann kann die Strömung zwischen den beiden Arbeitskammern einsetzen. Hat der Ventilkörper einmal von der Zuströmöffnung abgehoben, so bietet er dem Druck in der sich verkleinernden Arbeitskammer eine größere Beaufschlagungsfläche dar, so daß er mit einem verhältnismäßig kleinen Überdruck in der jeweiligen Arbeitskammer in Öffnungsstellung gehalten werden kann. Im einzelnen wird hierzu auf die Ausführungen in der DE-C-1 459 182 in Spalte 6, Zeilen 42 - 67 verwiesen.

Die bekannte Lösung erlaubt es, eine Tür relativ stabil in beliebiger Lage zwischen ihrer Öffnungsstellung und ihrer Schließstellung festzustellen. Es ist eine relativ große Anschubkraft notwendig, um eine in beliebiger Stellung festgesetzte Tür oder dgl. in Anfangsbewegung zu versetzen. Die Tür wird deshalb durch einen unbeabsichtigten Stoß in ihrer Lage nicht verändert. Andererseits reicht eine relativ kleine Kraft aus, um die in Bewegung versetzte Tür weiter zu öffnen oder zu schließen.

Dieses an sich vorteilhafte Verhalten der Tür wird allerdings nur durch einen erheblichen konstruktiven Aufwand erreicht, der einer verbreiteten Anwendung des Prinzips bisher im Wege stand. Der konstruktive Aufwand ist insbesondere dadurch bedingt, daß zwei Strömungswege zwischen den beiden Arbeitskammern geschaffen werden müssen. Die Bereitstellung dieser beiden Strömungswege verlangt eine Mehrzahl von strömungswegbildenden Bohrungen, darunter Axialbohrungen, welche exzentrisch im Kolben angeordnet werden müssen.

Zum Stand der Technik kann ferner auf die US-PS 4,099,602 verwiesen werden, die sich auch mit Türfeststellern, insbesondere bei Kraftfahrzeugen, befaßt. Auch bei diesen Türfeststellern wird die Feststellwirkung allein auf hydraulischem Wege erzeugt. Dabei ist zur Erhaltung eines konstanten Volumens innerhalb des Zylinders, d.h. zur Erhaltung einer konstanten Summe der Arbeitsvolumina in den beiden Arbeitskammern, eine Kolben-Kolbenstangeneinheit vorgesehen, bei welcher die Kolbenstange aus zwei in entgegengesetzten Richtungen von dem Kolben ausgehenden Kolbenstangenabschnitten besteht, welche durch zwei gegenüberliegende Endwände des Zylinders dichtend hindurchgeführt sind. Auch diese Konstruktion beruht auf der Verwendung zweier, je einer Bewegungsrichtung zwischen Zylinder und Kolbenstange zugeordneten Strömungswege durch den Kolben mit der Folge einer entsprechend aufwendigen Konstruktion. Bei dieser Konstruktion kommt überdies der Nachteil hinzu, daß auch nach einmal erfolgter Einleitung einer Bewegung der Kolbenstange gegenüber dem Zylinder die zur Öffnung des jeweiligen Rückschlagventils notwendige, äußere Anschubkraft aufrechterhalten werden muß, um die Bewegung über eine größere Strecke fortzusetzen. Man hat also nur die Wahl, entweder die Rückschlagventile so zu bemessen, daß eine relativ kleine Anschubkraft ausreicht, um sie zu öffnen. Dann hat man den Nachteil, daß auch relativ geringe unbeabsichtigte Anschubkräfte ausreichen, um die Tür unbeabsichtigterweise in Bewegung zu setzen. Will man dies verhindern, so kann man die Rückschlagventile so einstellen, daß sie nur bei größerer Anschubkraft geöffnet werden können. Dann handelt man sich aber den Nachteil ein, daß man über den ganzen jeweils beabsichtigten Weg einen dieser Anschubkraft entsprechenden Bewegungswiderstand überwinden muß.

Der Erfindung liegt die Aufgabe zugrunde, einen Feststeller anzugeben, welcher unter Beibehaltung des vorteilhaften Betriebsverhaltens eines Feststellers nach dem Prinzip der DE-C-1 459 182, d. h. eines Betriebsverhaltens, bei dem nach einer relativ größeren Anstoßkraft im weiteren Verlauf einer Türbewegung ein relativ geringer Bewegungswiderstand erzeugt wird, einen vereinfachten Konstruktionsaufwand zuläßt und deshalb für Massenproduktion geeignet ist. Zur Lösung dieser Aufgabe wird erfindungsgemäß vorgeschlagen, daß das Fluiden-Austauschsystem eine Reihenschaltung von zwei jeweils in beiden Richtungen durchströmbaren, in eine Schließstellung vorgespannten Drosselstellen aufweist, jede Drosselstelle ausgeführt mit je einem ersten Durchflußanschluß in Verbindung mit einer zugehörigen Arbeitskammer und einem zweiten Durchflußanschluß, welcher in Verbindung mit einem analogen Durchflußanschluß der jeweils anderen Drosselstelle steht. Dabei ist ein erster Druckwert am ersten Durchflußanschluß einer Drosselstelle ausreichend, um beide Drosselstellen zu öffnen, und ein zweiter kleinerer Druckwert am ersten Durchflußanschluß der jeweiligen Drosselstelle ausreichend, um beide Drosselstellen bei fortgesetzter Durchströmung offen zu halten.

Dadurch, daß bei der erfindungsgemäßen Ausbildung des Fluiden-Austauschsystems die beiden Drosselstellen zueinander in Serie geschaltet sind, läßt sich die Anordnung der das Fluiden-Austauschsystem bildenden Bohrungen innerhalb eines die Bohrungen aufnehmenden Fluidleitungskörpers wesentlich vereinfachen.

Der erfindungsgemäße Feststeller ist für die verschiedensten Zwecke einsetzbar, so auch zur Feststellung von Türen und Fenstern an Gebäuden und beweglichen Objekten, wie Kraftfahrzeugen. Dabei ist nicht nur an Linearbewegungen, sondern beispielsweise auch an Drehbewegungen gedacht. Während man im Falle der Feststellung von Linearbewegungen insbesondere mit linearbeweglichen Zylinderkolbeneinheiten arbeiten wird, bei denen der Zylinder die eine Feststeller-Baugruppe und die Kolbenstange mit dem Kolben die andere Feststeller-Baugruppe bildet, ist es leicht denkbar, daß man das Erfindungsprinzip auch bei Drehkolbeneinheiten anwenden kann, bei denen die Arbeitskammern in einem Stator-Zylinder durch einen Rotor-Kolben voneinander getrennt sind.

Bei Anwendung des Erfindungsprinzips kann man für symmetrische und asymmetrische Betriebsverhältnisse durch entsprechende Gestaltung der Drosselstellen Sorge tragen. So ist es denkbar, daß der erste Druckwert für beide Drosselstellen gleich ist; dies bedeutet, daß in beiden Richtungen eine gleich große Anstoßkraft (bzw. ein gleich großes Anstoßmoment) erforderlich ist, um eine Bewegung überhaupt einzuleiten. Es bedeutet weiter, daß dann die Stabilität der jeweils gewählten Einstellung gegenüber einem unbeabsichtigten Anstoßimpuls in beiden Richtungen gleich groß ist. Will man andererseits die Stabilität gegen unbeabsichtigten Anstoßimpuls in einer Richtung größer halten, weil beispielsweise die Gefahr des Auftretens von Anstoßimpulsen für diese Bewegungsrichtung wesentlich größer ist als für die andere Bewegungsrichtung, so kann man auch den ersten Druckwert für die beiden Drosselstellen entsprechend unterschiedlich machen. Man hat dann den Vorteil, daß die Gefahr einer unbeabsichtigten Verstellung durch Anstoßimpuls in einer Richtung herabgesetzt ist, also insbesondere in derjenigen Richtung, in der unbeabsichtigte Anstoßimpulse mit größerer Wahrscheinlichkeit zu erwarten sind, und hat andererseits erhöhte Bedienungsbequemlichkeit insofern, als man für die andere Bewegungsrichtung, in der ein unbeabsichtigter Anstoßimpuls weniger zu erwarten ist, eine beabsichtigte Bewegung leichter einleiten kann.

Auch der zweite Druckwert kann für beide Drosselstellen gleich oder unterschiedlich sein. Man kann dadurch beispielsweise Einfluß nehmen auf das Benutzerverhalten. Will man den Benutzer beispielsweise dazu veranlassen, eine Tür in Öffnungsrichtung nur so weit zu öffnen, als eben notwendig ist, um beispielsweise Windeinwirkungsmöglichkeiten gering zu halten, und will man andererseits den Benutzer dazu veranlassen, eine Tür möglichst "gerne" wieder zu schließen, so kann man den zweiten Druckwert für die den Bewegungswiderstand in Öffnungsrichtung der Tür bestimmende Drossel größer machen als den zweiten Druckwert für die den Bewegungswiderstand bei Schließen der Tür bestimmende Drossel. Man kann durch die Asymmetrie der ersten und zweiten Druckwerte auch Situationen Rechnung tragen, in denen die Relativbewegung der Objekte in einer bestimmten Bewegungsrichtung noch durch andere ständig wirkende Kräfte, also z. B. durch Schwerkraft, unterstützt ist, also etwa so, daß die einer Bewegung in Schwerkraftrichtung entgegenwirkende Haltekraft und/oder der einer Bewegung in Schwerkraftrichtung entgegenwirkende Bewegungswiderstand größer sind als Haltekraft und/oder Bewegungswiderstand für eine der Schwerkraft entgegengesetzt gerichtete Bewegung.

Eine bevorzugte Schaltungslösung zur Verwirklichung des Erfindungsprinzips liegt darin, daß eine Drosselstelle eine Durchflußkammer mit dem ersten und zweiten Durchflußanschluß und einen längs einer Bewegungsbahn beweglichen, die Durchflußkammer abdichtenden Drosselkörper umfaßt, wobei der Drosselkörper durch die Wirkung von Vorspannmitteln in eine Schließstellung vorgespannt ist, in welcher der zweite Durchflußanschluß von der Durchflußkammer getrennt ist, wobei weiter der erste Durchflußanschluß ständig mit der Durchflußkammer verbunden ist, wobei weiter in der Schließstellung des Drosselkörpers dieser einem am zweiten Durchflußanschluß herrschenden Fluidendruck eine kleinere Druckbeaufschlagungsfläche und einem innerhalb der Durchflußkammer herrschenden Fluidendruck eine größere Druckbeaufschlagungsfläche gleicher Richtung darbietet und wobei zwischen der Durchflußkammer der Drosselstelle und der zugehörigen, über den ersten Durchflußanschluß angeschlossenen Arbeitskammer eine Druckabfallstrecke vorgesehen ist. Bei einer solchen Verschaltung ergibt sich folgendes Betriebsverhalten: Wenn der Druck in der einen Arbeitskammer erhöht wird, so wird in einer Durchflußkammer, welche mit dieser Arbeitskammer ständig über einen ersten Durchflußanschluß verbunden ist, ein Druck aufgebaut. Dieser Druck wirkt auf eine größere Beaufschlagungsfläche des an diese Durchflußkammer angrenzenden Drosselkörpers. Dieser Drosselkörper weicht deshalb schon bei verhältnismäßig kleinem Druck in der ihm zugeordneten Durchflußkammer aus und öffnet den zweiten Durchflußanschluß dieser Durchflußkammer. Damit wird der Druck aus dieser Durchflußkammer auch auf den zweiten Durchflußanschluß der Durchflußkammer der anderen Drosselstelle übertragen. Er kann aber den Drosselkörper dieser anderen Drosselstelle noch nicht von dem zweiten Durchflußanschluß der Durchflußkammer der anderen Drosselstelle abheben. Erst wenn eine vorbestimmte Bewegungseinleitungskraft ausgeübt wird, wird der Druck in der zur Verkleinerung vorgesehenen Arbeitskammer so groß, daß der Druck in dem zweiten Durchflußanschluß der der anderen Drosselstelle zugehörigen Durchflußkammer ausreicht, um den Drosselkörper der anderen Drosselstelle von dem zweiten Durchflußanschluß der zugehörigen Durchflußkammer abzuheben. Dann wird auch die größere Beaufschlagungsfläche des Drosselkörpers der anderen Drosselstelle mit Druck beaufschlagt und diese Druckbeaufschlagung hält an, solange zufolge einer Weiterbewegung ein Druckabfall auf dem Weg von der Durchflußkammer der anderen Drosselstelle zu der sich dann vergrößernden Arbeitskammer stattfindet.

Die Druckabfallstrecke kann beispielsweise durch die Querschnittseinstellung des jeweils ersten Durchflußanschlusses gebildet sein. Auf diese Weise läßt sich durch einfache Bemessung einer Bohrung der Druckabfall in der Druckabfallstrecke entsprechend dem jeweils gewünschten Betriebsverhalten einstellen.

Dem Ziele eines einfachen Aufbaus des Fluiden-Austauschsystems innerhalb eines Fluidleitkörpers dient es, wenn die zweiten Durchflußanschlüsse der beiden Drosselstellen von den Enden eines Verbindungskanals gebildet sind, welcher die beiden Drosselstellen in Serie miteinander verbindet.

Die beiden Drosselstellen können in einem gemeinsamen Fluidleitungskörper untergebracht sein wieder mit dem Ziele, einen für Massenproduktion geeigneten, möglichst einfachen Fluidleitungskörper zu erhalten. Dabei können die Durchflußkammern der beiden Drosselstellen in dem Fluidleitungskörper koaxial angeordnet und durch eine Trennwand voneinander getrennt sein, welche von einem die Durchflußkammern der beiden Drosselstellen verbindenden Verbindungskanal durchsetzt ist. Die Einmündungen des Verbindungskanals in die Durchflußkammern bilden dann die zweiten Durchflußanschlüsse der beiden Drosselstellen. Nach einer bevorzugten Anwendungsform der Erfindung ist die eine Feststeller-Baugruppe als ein Zylinder und die andere als eine Kolbenstangeneinheit mit einem Trennkolben zwischen zwei Arbeitskammern ausgebildet. Dabei kann nun der Fluidleitungskörper, in dem die Drosselstellen untergebracht sind, ein Teil der Kolbenstangeneinheit sein und insbesondere wenigstens zum Teil von dem Trennkolben gebildet sein, in dem verhältnismäßig viel Platz für die Anbringung der Bohrungen des Fluiden-Austauschsystems zur Verfügung steht, auch wenn die Gesamtvorrichtung der Feststellereinheit aus Anwendungsgründen auf kleinsten Raumbedarf abgegestellt werden muß.

Beispielsweise können in einem Trennkolbenkörper eines Trennkolbens im wesentlichen zueinander konzentrisch je eine Drosselkörper-Aufnahmekammer der beiden Drosselstellen untergebracht und durch eine einstückige Trennwand des Trennkolbenkörpers voneinander getrennt sein. Dabei können die voneinander abgelegenen Enden dieser Drosselkörper-Aufnahmekammern durch je einen Stopfen verschlossen sein. Die Stopfen werden in dem Trennkolbenkörper festgesetzt. Mindestens einer von den Stopfen kann von einem Kolbenstangenabschnitt gebildet sein. Auf diese Weise kann der Trennkolben auf der Basis eines einfachen Drehteils aufgebaut werden, wobei die Verschließung der Drosselkörper-Aufnahmekammer in einem Zug mit der Herstellung der Verbindung zwischen Trennkolben und Kolbenstange erfolgen kann. Bei dieser Ausführungsform wird die jeweilige Zuflußkammer einer Drosselstelle innerhalb der Drosselkörper-Aufnahmekammer durch den Drosselkörper und die Trennwand begrenzt.

Die Stopfen können in Verlängerungen der Drosselkörper-Aufnahmekammern eingesetzt und darin festgemacht werden etwa in der Weise, daß die Verlängerungen der Drosselkörper-Aufnahmekammern größeren Durchmesser besitzen als die Drosselkörper-Aufnahmekammern selbst und daß die Stopfen in axialer Richtung an jeweils einer Übergangsschulter zwischen einer Drosselkörper-Aufnahmekammer und deren Verlängerung anstoßen. Dabei können die Stopfen in den Verlängerungen der Drosselkörper-Aufnahmekammern durch Deformation des Trennkolbenkörpers etwa durch Umbördeln fixiert werden. Auf diese Weise läßt sich ein dichter Abschluß der Drosselkörper-Aufnahmekammer durch den jeweiligen Stopfen gewinnen. Eine solche Abdichtung kann wesentlich sein, um eine Druckmittelbeaufschlagung der Rückseite des Drosselkörpers und dadurch veranlaßte Störungen im Betriebsablauf zu vermeiden.

Die ersten Durchflußanschlüsse der Durchflußkammern können von Radialbohrungen des Trennkolbenkörpers gebildet sein; diese Radialbohrungen können dann in Ringräume münden, welche zwischen je einem verjüngten Endabschnitt des Trennkolbenkörpers und einer Innenumfangsfläche des Zylinders gebildet sind.

Um diese Ringräume bereitzustellen und günstige Passungsverhältnisse für den Trennkolben innerhalb des Zylinders zu schaffen, kann man den Trennkolbenkörper an mittlerer Stelle seiner Länge in Achsrichtung des Zylinders mit einer Verdickung ausführen, welche an einer Innenumfangsfläche des Zylinders ggf. unter Vermittlung einer Dichtungsanordnung anliegt.

Im Hinblick auf kleinste Bauweise kann man die auf einen in der jeweiligen Drosselkörper-Aufnahmekammer aufgenommenen Drosselkörper einwirkenden Vorspannmittel wenigstens zum Teil innerhalb des jeweiligen Stopfens unterbringen. Dies gilt Insbesondere für den Fall, daß diese Vorspannmittel von länglichen Schraubendruckfedern gebildet sind, die sich leicht innerhalb einer Bohrung des jeweiligen Stopfens bzw. der jeweiligen Kolbenstange unterbringen lassen. Auf diese Weise lassen sich relativ lange Schraubendruckfedern verwenden, die eine annähernd lineare Charakteristik haben. Eine solche lineare Charakteristik läßt sich leicht dadurch gewinnen, daß man zur Erzeugung einer bestimmten Vorspannkraft nicht etwa eine entsprechend starke Schraubendruckfeder, d. h. eine Schraubendruckfeder verwendet, die schon nach kürzestem Verformungsweg eine entsprechend große und dann weiter ansteigende Rückstellkraft besitzt, sondern indem man eine lange und schwache Feder verwendet, die im ungespannten Zustand eine wesentlich geringere Federkonstante hat als sie der gewünschten Vorspannkraft entspricht, und daß man diese Schraubendruckfeder dann einer auch in der Absperrstellung stets vorhandenen Vorspannung beim Einbau unterwirft, die der gewünschten Vorspannung auf den Drosselkörper entspricht. In diesem Fall ändert sich die Federkraft der Schraubendruckfeder beim Abheben des Drosselkörpers aus der die Verschließung des zweiten Durchflußanschlusses bewirkenden Stellung nur geringfügig, so daß der Bewegungswiderstand bei fortgesetzter Bewegung noch geringer gehalten werden kann.

Die Arbeitskammern können in einem oder mehreren Abschnitten des relativen Bewegungsbereichs durch einen Fluiden-By-Pass überbrückbar sein. Damit hat es folgende Bewandtnis: Durch einen solchen Fluiden-By-Pass wird das die Drosselstellen in Serienschaltung enthaltende Fluiden-Austauschsystem praktisch kurzgeschlossen, d. h. es kann ein Fluidenaustausch zwischen den beiden Arbeitskammern stattfinden, ohne daß der Strömungswiderstand in dem Fluiden-Austauschsystem wirksam wird. Dies bedeutet, daß die Bewegung noch mit geringerer Kraft ausgeführt werden kann als sie dem an sich schon verringerten Bewegungswiderstand entspricht. Beim Schließen einer Tür kann es notwendig sein, zum Einrasten bestimmter Verschlußmittel, wie sie z. B. bei Autotüren eingesetzt werden, eine bestimmte Mindestannäherungsgeschwindigkeit herbeizuführen, um die Schließmittel zum Verrasten zu bringen. Um diese Mindestannäherungsgeschwindigkeit an die Schließstellung ohne Rücksicht auf den auch bei fortgesetzter Bewegung des Feststellers noch bestehenden Bewegungswiderstand erreichen zu können, insbesondere auch dann, wenn die Tür in einer nur wenig geöffneten Stellung festgestellt war, von der aus nur geringer Anlaufweg zur Erreichung der Mindestannäherungsgeschwindigkeit zur Verfügung steht, kann die Verwendung eines Fluiden-By-Passes sehr hilfreich sein. Durch einen solchen Fluiden-By-Pass wird die Feststellwirkung des Feststellers nicht wesentlich eingeschränkt, weil dieser Fluiden-By-Pass auf einen Bereich beschränkt werden kann, in dem ein Feststellbedarf ohnehin nicht besteht.

Der Feststeller kann darüberhinaus mit einem elektrischen Schalter kombiniert sein, der beispielsweise für die Ein- und Ausschaltung einer Lichtquelle eines Raums bestimmt und geeignet ist, der durch eine mit dem Feststeller versehene Tür verschlossen werden soll. Dies bringt den Vorteil, daß der Schalter in Baueinheit mit dem Feststeller montiert werden kann. Die Anbringung an dem Feststeller in der Fertigungsstätte für den Feststeller ist mit den dort verfügbaren Montageeinrichtungen äußerst einfach und kostengünstig. Andererseits entfällt die Notwendigkeit des Einbaus des Schalters an der mit dem Feststeller auszurüstenden Konstruktion, d. h. es entfällt ein Arbeitsschritt in einer Fertigungsstufe, in der es sehr viel schwieriger ist, für den Einbau eines Lichtschalters geeignete mechanische Hilfsmittel bereitzustellen.

Der relative Bewegungsbereich kann an mindestens einem Ende durch elastische Anschlagmittel begrenzt sein. Für den Fall einer Autotür ist insbesondere ein elastischer Endanschlag für die Begrenzung der Öffnung vorgesehen, da bei der Annäherung an die Schließstellung ohnehin eine Dämpfwirkung von den Schließmitteln zu erwarten ist.

Das Fluid kann grundsätzlich Flüssigkeit oder Gas sein. Wenn Flüssigkeit als Arbeitsmittel verwendet wird, so muß man darauf achten, daß der innerhalb der Arbeitskammern insgesamt verfügbare Raum durch die mehr oder minder große Eintauchlänge einer Kolbenstange verändert werden kann und daß man dieser Veränderung Rechnung tragen muß. Man kann grundsätzlich durch geringen Kolbenstangenquerschnitt die Volumenveränderungen in Abhängigkeit von der Kolbenstangen-Eintauchlänge in den Zylinder gering halten, u. U. sogar so gering, daß man mit einer geringfügigen Unterfüllung der Arbeitskammern auskommt, wobei man dann allerdings ein gewisses Feststellspiel in der jeweils gewählten Stellung in Kauf nehmen muß. Man kann aber auch die Kolbenstangeneinheit über beide Enden des Trennkolbens hinaus fortsetzen und die Kolbenstange dann beidseits des Trennkolbens durch je eine Durchführung dichtend hindurchführen. Auf diese Weise ist das in den Arbeitskammern zur Verfügung stehende Volumen unabhängig von der Kolbenstangenstellung konstant. Es bedarf dann allenfalls noch gewisser Ausgleichsmittel, um Temperaturänderung und etwaige Leckverluste auszugleichen. Solche Ausgleichsmittel können etwa dadurch gebildet werden, daß eine der Arbeitskammern durch eine Abschlußwand begrenzt wird, welche durch eine harte Federung abgestützt ist.

Eine Doppelkolbenstange mit zwei Durchführungen durch entsprechende Arbeitskammerendwände ist nicht zwingend erforderlich. Wenn man auf die Kolbenstangenfortsetzung durch eine zweite Arbeitskammerendwand hindurch verzichten will, so kann man den Volumenausgleich auch dadurch erhalten, daß man angrenzend an mindestens eine der Arbeitskammern ein elastisches Ausgleichsvolumen vorsieht, welches durch eine Trennwand von dem Flüssigkeitsvolumen getrennt sein kann. Dabei kann man zwischen der Trennwand und dem Trennkolben eine Ventilwand vorsehen, welche die jeweilige Arbeitskammer in zwei Teilarbeitskammern unterteilt und zwei gegensinnig gepolte Rückschlagventile enthält. Von diesen gegensinnig gepolten Rückschlagventilen wird dasjenige, welches von der trennkolbennäheren Teilarbeitskammer zu der trennkolbenferneren Teilarbeitskammer führt, durch eine relativ starke Vorspannung in Schließrichtung vorgespannt. Diese Vorspannung sorgt dann dafür, daß in Ruhestellung des Geräts eine große Anstoßkraft notwendig ist, um die Bewegung einzuleiten. Ist die Bewegung einmal eingeleitet, so ist nur noch die Kolbenstange volumenverdrängend wirksam. Durch das hart gefederte Rückschlagventil fließt dann nur noch ein sehr kleiner Volumenstrom. Dieser kleine Volumenstrom erfährt deshalb einen relativ kleinen Durchflußwiderstand in dem hart gespannten Rückschlagventil. Auf diese Weise kann der Bewegungswiderstand nach einmal eingeleiteter Bewegung immer noch hinreichend klein gehalten werden.

Unter einem anderen Aspekt betrachtet betrifft die Erfindung ein Fluidenaustauschsystem zwischen zwei Arbeitskammern, insbesondere eines als Zylinderkolbenaggregat ausgebildeten Feststellers, wobei insbesondere an Feststeller der vorstehend beschriebenen Art gedacht ist.

Dieses Fluidenaustauschsystem umfaßt eine innerhalb eines Fluidleitungskörpers untergebrachte Durchflußkammer, wobei diese Durchflußkammer durch einen in ihr beweglich angebrachten Abdichtkolben begrenzt ist, wobei weiter diese Durchflußkammer über einen Erstanschluß mit der einen Arbeitskammer verbindbar ist, wobei weiter ein ständig offener Zweitanschluß der Durchflußkammer zu der anderen Arbeitskammer führt, wobei weiter eine erstanschlußseitige Endfläche des Abdichtkolbens durch ein Abdichtkolben-Vorspannmittel in eine Schließstellung gegen den Erstanschluß vorgespannt ist, wobei weiter die erstanschlußseitige Endfläche einem durch den Erstanschluß auf sie einwirkenden Fluid in der Schließstellung einen kleineren Fluidbeaufschlagungsquerschnitt darbietet, und wobei die erstanschlußseitige Endfläche einem in der Durchflußkammer herrschenden Fluidendruck einen größeren Fluidbeaufschlagungsquerschnitt darbietet.

Ein solches Fluidenaustauschsystem ist wiederum aus der bereits weiter oben diskutierten US-PS 4 099 602 bekannt und zwar aus deren Figur 2. Bei dieser bekannten Ausführungsform sind innerhalb der Durchflußkammer des Fluidleitungskörpers zwei Abdichtkolben angeordnet. Zwischen diesen Abdichtkolben ist ein geschlossener Federraum ausgebildet. Dieser Federraum nimmt eine Schraubendruckfeder auf, welche die beiden Abdichtkolben voneinander abspreizt. Jeder der beiden Abdichtkolben trägt auf der federraumfernen Seite eine Kugel. Diese Kugel arbeitet mit jeweils einem Erstanschluß zusammen und bildet den kleineren Fluidbeaufschlagungsquerschnitt einer jeweiligen erstanschlußseitigen Endfläche. Jede Kugel arbeitet also mit einem Erstanschluß zusammen. Die beiden Abdichtkolben haben einen den Kugeldurchmesser übersteigenden Durchmesser, so daß an dem Abdichtkolben jeweils auch ein größerer Fluidbeaufschlagungsquerschnitt ausgebildet ist. Die beiden Erstanschlüsse jeder Durchflußkammer sind jeweils mit einer Arbeitskammer verbunden. Außerdem ist der Zweitanschluß jeder Durchflußkammer durch eine Leitung mit der jeweils anderen Arbeitskammer verbunden. Wenn der Druck in einer der beiden Arbeitskammern ansteigt, so liegt dieser erhöhte Druck einerseits über den Erstanschluß an dem zugehörigen kleinen Fluidbeaufschlagungsquerschnitt des dieser einen Durchflußkammer zugehörigen Abdichtkolbens an und außerdem über den Zweitanschluß der anderen Durchflußkammer an dem größeren Fluidbeaufschlagungsquerschnitt des zu dieser anderen Durchflußkammer zugehörigen anderen Abdichtkolbens. Der Überdruck in der einen Arbeitskammer kann also zwei zueinander parallele Strömungswege in Richtung auf die andere Arbeitskammer öffnen. Der resultierende Durchflußwiderstand durch diese beiden parallel geschalteten Strömungswege hängt von der Federkraft ab und außerdem von dem kleineren Fluidbeaufschlagungsquerschnitt des einen Abdichtkolbens und dem größeren Fluidbeaufschlagungsquerschnitt des anderen Abdichtkolbens. Bei zunehmendem Druck in der einen Arbeitskammer wird sich zunächst der Abdichtkolben der anderen Durchflußkammer von deren Erstanschluß abheben. Identische Verhältnisse treten auf, wenn der Druck in der anderen Arbeitskammer ansteigt.

Aus der DE-C-1 459 182 ist ein Feststeller in Form eines Zylinderkolbenaggregats bekannt. Dabei ist an der Kolbenstange des Zylinderaggregats der Fluidleitungskörper in Form einer Trennkolbeneinheit zwischen zwei Arbeitskammern des Zylinderkolbenaggregats angebracht. Bei Verschiebung der Kolbenstange gegenüber dem Zylinder des Zylinderkolbenaggregats tritt je nach Verschieberichtung in der einen oder anderen Arbeitskammer eine Druckerhöhung auf. In dem Fluidleitungskörper sind nun wieder zwei Durchflußkammern ausgebildet und jede dieser zwei Durchflußkammern nimmt einen Drosselkolben auf. Jede der Arbeitskammern ist durch einen Erstanschluß mit einer zugehörigen Durchflußkammer verbunden. Der jeweilige Erstanschluß ist durch den Drosselkolben verschließbar, so daß der Druck der jeweiligen Arbeitskammer über den Erstanschluß auf den kleineren Fluidbeaufschlagungsquerschnitt des jeweils zugehörigen Drosselkolbens einwirkt. Jeder Drosselkolben ist durch eine Schraubendruckfeder in Richtung auf den Erstanschluß der zugehörigen Durchflußkammer vorgespannt. Der Drosselkolben dichtet die Durchflußkammer nicht ab, sondern läßt eine eingeengte Verbindung zwischen der jeweiligen Durchflußkammer und einer Kolbenrückseite des jeweiligen Drosselkolbens frei. Wenn in einer der Arbeitskammern durch deren Verkleinerung ein Überdruck auftritt, so wird über den zugehörigen Erstanschluß dieser erhöhte Druck über den zugehörigen Erstanschluß auf den kleineren Fluidbeaufschlagungsquerscnitt des zugehörigen Drosselkolbens übertragen, so daß dieser Drosselkolben von dem Erstanschluß abhebt. Von da an wirkt das Fluid dieser Arbeitskammer auf einen wesentlich vergrößerten Fluidbeaufschlagungsquerschnitt des Drosselkolbens ein und zwar deshalb, weil zwischen der betreffenden Durchflußkammer und der anderen Arbeitskammer ein Druckabfall stattfindet. Das bedeutet, daß nach einmal erfolgter Öffnung des Erstanschlusses die Kolbenstange leichtgängig gegenüber dem Zylinder verschoben werden kann. Dies bedeutet weiter, daß im Falle einer Verwendung des Kolbenzylinderaggregats als Feststeller einer Tür die Tür nach einem einmal erfolgten Anstoß relativ leicht gegen die Wirkung des Feststellers verschoben werden kann.

Die Symmetrie der Trennkolbeneinheit sorgt für im wesentlichen symmetrische Verhältnisse, so daß das Feststellungsverhalten im wesentlichen das gleiche ist, gleichgültig in welche Richtung die Tür bewegt wird.

Der Erfindung liegt die Aufgabe zugrunde, aufbauend auf dem Konstruktionsprinzip nach der US-PS 4 099 602, ein Fluidenaustauschsystem zu erhalten, welches eine ähnliche Strömungscharakteristik liefert wie das Fluidenaustauschsystem nach der DE-C-1 459 182.

Zur Lösung dieser Aufgabe wird erfindungsgemäß vorgeschlagen, daß dem Zweitanschluß eine Druckabfallstrecke zugeordnet ist und daß eine von dem Erstanschluß zu dem Zweitanschluß hin gerichtet verlaufende Strömungsstrecke bei Durchströmung in dieser Richtung bypass-frei ist derart, daß bei einem vorbestimmten, auf den kleineren Fluidbeaufschlagungsquerschnitt einwirkenden Mindestdruck die erstanschlußseitige Endfläche von dem Erstanschluß abhebt und danach der größere Fluidbeaufschlagungsquerschnitt innerhalb der Durchflußkammer einem Druck ausgesetzt ist, welcher von der Strömungsrate durch die Durchflußkammer abhängig ist und den Erstanschluß bis zum Unterschreiten einer vorbestimmten Mindestdurchflußrate offen hält.

Nach einer bevorzugten Ausführungsform ist der Fluidleitungskörper innerhalb eines zylindrischen Hohlraums im wesentlichen konzentrisch zu diesem untergebracht, wobei der Erstanschluß in Richtung der Achse des zylindrischen Hohlraums verlaufend mit einer Erstanschlußkammer innerhalb des zylindrischen Hohlraums in Verbindung steht und diese Erstanschlußkammer wiederum mit der einen Arbeitskammer in Verbindung steht, oder diese bildet und wobei weiter der Zweitanschluß im wesentlichen radial zur Achse des zylindrischen Hohlraums angeordnet und mit einer Verbindungsleitung verbunden ist, welche - vorzugsweise ringzylindrisch zwischen dem Fluidleitungskörper und einer Innenumfangsfläche des zylindrischen Hohlraums verlaufend - zu der anderen Arbeitskammer führt. Dabei kann die Druckabfallstrecke von dem als Bohrung ausgestalteten Zweitanschluß selbst gebildet sein. Diese letztere Ausführungsform hat gegenüber der Ausführungsform nach der DE-C-1 459 182 den großen Vorteil, daß der Druckabfall an der Bohrung sehr genau durch entsprechende Kalibrierung dieser Bohrung festgelegt werden kann, so daß auch das Verhalten des Fluidenaustauschsystems entsprechend exakt mit vernünftigem Herstellungsaufwand eingestellt werden kann.

Der Erstanschluß und der Zweitanschluß können durch eine Ringdichtung voneinander getrennt sein, welche zwischen einer Außenumfangsfläche des Fluidleitungskörpers und einer Innenumfangsfläche des zylindrischen Hohlraums gebildet ist.

Um eine kompakte bauliche Ausgestaltung zu erhalten, wird empfohlen, daß der Fluidleitungskörper innerhalb einer Trennkolbeneinheit untergebracht ist, welche innerhalb eines Zylinderrohrs angeordnet ist.

Das Abdichtkolben-Vorspannmittel kann wenigstens zum Teil von einer Schraubendruckfeder gebildet sein.
Das Abdichtkolben-Vorspannmittel kann in einer abgeschlossenen Kammer untergebracht sein, welche innerhalb des Fluidleitungskörpers ausgebildet ist.
Die Vorspannung kann aber auch dadurch erhalten werden, daß das Abdichtkolben-Vorspannmittel wenigstens zum Teil von einem Fluidendruck in der anderen Arbeitskammer abgeleitet ist.

Das erfindungsgemäße Fluidenaustauschsystem ist im Gegensatz zu dem Fluidenaustauschsystem nach der DE-C-1 459 182 zur Durchströmung in entgegengesetzten Durchströmungsrichtungen geeignet, wobei in einer ersten Durchströmungsrichtung der Erstanschluß als Eingang und der Zweitanschluß als Ausgang wirkt und in einer zweiten Durchströmungsrichtung der Zweitanschluß als Eingang und der Erstanschluß als Ausgang des Fluidenaustauschsystems wirken.

Will man unterschiedliches Strömungsverhalten je nach Strömungsrichtung zwischen den beiden Arbeitskammern erzielen, so ist es möglich, für die Strömung von der ersten zur zweiten Arbeitskammer ein Fluidenaustauschsystem wie vorstehend beschrieben einzusetzen und für eine Fluidenströmung in der entgegengesetzten Richtung, d.h. von der anderen Arbeitskammer zu der einen Arbeitskammer, ein einfaches druckdifferenzabhängig öffnendes Rückschlagventil zu verwenden.

Das Rückschlagventil kann dabei als ein Schieberventil ausgebildet sein, wobei der Fluidleitungskörper als Ventilschieber innerhalb eines zylindrischen Hohlraums ausgebildet in eine Schließstellung vorgespannt und durch einen von dem Druck in der anderen Arbeitskammer abgeleiteten Druck in eine Öffnungsstellung überführbar ist.

Das erfindungsgemäße Fluidenaustauschsystem kann insbesondere innerhalb einer Trennkolbeneinheit eines Zylinderkolbenaggregats untergebracht sein und innerhalb des Zylinders zwei Arbeitskammern voneinander trennen. Es ist zu beachten, daß dabei bereits mit einem einzigen Fluidenaustauschsystem der vorstehend beschriebenen Art ein unterschiedliches Strömungsverhalten je nach Bewegungsrichtung zwischen Kolbenstange und Zylinderrohr erzielt wird, weil in der einen Bewegungsrichtung zunächst nur der kleinere Fluidbeaufschlagungsquerschnitt und erst nach Öffnung des Erstanschlusses auch der größere Fluidbeaufschlagungsquerschnitt beaufschlagt wird, während in der anderen Bewegungsrichtung sogleich der große Fluidbeaufschlagungsquerschnitt beaufschlagt wird.

Nach einer weiteren Ausführungsform eines Zylinderkolbenaggregats ist vorgesehen, daß innerhalb der Trennkolbeneinheit zwei Fluidenaustauschsysteme zwischen den beiden Arbeitskammern des Zylinderkolbenaggregats in Reihe geschaltet angeordnet sind, und zwar so, daß die Erstanschlüsse der beiden Fluidenaustauschsysteme miteinander verbunden sind, während die Zweitanschlüsse der beiden Fluidenaustauschsysteme je mit einer Arbeitskammer des Zylinderkolbenaggregats verbunden sind. Bei dieser Gestaltung läßt sich bei entsprechender Bemessung das Durchflußverhalten richtungsabhängig beliebig einstellen.

Die Ausführungsform mit zwei in Reihe geschalteten Fluidenaustauschsystemen wird bevorzugt bei Zylinderkolbenaggregaten angewandt, bei denen die Trennkolbeneinheit innerhalb eines Zylinderrohrhohlraums untergebracht ist, welcher an seinen beiden Enden mit einer Durchführungs- und Dichtungseinheit abgeschlossen ist, wobei eine mit der Trennkolbeneinheit verbundene Kolbenstange durch die eine der Führungs- und Dichtungseinheiten dichtend hindurchgeführt ist und ein mit der Trennkolbeneinheit verbundener Kolbenstangenfortsatz durch die andere der Führungs- und Dichtungseinheiten hindurchgeführt ist. Bei einer solchen Ausführungsform lassen sich völlig symmetrische Betriebsverhältnisse in beiden Bewegungsrichtungen einstellen.

Bei einer anderen Ausführungsform eines Zylinderkolbenaggregats ist vorgesehen, daß die Trennkolbeneinheit innerhalb eines Zylinderrohrhohlraums untergebracht ist, welcher an einem Ende über seinen gesamten Querschnitt abgeschlossen ist und nur an seinem anderen Ende eine Führungs- und Dichtungseinheit aufweist, wobei eine Kolbenstange mit der Trennkolbeneinheit verbunden und durch die Führungs- und Dichtungseinheit hindurchgeführt ist und wobei Maßnahmen zur Kompensation der Veränderung des Verdrängungsvolumens der Kolbenstange innerhalb des Zylinderrohrhohlraums bei Verschiebung der Kolbenstange gegenüber dem Zylinderrohrhohlraum getroffen sind, welche eine Ausschubkraft auf die Kolbenstange erzeugen. Auch bei dieser Ausführungsform kann wieder ein einziges Fluidenaustauschsystem oder eine Reihenschaltung von Fluidenaustauschsystemen zum Einsatz kommen. Als Maßnahme zur Kompensation der Veränderung des Verdrängungsvolumens der Kolbenstange innerhalb des Zylinderrohrhohlraums bei Verschiebung der Kolbenstange gegenüber dem Zylinderrohrhohlraum kann dabei vorgesehen sein, daß die Fluidfüllung insgesamt von einem komprimierbaren Gas gebildet ist. Es kann weiter vorgesehen sein, daß der Zylinderrohrhohlraum teilweise mit Druckgas gefüllt ist, wobei in diesem Fall zwischen dem Druckgas und der Flüssigkeit ein Schwimmkolben oder eine Trenn-Membran vorgesehen sein kann. Schließlich ist es auch denkbar, daß an einem mit Flüssigkeit gefüllten Teilbereich des zylinderrohrhohlraums ein Schwimmkolben angrenzt, der durch Federdruck gegen die Flüssigkeit einwirkt.

Bei einem Zylinderkolbenaggregat mit nur einseitiger Kolbenstangendurchführung herrscht im Gleichgewichtszustand in der kolbenstangenseitigen Arbeitskammer des Zylinderrohrhohlraums ein größerer Druck und in der kolbenstangenfernen Arbeitskammer ein kleinerer Druck, gleichgültig ob der Zylinderhohlraum mit Druckgas gefüllt ist oder mit einer Flüssigkeit, die ihrerseits durch Gasdruck oder Federdruck beaufschlagt ist. Will man zum Ein- und Ausschieben der Kolbenstange annähernd gleiche Kräfte einsetzen, wie dies z.B. im Fall der Anwendung des Zylinderkolbenaggregats als Feststeller von Autotüren häufig erwünscht ist, so hat man zu berücksichtigen, daß dann beim Schließen der Tür eine Ausschubkraft auf die Kolbenstange wirkt, die von dem Gasdruck oder dem Flüssigkeitsdruck herkommt. Dies bedeutet, daß zum Einschieben etwa entsprechend dem Schließen der Tür eine größere Kraft ausgeübt werden muß als zum Ausschieben entsprechend dem Öffnen der Tür. Um gleichwohl wenigstens annähernd ausgeglichene Bewegungsverhältnisse beim Öffnen und Schließen erreichen zu können, kann man bei Vorhandensein nur eines einzigen Fluidenaustauschsystems innerhalb der Trennkolbeneinheit dessen Erstanschluß mit einer kolbenstangenseitigen Arbeitskammer des Zylinderrohrhohlraums verbinden - diese kolbenstangenseitige Arbeitskammer im folgenden stangenkammer genannt - und andererseits den Zweitanschluß dieses Fluidenaustauschsystems mit einer kolbenstangenfernen Arbeitskammer des Zylinderkolbenaggregats zu verbinden - im folgenden genannt Bodenkammer.

Wenn die Bodenkammer und die stangenkammer beide mit Flüssigkeit gefüllt sind, an eine dieser Kammern aber, beispielsweise an die Bodenkammer, eine elastische Gasfüllung über einen Schwimmkolben angrenzt, so wird dadurch das Bewegungsverhalten der Kolbenstange beeinflußt und zwar so, daß die Kolbenstange in Richtung auf den Schwimmkolben elastisch ausweichen kann. Will man dies vermeiden, so kann man die Bodenkammer - unter der Voraussetzung, daß sie an den Schwimmkolben anstößt - in eine kolbenstangennahe Teilbodenkammer und eine kolbenstangenferne Teilbodenkammer unterteilen und in der stationären Trennwand ein weiteres Fluidenaustauschsystem der vorstehend beschriebenen Art einbauen und zwar so, daß dessen Erstanschluß mit der kolbenstangennahen Teilbodenkammer in Verbindung steht.

Ist ein Zylinderkolbenaggregat als Hubhilfe für ein Konstruktionsteil, beispielsweise einen Kofferraumdeckel eines Kraftfahrzeugs, vorgesehen, so bedient man sich bevorzugtermaßen einer Ausführungsform mit nur einseitiger Durchführung der Kolbenstange an einem Zylinderrohrende und sieht einen Kolbenhohlkörper als Teil der Trennkolbeneinheit vor, welcher gegen eine Innenumfangswand des Zylinderrohrhohlraums dichtend anliegt, weiter bringt man dann innerhalb dieses Kolbenhohlkörpers den Fluidleitungskörper des Fluidenaustauschsystem unter und zwar so, daß der Erstanschluß der Durchflußkammer mit einer kolbenstangenseitigen Arbeitskammer, genannt Stangenkammer, des Zylinderrohrhohlraums in Verbindung steht und daß der Fluidleitungskörper als Ventilschieber mit dem Kolbenhohlkörper zusammenwirkt unter Bildung eines Rückschlagventils, welches von einer kolbenstangenfernen Arbeitskammer des Zylinderrohrhohlraums, genannt Bodenkammer, zur Stangenkammer führt.

Nach einem weiteren Aspekt betrifft die Erfindung eine Konstruktionsbaugruppe, umfassend eine Grundkonstruktion und ein bewegliches Konstruktionselement, welches gegen Schwerkraftwirkung zwischen einer unteren Endstellung und einer oberen Endstellung relativ zur Grundkonstruktion durch Führungsmittel geführt und verstellbar ist, wobei zur erleichterten Überführung des beweglichen Konstruktionselements zwischen der unteren Endstellung und der oberen Endstellung und zur Feststellung des beweglichen Konstruktionselements in Zwischenstellungen mindestens ein mit Druckfluid gefülltes Zylinderkolbenaggregat vorgesehen ist, wobei weiter dieses Zylinderkolbenaggregat ausgeführt ist mit einem Zylinderrohr, einem innerhalb dieses Zylinderrohrs ausgebildeten Zylinderrohrhohlraum, einer Führungs- und Dichtungseinheit am einen Ende des Zylinderrohrhohlraums, einem dichtenden Abschluß am anderen Ende des Zylinderrohrhohlraums, einer durch die Führungs- und Dichtungseinheit eingeführten Kolbenstange, einer innerhalb des Zylinderrohrhohlraums mit der Kolbenstange verbundenen Trennkolbeneinheit, einer Stangenkammer auf der Kolbenstangenseite der Trennkolbeneinheit, einer Bodenkammer auf der kolbenstangenfernen Seite der Trennkolbeneinheit und einer Druckfluidfüllung in der Stangenkammer und in der Bodenkammer, wobei weiter Maßnahmen zur Kompensation von Veränderungen des Verdrängungsvolumens der Kolbenstange innerhalb des Zylinderrohrhohlraums bei Verschiebungen der Kolbenstange gegenüber dem Zylinderrohrhohlraum getroffen sind, welche eine Ausschubkraft auf die Kolbenstange erzeugen, wobei weiter ein Fluidenaustauschsystem zwischen der Stangenkammer und der Bodenkammer vorgesehen ist, wobei weiter von den beiden Teilen Zylinderrohr und Kolbenstange der eine mit der Grundkonstruktion und der andere mit dem beweglichen Konstruktionselement verbunden ist und wobei das Gewicht des beweglichen Konstruktionselements, die Führungsmittel des beweglichen Konstruktionselements, die Angriffspunkte zwischen dem Zylinderkolbenaggregat, der Grundkonstruktion und dem beweglichen Konstruktionselement, der Querschnitt des Zylinderrohrhohlraums, der Querschnitt der Kolbenstange, die Fluidenfüllung in dem Zylinderrohrhohlraum und das Fluidenaustauschsystem derart ausgebildet und bemessen sind, daß die folgenden Bedingungen erfüllt sind:
a) Wenn das bewegliche Konstruktionselement sich in einer Zwischenstellung in Ruhelage befindet, sind die Bodenkammer und die Stangenkammer voneinander getrennt und das bewegliche Konstruktionselement ist durch ein in der Bodenkammer enthaltenes Bodenkammerfluid gegen Absinken und durch ein in der Stangenkammer enthaltenes Stangenkammerfluid gegen Steigen gesichert, indem
   aa) der an einem Vollquerschnitt der Trennkolbeneinheit anliegende Druck des Bodenkammerfluids auf die Kolbenstange eine Ausschubwirkung ausübt,
   ab) durch diese Ausschubwirkung in der Stangenkammer ein Druck des Stangenkammerfluids erzeugt wird, der an dem Differenzquerschnitt zwischen dem Vollquerschnitt der Trennkolbeneinheit und einem Stangenquerschnitt der Kolbenstange anliegend eine Einschubwirkung auf die Kolbenstange ausübt,
   ac) die vom Stangenkammerdruck erzeugte Einschubwirkung zusammen mit einer vom Gewicht des beweglichen Konstruktionselements ausgehenden zusätzlichen Einschubwirkung der Ausschubwirkung das Gleichgewicht hält, wobei der Druck in der Stangenkammer größer ist als der Druck in der Bodenkammer,
   ad) ein von der Stangenkammer zur Bodenkammer öffnendes Anheberückschlagventil-System dem Druck in der Stangenkammer mit einem kleineren Fluidbeaufschlagungsquerschnitt ausgesetzt und so eingestellt ist, daß es im Gleichgewichtszustand durch den Druck in der Stangenkammer nicht geöffnet werden kann,
   ae) ein von der Bodenkammer zur Stangenkammer öffnendes Senkrückschlagventil-System dem Druck in der Bodenkammer ausgesetzt und so eingestellt ist, daß es im Gleichgewichtszustand durch den Druck in der Bodenkammer nicht geöffnet werden kann;
b) eine geringfügige, kurzzeitige Fremdhubkrafteinwirkung auf das bewegliche Konstruktionselement führt zu einer Steigerung des auf den kleinen Fluidbeaufschlagungsquerschnitt des Anheberückschlagventil-Systems einwirkenden Drucks in der Stangenkammer, welche zu einer Öffnung des Anheberückschlagventil-Systems führt;
   ba) ist das Anheberückschlagventil-System einmal geöffnet, so findet eine Fluidenströmung von der Stangenkammer zur Bodenkammer statt;
   bb) die Strömung von der Stangenkammer zur Bodenkammer erfährt einen Druckabfall in einer zwischen dem Anheberückschlagventil-System und der Bodenkammer gelegenen Druckabfallstrecke;
   bc) infolge dieses Druckabfalls wird innerhalb des Anheberückschlagventil-Systems ein Zwischendruck eingestellt, welcher größer ist als der Druck in der Bodenkammer; dieser Zwischendruck wirkt auf einen größeren Fluidbeaufschlagungsquerschnitt des Anheberückschlagventil-Systems im Sinne einer Öffnung des Anheberückschlagventil-Systems ein; infolge der Fluidenströmung von der Stangenkammer durch das Anheberückschlagventil-System zur Bodenkammer sinkt der Druck in der Stangenkammer ab; das Gleichgewicht ist gestört und die Kolbenstange wird aus dem Zylinderrohr ausgeschoben;
   bd) die Ausschiebung der Kolbenstange aus dem Zylinderrohr bewirkt fortgesetzte Strömung von der Stangenkammer zur Bodenkammer; diese fortgesetzte Strömung sorgt weiterhin für die Aufrechterhaltung eines Zwischendrucks in dem Anheberückschlagventil-System; dieser Zwischendruck wirkt weiterhin auf den größeren Fluidbeaufschlagungsquerschnitt des Anheberückschlagventil-Systems und hält dieses offen, auch wenn die Fremdhubkrafteinwirkung aufhört; die Ausschubbewegung der Kolbenstange und damit die Anhebung des beweglichen Konstruktionselements werden also durch die Wirkung des Zylinderkolbenaggregats fortgesetzt, ohne daß die fortgesetzte Anlegung einer Fremdhubkraft notwendig ist;
   be) wenn während der fortgesetzten Ausschubbewegung der Kolbenstange kurzfristig eine Niederhaltekraft an das bewegliche Konstruktionselement angelegt wird, so sinkt die Strömungsrate durch das Anheberückschlagventil-System; der auf den größeren Fluidbeaufschlagungsquerschnitt des Anheberückschlagventil-Systems wirkende Zwischendruck sinkt ab; das Anheberückschlagventil-System wird wieder geschlossen; das bewegliche Konstruktionselement kommt zum Stillstand und bleibt stehen, auch wenn die Niederhaltekraft wieder aufhört;
c) wenn das bewegliche Konstruktionselement sich in einer Zwischenstellung in Ruhelage befindet, kann es durch eine kleine Dauersenkkraft in Richtung auf die untere Endstellung bewegt werden, indem
   ca) zunächst eine Vergrößerung des Drucks in der Bodenkammer eintritt, wobei eine geringfügige Vergrößerung des Drucks in der Bodenkammer zu einer Öffnung des Senkrückschlagventil-Systems führt,
   cb) demzufolge ein annähernder Druckausgleich zwischen der Bodenkammer und der Stangenkammer eintritt und
   cc) der nach Eintritt dieses annähernden Druckausgleichs zwischen Stangenkammer und Bodenkammer in den beiden Kammern herrschende Druck auf den Kolbenstangenquerschnitt einwirkend eine Stangenausschubkraft ergibt, welche die schwerkraftbedingte Kolbenstangeneinschubwirkung des beweglichen Konstruktionselements auf die Stange nur geringfügig übersteigt, so daß sie durch die Dauersenkkraft ggf. bis zum Erreichen der unteren Endstellung des beweglichen Konstruktionselements überwunden werden kann.

Die Konstruktionsbaugruppe kann dabei insbesondere als Grundkonstruktion eine Kraftfahrzeugkarosserie und als bewegliches Konstruktionselement eine Klappe, beispielsweise einen Kofferraumdeckel oder eine Heckklappe eines Kombifahrzeugs oder eine Motorhaube aufweisen.

Es wird dann erreicht, daß sich die Klappe leicht von Hand anheben läßt. Sie wird wenigstens in einem größeren Bereich ihres Schwenkweges durch das Zylinderkolbenaggregat selbsttätig angehoben. Sie kann in Zwischenstellungen arretiert werden, indem eine kurzfristige Niederhaltekraft auf die Klappe ausgeübt wird und bleibt dann in der gewählten Stellung stehen, auch wenn diese Niederhaltekraft wieder aufhört. Soll die Klappe dann weiter geöffnet werden, so genügt eine geringfügige kurzzeitige Fremdhubkrafteinwirkung auf die Klappe, um deren weitere selbsttätige Öffnung auszulösen, bis die Klappe durch einen Anschlag zwischen Klappe und Karosserie oder durch einen Anschlag innerhalb des Zylinderkolbenaggregats zum Stillstand kommt oder bis erneut eine Niederhaltekraft von Hand erzeugt wird. Soll die Klappe geschlossen werden, so genügt es, eine relativ kleine Dauersenkkraft auf die Klappe auszuüben, solange, bis eine gewünschte tiefere Stellung erreicht ist. Wenn nach Erreichen dieser tieferen Stellung der Klappe die Dauersenkkraft aufhört, so bleibt die Klappe in der erreichten neuen Zwischenstellung wieder stehen. Soll die Klappe vollständig geschlossen werden, so wird die Dauersenkkraft solange ausgeübt, bis die Klappe entweder geschlossen ist oder bis die Ausschubkraft auf die Stange nicht mehr ausreicht, um der Gewichtskraft der Klappe das Gleichgewicht zu halten und diese herunterfällt. Bevorzugt sieht man angrenzend an die Stellung vollständiger Schließung der Klappe einen kleinen Bewegungsbereich vor, in welchem die von dem Klappengewicht ausgeübte Einschubkraft die Ausschubwirkung des Zylinderkolbenaggregats übersteigt, so daß die Klappe leicht in das Schloß eingerastet werden kann oder nach Wunsch auch selbsttätig in das Schloß einfällt.

Die zum Auslösen der Aufwärtsbewegung aus einer Zwischenstellung der Klappe notwendige Fremdhubkraft, die zum Anhalten der Klappe in einer Zwischenstellung notwendige Niederhaltekraft und die zum Schließen der Klappe notwendige Dauersenkkraft werden vorzugsweise so eingestellt, daß sie auch von einer schwachen Person leicht aufgebracht werden können. Vorzugsweise sollten diese Kräfte kleiner sein als 100 N, höchstvorzugsweise kleiner als 50 N. Das Zylinderkolbenaggregat kann dabei im wesentlichen vollständig mit Gas gefüllt sein zusätzlich einer kleinen Menge flüssigen Schmiermittels.

Das Kolbenzylinderaggregat kann weiterhin teilweise mit Flüssigkeit gefüllt sein, wenn entweder an die Stangenkammer oder die Bodenkammer ein Druckgasvolumen angrenzt, ggf. durch einen Schwimmkolben oder eine bewegliche Membran von der jeweiligen Flüssigkeit getrennt. Weiterhin ist es möglich, daß entweder an die Bodenkammer oder die Stangenkammer ein Trennkolben angrenzt, welcher durch eine mechanische Federung eine Vorspannung der Flüssigkeit aufrecht erhält.

Die Konstruktionseinheit kann mit einer oder mehreren Zylinderkolbenaggregaten ausgeführt sein. Im Kraftfahrzeugwesen benutzt man in Verbindung mit Klappen häufig zwei Zylinderkolbenaggregate, jeweils eines an beiden Rändern der Klappe.

Die beiliegenden Figuren erläutern die Erfindung anhand von Ausführungsbeispielen; es stellen dar:
- Fig. 1: einen hydraulischen Feststeller mit Doppelkolbenstange, welche zu beiden Enden des Trennkolbens durch je eine Endwand der zugehörigen Arbeitskammer hindurchgeführt ist;
- Fig. 2: eine abgewandelte Ausführungsform, bei welcher zum Volumenausgleich des variierenden Kolbenstangenvolumens eine federnd abgestützte Endwand vorgesehen ist und wobei zur Federabstützung eine Schraubendruckfeder herangezogen ist;
- Fig. 3: eine nochmals abgewandelte Ausführungsform, welche weitgehend derjenigen nach Fig. 2 entspricht, wobei jedoch die Schraubendruckfeder durch ein komprimiertes Gasvolumen ersetzt ist;
- Fig. 4: eine weitere Ausführungsform eines hydraulischen Feststellers, in welcher der Trennkolben vereinfacht ist und eine Bodenventileinheit vorgesehen ist;
- Fig. 5: eine weitere Ausführungsform, die insbesondere für Einsatz an höhenverstellbaren Klappen von Kraftfahrzeugen bestimmt ist;
- Fig. 6: ein Kraftfahrzeug mit einer Heckklappe in geschlossenem Zustand unter Verwendung eines Feststellers gemäß Fig. 5, wobei die Klappe im Schließzustand in vollen Linien und im Öffnungszustand in gestrichelten Linien gezeigt ist und
- Fig. 7: ein Kraftfahrzeug gemäß Fig. 6 mit der Klappe in einer Zwischenstellung.

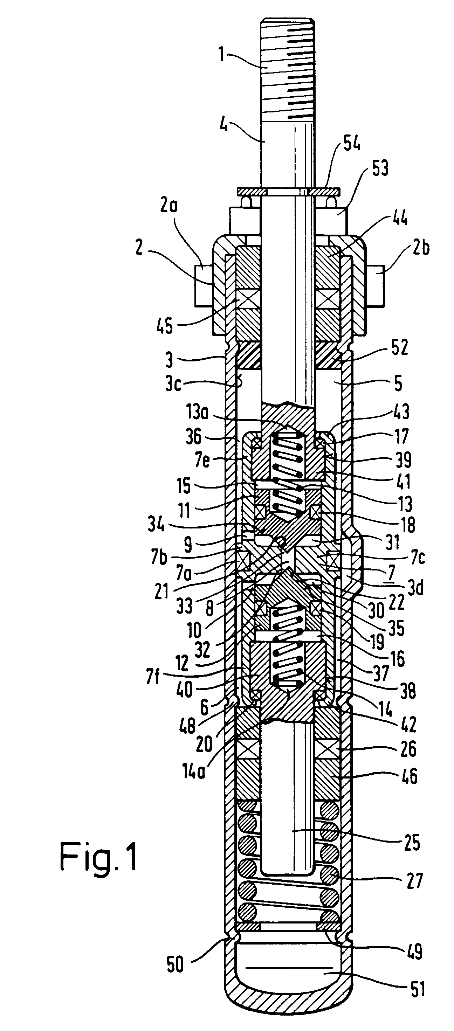

Zur Ausführungsform nach Fig. 1 gilt folgendes: Der Feststeller ist zwischen zwei, in ihrem Abstand veränderlichen Befestigungspunkten 1,2 eingespannt. Der Feststeller besteht aus einem Zylinder 3 und einer relativ zu diesem beweglichen Kolbenstange 4. Im Zylinder 3 werden zwei Arbeitskammern 5,6 durch einen Trennkolben 7 voneinander getrennt. Der Trennkolben 7 verfügt über Verbindungskanäle 8,9,10, welche das Strömen von Flüssigkeit von der Arbeitskammer 5 in die Arbeitskammer 6 zulassen. Diese werden von zwei Drosselkörpern 11,12 im Ruhezustand durch die Kraft von zwei Vorspannfedern 13,14 verschlossen. Die Drosselkörper-Aufnahmekammern 15,16 sind mit Luft oder Gas von Umgebungsdruck gefüllt und gegen die flüssigkeitsgefüllten Arbeitskammern 5,6 durch Dichtelemente 17,18,19,20 abgedichtet.

In den Drosselkörper-Aufnahmekammern 15,16 sind durch die Drosselkörper 11,12 Durchflußkammern 30,31 begrenzt. Die Verbindungskanäle 9,10 bilden je einen ersten Durchflußanschluß 9,10 zu den beiden Durchflußkammern 31,30, während der Verbindungskanal 8 je einen zweiten Durchflußanschluß 32,33 zu den beiden Durchflußkammern 30 bzw. 31 bildet. Die beiden zweiten Durchflußanschlüsse 33 und 32 sind im Ruhezustand durch kleine Druckbeaufschlagungsflächen 21, 22 der Drosselkörper 11,12 geschlossen. Innerhalb der Durchflußkammern 31,30 sind an den Drosselkörpern 11,12 große Druckbeaufschlagungsflächen 34,35 ausgebildet. Die Durchflußanschlüsse 9 und 10 stellen einen Durchflußwiderstand dar und münden in Ringräume 36,37 beidseits des Trennkolbens 7. Der Trennkolben 7 ist mit einer Trennkolbendichtung 7a versehen, welche sich im Bereich einer Verdickung 7b des Trennkolbens befindet und an einer Innenumfangsfläche 3c des Zylinders 3 anliegt.

An die Drosselkörper-Aufnahmekammern 15,16 schließen Verlängerungskammern 38,39 an, in welchen Verdickungen 40,41 der Kolbenstange 4 bzw. einer Kolbenstangenverlängerung 25 aufgenommen und befestigt sind. Die Drosselkörper-Aufnahmekammern 15,16 sind dabei durch Umbördelungen 42,43 unter Vermittlung der Dichtelemente 17-20 dicht abgeschlossen. Die Kolbenstange 4 ist durch das eine Ende 44 des Zylinders 3 vermittels einer Dichtung 45 dichtend hindurchgeführt, während die Kolbenstangenverlängerung 25 durch eine schwimmende Trennwand 46 unter Vermittlung einer Dichtung 26 dichtend hindurchgeführt ist. Die schwimmende Trennwand 46 ist gegen Bewegung nach aufwärts durch eine Eindrückung 48 des Zylinders 3 in ihrer Bewegung nach oben begrenzt und durch eine Schraubendruckfeder 27 nach oben vorgespannt, wobei sich die Schraubendruckfeder 27 unter Vermittlung einer Stützscheibe 49 an einer weiteren Eindrückung 50 des Zylinders 3 abstützt. Der Raum 51 unterhalb der schwimmenden Trennwand 46 ist beispielsweise mit Luft von Atmosphärendruck gefüllt.

An der Endwand 44 ist eine gummielastische Endabstützung 52 abgestützt. Der Befestigungspunkt 2 ist von zwei Zapfen 2a und 2b gebildet, die beispielsweise an der Karosserie eines Kraftfahrzeugs schwenkbar gelagert sein können. Der Befestigungspunkt 1 ist von einem Gewinde der Kolbenstange 4 gebildet, welche beispielsweise an der Tür eines Kraftfahrzeugs abgestützt sein kann. Es ist auch denkbar, den Befestigungspunkt 2 an das untere Ende des Zylinders 3 oder an beliebiger Stelle längs des Zylinders 3 anzubringen.

An dem oberen Ende des Zylinders 3 ist ein Schalter 53 angebracht, welcher mit einem Schaltelement 54 zusammenwirkt. Das Schaltelement 54 ist an der Kolbenstange 4 befestigt und wirkt auf den Stromkreis des Schalters 53 ein. Der Stromkreis kann beispielsweise Stromkreis der Innenraumbeleuchtung eines Fahrzeugs sein, so daß diese Innenraumbeleuchtung eingeschaltet wird, wenn die Tür des Fahrzeugs geöffnet und als Folge hiervon die Kolbenstange 4 nach oben aus dem Zylinder 3 ausgefahren wird. Wenn die Kolbenstange vollständig aus dem Zylinder 3 ausgefahren ist, so schlägt die Umbördelung 43 des Trennkolbens 7 gegen den gummielastischen Anschlag 52 und dämpft somit die Bewegung der Tür, bevor diese ihre am weitesten geöffnete Endstellung erreicht.

Man erkennt. daß der Trennkolben 7 von einem einstückigen Trennkolbenkörper gebildet ist, welcher eine Zwischenwand 7c und zwei Verlängerungen 7e und 7f aufweist. Die Schraubendruckfedern 13, 14 sind von Bohrungen 13a und 14a der Kolbenstange 4 und der Kolbenstangenverlängerung 25 aufgenommen. Die Schraubendruckfedern 13,14 sind vor dem Einbau wesentlich länger als in der Fig. 1 dargestellt und werden beim Einbau zusammengedrückt soweit, daß sie die jeweils gewünschte Vorspannkraft auf die Drosselkörper 11 und 12 ausüben.

Der Zylinder 3 ist mit einer By-Pass-Strecke 3d versehen, welche durch eine längliche Ausbuchtung des Zylinders 3 nach außen gebildet ist.

Der soweit beschriebene Feststeller arbeitet wie folgt: Es sei angenommen, daß der Feststeller mit der Karosserie eines Kraftfahrzeugs einerseits und einer Tür andererseits bei 2 bzw. 1 gelenkig verbunden ist. Es sei weiter angenommen, daß die Tür vollständig geschlossen ist und daß der in Fig. 1 gezeichnete Zustand des Feststellers der geschlossenen Tür entspricht. Wenn nun die Tür geöffnet wird, so bewegt sich die Dichtung 7a des Trennkolbens 7 zunächst im Bereich des By-Passes 3d, so daß die beiden Arbeitskammern 5 und 6 zunächst noch miteinander verbunden sind und damit der Feststeller unwirksam ist. Wenn dann im weiteren Verlauf der Türöffnungsbewegung die Dichtung 7a über das Ende des By-Passes 3d hinausfährt, so werden die beiden Arbeitskammern 5 und 6 voneinander zunächst einmal hydraulisch getrennt, und es bildet sich in der Arbeitskammer 5 ein hydraulischer Überdruck der dort eingeschlossenen Flüssigkeit. Dieser hydraulische Überdruck in der Arbeitskammer 5 liegt über den Ringspalt 36 und den ersten Durchflußanschluß 9 an der Durchflußkammer 31 an. Er wirkt deshalb auf die größere Druckbeaufschlagungsfläche 34 des Drosselkörpers 11 ein entgegen der Wirkung der Vorspannfeder 13.

Sobald der Überdruck in der Durchflußkammer 31 einen vorbestimmten Wert überschreitet, wird der Drosselkörper 11 gegen die Wirkung der Vorspannfeder 13 von dem zweiten Durchflußanschluß 33 abgehoben, welcher durch den Verbindungskanal 8 der Zwischenwand 7c gebildet ist. Dies bedeutet, daß nunmehr der Druck innerhalb der Durchflußkammer 31 über den Verbindungskanal 8 auch auf der kleineren Beaufschlagungsfläche 22 des unteren Drosselkörpers 12 anliegt entgegen der Wirkung der unteren Vorspannfeder 14. Der Druck, welcher ausreichend war, um durch Beaufschlagung der größeren Beaufschlagungsfläche 34 den oberen Drosselkörper 11 anzuheben, reicht aber zunächst noch nicht aus, um auch den unteren Drosselkörper 12 von dem Durchflußanschluß 32 der zugehörigen Durchflußkammer 30 abzuheben. Es ist vielmehr durch Krafteinwirkung auf die Tür und damit auf den Feststeller gemäß Fig. 1 eine weitere Druckerhöhung in der Arbeitskammer 5 notwendig, damit der Drosselkörper 12 von dem zugehörigen Durchflußanschluß 32 abgehoben werden kann. Die notwendige Drucksteigerung hängt dabei von der Größe der kleinen Druckbeaufschlagungsfläche 22 ab, welche dem Druck in dem Kanal 8 ausgesetzt ist. Sobald der Druck in dem Kanal 8 soweit angestiegen ist, daß der untere Drosselkörper 12 nach unten von dem zugehörigen Durchflußanschluß 32 abhebt, kann ein Durchfluß der Flüssigkeit von der Arbeitskammer 5 über den Durchflußanschluß 9, die Durchflußkammer 31, den Durchflußanschluß 33, den Kanal 8, den Durchflußanschluß 32, die Durchflußkammer 30, den Durchflußanschluß 10 und den Ringspalt 37 zu der zweiten Arbeitskammer 6 stattfinden. Dabei tritt in dem Durchflußanschluß 10 ein Druckabfall auf. Wegen dieses Druckabfalls bleibt in der Durchflußkammer 30 ein Überdruck erhalten. Dieser Überdruck wirkt auf die größere Druckbeaufschlagungsfläche 35 des Drosselkörpers 12 ein, so daß dieser Drosselkörper in Öffnungsstellung gegenüber dem Durchflußanschluß 32 gehalten wird, solange eine Relativbewegung der Kolbenstange 4 gegenüber dem Zylinder 3 stattfindet. Infolge der Druckeinwirkung auf die große Druckbeaufschlagungsfläche 35 des Drosselkörpers 12 genügt nunmehr ein relativ kleiner Überdruck in die Durchflußkammer 30, um den Drosselkörper in Abhebstellung gegenüber dem Durchflußanschluß 32 zu halten und damit einen Durchfluß von der Arbeitskammer 6 aufrechtzuerhalten. Dies bedeutet zusammengefaßt folgendes: Nachdem durch Krafteinwirkung auf die Tür mit verhältnismäßig großer Kraft der Drosselkörper 12 zunächst einmal von dem Durchflußanschluß 32 abgehoben ist und damit der Durchfluß von der Arbeitskammer 5 zu der Arbeitskammer 6 eingeleitet worden ist, genügt zur Weiterbewegung der Tür in Richtung auf die Vollöffnungssteilung der Tür eine verhältnismäßig kleine Kraft, um den Drosselkörper 12 in Offenstellung gegenüber dem Durchflußanschluß 32 zu halten, d. h. es genügt eine verhältnismäßig kleine Kraft, um die Tür in Richtung auf die Vollöffnungsstellung weiter zu bewegen, solange die Bewegungsgeschwindigkeit nur so groß gehalten wird, daß der Druckabfall an dem Durchflußanschluß 10 und der von diesem Druckabfall abhängige Druck in der Durchflußkammer 30 ausreicht, um den Drosselkörper 12 in Abhebestellung gegenüber dem Durchflußanschluß 32 zu halten.

Erst wenn die Bewegungsgeschwindigkeit
der Tür und damit der Kolbenstange 4 relativ zu dem Zylinder 3 zu Null wird oder so klein, daß der Druck in der Durchflußkammer 30 sich stark vermindert, kehrt der Drosselkörper 12 in die in Fig. 1 gezeichnete Stellung zurück. Dann ist die Tür in einer beliebigen Zwischenlage festgestellt und kann nur dadurch erneut in Bewegung gesetzt werden, daß eine große Anstoßkraft auf die Tür ausgeübt wird und damit auf die Kolbenstange 4, eine Anstoßkraft groß genug, um je nach Bewegungsrichtung den einen oder den anderen der beiden Drosselkörper 11,12 wieder von dem zugehörigen Durchflußanschluß 33 bzw. 32 abzuheben.

Die vollständig symmetrische Gestaltung des Kolbens 7 läßt ohne weiteres erkennen, daß die vorstehend für den Fall der Türöffnung beschriebene Arbeitsweise auch dann stattfindet, wenn die Tür geschlossen wird, wobei dann natürlich der Überdruck sich zuerst in der Arbeitskammer 6 aufbaut und zunächst den Drosselkörper 12 zum Abheben von dem Durchflußanschluß 32 bringt, so daß dann bei entsprechender Steigerung der auf die Tür wirkenden Anstoßkraft der Drosselkörper 11 von dem Durchflußanschluß 33 abhebt und fortan abgehoben bleibt, weil nach einmal erfolgtem Abheben der durch den Druckabfall am Durchflußanschluß 9 sich einstellende Druck in der Durchflußkammer 31 auf die größere Druckbeaufschlagungsfläche 34 des Drosselkörpers 11 einwirkt.

Man erkennt weiter aus der Fig. 1, daß dann, wenn sich die Tür wieder der Schließstellung annähert, die Dichtung 7a wieder in den Bereich des By-Passes 3d gelangt. Dann wirkt der weiteren Schließbewegung der Tür eine hydraulische Kraft nicht mehr entgegen. Die Tür kann dann auf dem Restweg bis zur vollständigen Schließung mit geringer von Hand auf sie ausgeübter Kraft so stark beschleunigt werden, daß ihr sich dann einstellender Bewegungsimpuls ausreicht, um die Tür entgegen dem elastischen Einschnappwiederstand des Türschlosses zum Einschnappen in das Türschloß zu bringen.

Da die Kolbenstange 4 und die Kolbenstangenverlängerung 25 gleichen Durchmesser besitzen, verändert sich die Summe der Volumina der beiden Arbeitskammern 5 und 6 bei einer Verschiebung der Kolbenstange 4 relativ zu dem Zylinder 3 nicht. Es müssen deshalb lediglich solchen Volumenänderungen der in den beiden Arbeitskammern 5 und 6 enthaltenen Flüssigkeitsvolumina berücksichtigt werden, die sich durch Temperaturausdehnung oder -kontraktion der Flüssigkeit ergeben können und/oder solche Veränderungen dieser Flüssigkeitsvolumina, die sich durch Leckverluste über die Dichtungen 45 und 26 hinweg ergeben können. Hierzu ist die bewegliche Trennwand 46 durch eine Feder 27 in Richtung auf die Eindrückung 48 vorgespannt.

Eine starke Schraubendruckfeder 27 ist auf solche Federkraft eingestellt, daß unter normalen Betriebsbedingungen diese Feder nicht wesentlich komprimiert wird, wenn die Kolbenstange 4 in den Zylinder 3 einfährt. Hierzu wird man dafür Sorge tragen, daß beim Einfahren der Kolbenstange 4 der zum Abheben des Drosselkörpers 11 von dem Durchflußanschluß 33 notwendige Druck in der Durchflußkammer 31 als Folge eines Drucks in der Arbeitskammer 6 einen Wert hat, welcher nicht ausreicht, um die Trennwand 46 gegen die Wirkung der Schraubendruckfeder 27 zu verschieben.

Es war bisher angenommen worden, daß die Druckbeaufschlagungsflächen 21 und 22 einander gleich sind und daß auch die Druckbeaufschlagungsflächen 34 und 35 einander gleich sind. Dies führt dazu, daß unabhängig von der Verschieberichtung der Kolbenstange 4 gegenüber dem Zylinder 3 die zum Einleiten der Bewegung notwendige Anstoßkraft und auch der einer Weiterbewegung entgegenwirkende Widerstand jeweils gleich sind. Es ist ohne weiteres einzusehen, daß man die kleinen Druckbeaufschlagungsflächen 21 und 22 voneinander verschieden machen kannund daß man auch die großen Druckbeaufschlagungsflächen 34 und 35 voneinander verschieden machen kann. Dann treten asymmetrische Kraftverhältnisse auf, die u. U. erwünscht sein können.

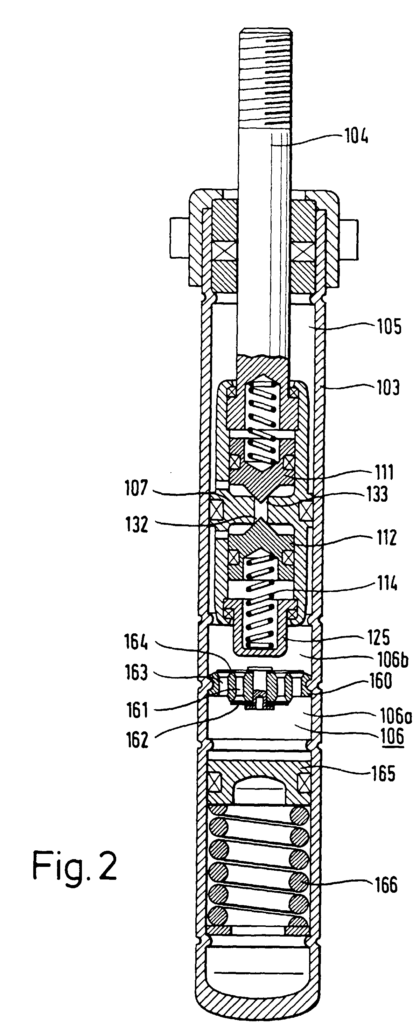

Die Ausführungsform der Fig. 2 unterscheidet sich von der Ausführungsform nach Fig. 1 dadurch, daß die Kolbenstangenverlängerung 25 nach Fig. 1 durch einen Stopfen 125 ersetzt worden ist, der genauso wie die Kolbenstangenverlängerung 25 von Fig. 1 in dem Kolbenkörper aufgenommen und abgedichtet ist und auch einen Teil der Vorspannfeder 114 aufnimmt. Als Arbeitsmedium in den beiden Arbeitskammern 105 und 106 sei wiederum eine Flüssigkeit vorgesehen. Die Arbeitskammer 106 ist durch eine Trennwand 160 unterteilt. Diese Trennwand 160 umfaßt eine erste Bohrungsgruppe 161 mit einer Schließfeder 162. Die Schließfeder 162 ist eine harte oder hart vorgespannte Schließfeder. Weiter umfaßt die Trennwand 160 eine Ventilbohrung 163 mit einer weichen oder weich vorgespannten Schließfeder 164. Wenn die Kolbenstange 104 etwa als Folge des Öffnens einer Tür aus dem Zylinder 103 herausgezogen wird, so wird das Gesamtvolumen in den Arbeitskammern 105 und 106 größer. Es strömt dann Flüssigkeit unter der Wirkung eines Trennkolbens 165 und einer Schraubendruckfeder 166 aus der Teilarbeitskammer 106a in die Teilarbeitskammer 106b nach, wobei diesem Nachströmen durch die Bohrung 163 nur geringer Widerstand entgegenwirkt. Die Kraft zur Einleitung der Kolbenstangenbewegung der Kolbenstange 104 aus dem Zylinder 103 heraus ist im wesentlichen unverändert gegenüber der Ausführungsform nach Fig. 1 unter der Voraussetzung gleicher Dimensionierung der Ventile. Insbesondere ist die Kraft zur Einleitung einer Auswärtsbewegung der Kolbenstange 104, also die Kraft zur Stabilisierung der Tür, im wesentlichen unverändert geblieben.

Wenn andererseits die Kolbenstange 104 einer nach unten gerichteten Kraft etwa zur Vorbereitung eines Schließens einer Tür ausgesetzt wird, so steigt zunächst der Druck in der Teilarbeitskammer 106b an. Dieser Druck veranlaßt nacheinander zunächst das Abheben des Drosselkörpers 112 von dem Durchflußanschluß 132. Wenn der Druck dann in der Teilarbeitskammer 106b weiter ansteigt, so wird auch der Drosselkörper 111 von dem Durchflußanschluß 133 abgehoben. Dieses Abheben tritt ein, bevor die starke Ventilfeder 162 von der Ventilbohrung 161 abhebt. Dies bedeutet, daß die Kraft, die notwendig ist, um den Drosselkörper 112 von dem Durchflußanschluß 132 abzuheben, auch wieder die gleiche ist wie bei der Ausführungsform nach Fig. 1, so daß die Stabilisierung der Tür auch in Schließrichtung unverändert gut ist. Wenn nun die Kolbenstange 104 in den Zylinder 3 einfährt, so muß die Schließkraft der Ventilfeder 162 überwunden werden, da die Kolbenstange 104 zunehmend Volumen innerhalb des Zylinders verdrängt. Weiterhin muß die Endwand 165 gegen die Wirkung der Schraubendruckfeder 166 nach unten verschoben werden. Durch die Notwendigkeit, die Ventilfeder 162 zu öffnen und die Endwand 165 nach unten zu schieben, ergibt sich ein zusätzlicher Einschubwiderstand auf die Kolbenstange 104. Da aber nun diese Kolbenstange 104 einen gegenüber dem Gesamtquerschnitt des Trennkolbens 107 verhältnismäßig kleinen Querschnitt besitzt, ist die Volumenverdrängung durch das Ventil 161,162 pro Längeneinheit der Verschiebung der Kolbenstange 104 verhältnismäßig gering, und ebenso ist der Verschiebeweg der Endwand 165 pro Längeneinheit der Verschiebung der Kolbenstange 104 verhältnismäßig gering. Der zusätzliche Bewegungswiderstand kann durch geringe Querschnittsbemessung der Kolbenstange 104 folglich so reduziert werden, daß er die Wirkungsweise des Feststellers gemäß Fig. 2 gegenüber der Wirkungsweise des Feststellers nach Fig. 1 nur unwesentlich verändert.

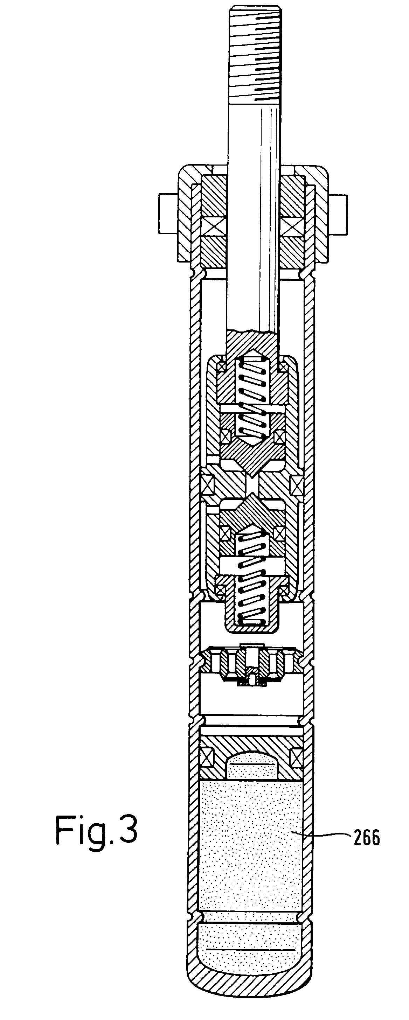

Die Ausführungsform nach Fig. 3 unterscheidet sich von derjenigen nach Fig. 2 nur dadurch, daß die Schraubendruckfeder 166 durch ein Druckgasvolumen 266 ersetzt worden ist. Der Vorteil dieser Ausführungsform ist darin zu sehen, daß die Federkraft des Druckgasvolumens durch entsprechende Befüllung leicht verändert werden kann.

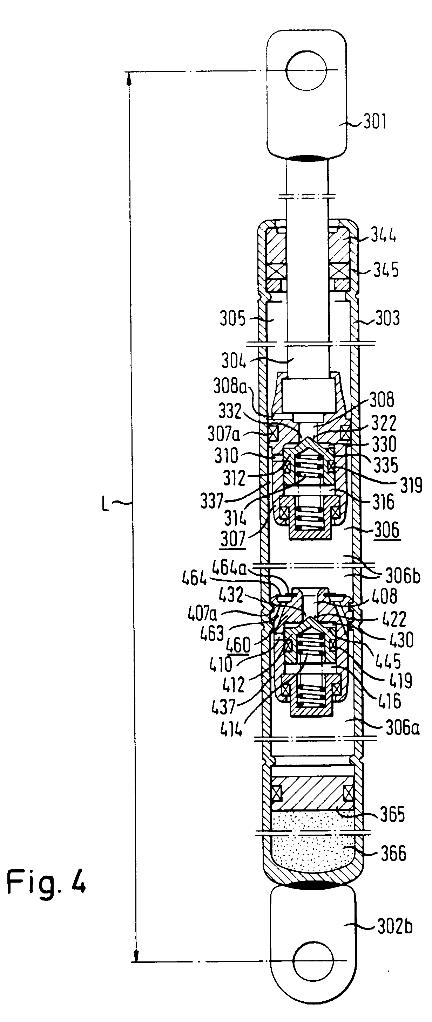

In Fig. 4 ist eine weitere Ausführungsform dargestellt, wobei analoge Teile mit gleichen Bezugszeichen versehen sind wie in Fig. 1,2 und 3, jedoch vermehrt um 300 bzw. 200 bzw. 100.

In den Zylinder 303 ist von dem oberen Ende her durch die Endwand 344 und die Dichtung 345 eine Kolbenstange 304 verschiebbar eingeführt, welche an ihrem oberen Ende ein Gelenkauge 301 trägt. Innerhalb des Zylinders 303 sind die beiden Arbeitskammern 305 und 306 ausgebildet, die zusammen einen Zylinderrohrhohlraum 305,306 ergeben. Die untere Arbeitskammer 306 ist durch die Trennwandeinheit 460 in zwei Teilarbeitskammern 306a und 306b unterteilt. Die Arbeitskammer 305 ist von der oberen Teilarbeitskammer 306b durch die Trennkolbeneinheit 307 getrennt. Die Trennkolbeneinheit 307 ist so ausgebildet wie die untere Hälfte der Trennkolbeneinheit 7 von Figur 1. Die Arbeitskammer 305, die beiden Teilarbeitskammern 306b und 306a sind mit Flüssigkeit gefüllt. Die untere Teilarbeitskammer 306a grenzt über die schwimmende Trennwand 365 an ein Druckgasvolumen 366 an.

In der Trennkolbeneinheit 307 ist ein Abdichtkolben 312 untergebracht, welcher dem Drosselkörper 12 der Figur 1 entspricht. Dieser Abdichtkolben 312 ist durch eine Dichtung 319 gegenüber der Innenumfangsfläche eines Raums 316 abgedichtet. Oberhalb des Abdichtkolbens 312 ist eine Durchflußkammer 330 definiert. Diese Durchflußkammer 330 weist einen Erstanschluß 332 entsprechend dem Durchflußanschluß 32 der Figur 1 auf. Dieser Erstanschluß 332 schließt über eine Axialbohrung 308 und eine Radialbohrung 308a im wesentlichen ungedrosselt an die obere Arbeitskammer 305 an. Ein Zweitanschluß 310 entsprechend dem Durchflußanschluß 10 der Figur 1 verbindet die Durchflußkammer 330 mit der Teilarbeitskammer 306b. Es ist zu beachten, daß der Zweitanschluß 310 in jeder Stellung des Abdichtkolbens 312 innerhalb des Raums 316 oberhalb der Dichtung 319 liegt, so daß die Durchflußkammer 330 ständig mit der Teilarbeitskammer 306b in Verbindung steht, wobei der Querschnitt des Zweitanschlusses 310 eng bemessen ist und eine Drosselstelle bildet, auf deren Bedeutung noch eingegangen wird.

In der in der Figur 4 gezeigten Stellung ist der Abdichtkolben 312 durch die Schraubendruckfeder 314 dichtend gegen den Erstanschluß 332 angelegt, so daß die Durchflußkammer 330 von der oberen Arbeitskammer 305 getrennt ist. Zu beachten ist weiter, daß in dem Zustand gemäß Figur 4 die Flüssigkeitsfüllung der oberen Arbeitskammer 305 über die Bohrungen 308 und 308a an einem kleinen Fluidbeaufschlagungsquerschnitt 322 des Abdichtkolbens 312 anliegt und daß ein größerer Fluidbeaufschlagungsquerschnitt 335 dem Druck innerhalb der Durchflußkammer 330 ausgesetzt ist. Die Trennwandeinheit 460 entspricht in ihrer grundsätzlichen Wirkung der Trennwand 160 der Figur 2, ist aber nun in Abweichung von der Konstruktion der Trennwand 160 nach Figur 2 ähnlich aufgebaut wie die Trennkolbeneinheit 307. Die Trennwandeinheit 460 ist durch Verformungen des Zylinders 303 in dem Zylinder axial festgelegt und gegenüber diesem abgedichtet.

Analoge Teile der Trennwandeinheit 460 sind mit den gleichen Bezugszeichen bezeichnet wie die entsprechenden Teile der Trennkolbeneinheit 307, jedoch weiter vermehrt um die Zahl 100.

Darüber hinaus ist an der Trennwandeinheit 460 ein von der Teilarbeitskammer 306a zur Teilarbeitskammer 306b hin öffnendes Rückschlagventil ausgebildet. Zu diesem Rückschlagventil gehören Bohrungen 463. Diese Bohrungen sind durch eine Ventilplatte 464 abgedeckt, welche ihrerseits durch eine Tellerfeder 464a überlagert ist, so daß die Ventilplatte 464 mit einer geringen Vorspannung in Schließstellung gehalten ist.

Die Arbeitsweise ist nun folgende: In Figur 4 ist die Kolbenstange 304 gegenüber dem Zylinder 303 festgestellt. Wenn die Gesamtlänge der Zylinderkolbeneinheit 303,304 verlängert werden soll, so ist hierzu eine Zugkraft an das Gelenkauge 301 und das Gelenkauge 302b anzulegen. Dann steigt der Druck in der oberen Arbeitskammer 305 an. Dieser angestiegene Druck liegt nun über die Bohrungen 308 und 308a an dem kleinen Fluidbeaufschlagungsquerschnitt 322 an. Wegen der Kleinheit des Fluidbeaufschlagungsquerschnitts 322 ist eine verhältnismäßig große Drucksteigerung in der Arbeitskammer 305, d.h. eine verhältnismäßig große Zugkraft an dem Gelenkauge 301 erforderlich, um den Abdichtkolben 312 zum Abheben vom Erstanschluß 332 zu bringen. Durch die Konstruktion und Vorspannung der Schraubendruckfeder 314 ist derjenige Druck bestimmt, der in der Arbeitskammer 305 durch Zugkraft an dem Gelenkauge 301 aufgebaut werden muß, um den Abdichtkolben 312 zum Abheben von dem Erstanschluß 332 zu bringen. Es muß also eine verhältnismäßig große "Losbrechkraft" an dem Gelenkauge 301 angesetzt werden, um eine Auszugbewegung der Kolbenstange 304 einzuleiten. Wenn der Abdichtkolben 312 einmal von dem Erstanschluß 332 abgehoben hat, dann findet eine Flüssigkeitsströmung von der Arbeitskammer 305 über die Bohrungen 308a und 308, den Erstanschluß 332, die Durchflußkammer 330, den Zweitanschluß 310 und den Ringkanal 337 in Richtung auf die obere Teilarbeitskammer 306b statt. Es wurde früher schon darauf hingewiesen, daß die den Zweitanschluß 310 bildende Bohrung als eine Drossel ausgebildet ist. Wenn nun Flüssigkeit von der oberen Arbeitskammer 305 zu der oberen Teilarbeitskammer 306b strömt, so findet an der drosselnden Bohrung 310 ein Druckabfall statt. Es stellt sich dann in der Durchflußkammer 330 ein Zwischendruck ein, welcher zwar kleiner ist als der durch die Zugwirkung aufgebaute Druck in der oberen Arbeitskammer 305, aber immer noch erheblich größer als der Druck in der Teilarbeitskammer 306b und groß genug, um die Federkraft der Feder 314 und einen etwaigen Druck in der Kammer 316 zu überwinden. Dieser Zwischendruck in der Durchflußkammer 330 wirkt nun auf den großen Fluidbeaufschlagungsquerschnitt 335 des Abdichtkolbens 312 ein. Insgesamt liegt deshalb erhöhter Druck nunmehr an der gesamten oberen Fläche des Abdichtkolbens 312 an, welche durch die Summe des kleinen Fluidbeaufschlagungsquerschnitts 322 und des großen Fluidbeaufschlagungsquerschnitts 335 gebildet ist. Damit wird der Abdichtkolben 312 nunmehr in Abhebestellung von dem Erstanschluß 332 gehalten, auch wenn der Flüssigkeitsdruck in der oberen Arbeitskammer 305 wieder absinkt. Dies bedeutet, daß - nachdem der Erstanschluß 332 einmal geöffnet worden ist - eine verhältnismäßig geringe Zugkraft auf das Gelenkauge 301 ausreicht, um die Kolbenstange 304 im Sinne einer Verlängerung der Gesamtlänge L weiter auszuziehen. Angewandt auf den Fall einer Kraftfahrzeugtür bedeutet dies wieder, daß nach einer Anstoßkraft, welche ausgereicht hat, um den Abdichtkolben 312 von dem Erstanschluß 332 abzuheben, eine verhältnismäßig geringe Zugkraft ausreicht, um die Tür weiter zu öffnen (hierbei wird vorausgesetzt, daß eine Öffnung der Tür einer Verlängerung der Länge L entspricht und ein Schließen der Tür einer Verkürzung der Länge L entspricht). Man kann also nach kurzfristiger Ausübung einer öffnenden Anstoßkraft auf die Kraftfahrzeugtür diese mit geringer Kraftanstrengung weiteröffnen.

Wenn man sich einer gewünschten neuen Öffnungsstellung der Tür nähert, so wird die von Hand durchgeführte Öffnungsbewegung der Tür bis auf die Geschwindigkeit Null verlangsamt. Entsprechend nimmt die Durchflußrate von Flüssigkeit aus der Arbeitskammer 305 in die Teilarbeitskammer 306b ab. Dann nimmt auch der Druckabfall in dem Zweitanschluß 310 ab und der Druck in der Durchflußkammer 330 nähert sich mehr und mehr dem Druck in der Teilarbeitskammer 306b an. Bei einem durch Konstruktion und Vorspannung der Schraubendruckfeder 314 sowie durch die Bemessung des kleinen Fluidbeaufschlagungsquerschnitts 322 und des großen Fluidbeaufschlagungsquerschnitts 335 bestimmten Zwischendruck reicht dieser nicht mehr aus, um den Abdichtkolben von dem Erstanschluß 332 abgehoben zu halten. Der Erstanschluß 332 wird wieder geschlossen. Die Kolbenstange 304 ist somit in Ausschubrichtung gegen den Zylinder 303 erneut festgestellt, bis wieder eine Anstoßkraft wirksam wird, um die Tür gewünschtenfalls noch weiter zu öffnen.

Wenn bei der vorstehend beschriebenen Auszugsbewegung der Kolbenstange 304 gegen den Zylinder 303 die Restkolbenstangenlänge innerhalb des Zylinders 303 kleiner wird, so vergrößert sich das Volumen, das sich aus der Summe der Arbeitskammer 305 und der oberen Teilarbeitskammer 306b zusammensetzt. Es würde also bei Fehlen zusätzlicher Maßnahmen in den beiden Kammern 305 und 306b die vor Beginn der Auszugsbewegung der Kolbenstange 304 enthaltene Flüssigkeit nicht mehr ausreichen, um die beiden Kammern, Arbeitskammer 305 und Teilarbeitskammer 306b vollständig zu füllen. Die Kolbenstange hätte dann ein Bewegungsspiel. Dies wird durch die vorstehend beschriebene Gestaltung der Trennwandeinheit 460 verhindert. Wenn nämlich in der oberen Teilarbeitskammer 306b eine Volumenvergrößerung infolge des Ausfahrens der Kolbenstange 304 eintritt, so reduziert sich auch der in der Teilarbeitskammer 306b herrschende Druck. Dann kann der in der unteren Teilarbeitskammer 306a herrschende Druck das Rückschlagventil 464 entsprechend dessen geringfügiger Vorspannung leicht öffnen und es kann Flüssigkeit von der unteren Teilarbeitskammer 306a in die obere Teilarbeitskammer 306b nachströmen, wobei sich die schwimmende Wand 365 unter dem Druck des Gasvolumens 366 nach oben bewegt.

Im Vorstehenden wurde darauf hingewiesen, daß die Kolbenstange 304 ausgehend von einem Stillstand nur mit einer relativ großen Anstoßkraft in Bewegung gesetzt werden kann. Dies ist wünschenswert, weil dann - angewandt beispielsweise auf den Fall einer Kraftfahrzeugtür - diese durch einen Windstoß oder durch ein unbeabsichtigtes Anstoßen des Fahrers nicht ohne weiteres geöffnet werden kann. Im folgenden wird nun gezeigt, daß auch eine unbeabsichtigte Verkürzung der Gesamtlänge L durch Einschieben der Kolbenstange 304 nicht ohne weiteres eingeleitet werden kann. Beim Einschieben der Kolbenstange 304 in den Zylinder 303 ist das Rückschlagventil 464 durch den in der Arbeitskammer 306b herrschenden Druck in Schließrichtung beaufschlagt und läßt keine Flüssigkeit von der Teilarbeitskammer 306b in die Teilarbeitskammer 306a durch. Ein Einschieben der Kolbenstange 304 führt nun zunächst zu einer Vergrößerung des Drucks in der oberen Teilarbeitskammer 306b. Bei Beginn des Einschiebens ist die obere Teilarbeitskammer 306b von der oberen Arbeitskammer 305 getrennt, weil der Abdichtkolben 312 dem Ruhezustand entsprechend abdichtend an dem Erstanschluß 332 anliegt, also keine Flüssigkeit von 306b nach 305 übertreten kann. Druckerhöhung in der Teilarbeitskammer 306b bedeutet aber nun, daß der größere Fluidbeaufschlagungsquerschnitt 335 über die Bohrung 310 beaufschlagt wird. Es genügt deshalb ein verhältnismäßig geringer Druck, um den Erstanschluß 332 zu öffnen und ein Flüssigkeitsübergang von der oberen Teilarbeitskammer 306b in die obere Arbeitskammer 305 einzuleiten. Dies heißt, daß theoretisch dem Einschieben der Kolbenstange 304 in den Zylinder 303 nur ein geringer Einschubwiderstand entgegenwirkt. Nun bedeutet aber das Einschieben der Kolbenstange 304 eine Vergrößerung des von der Kolbenstange 304 innerhalb des Zylinders 303 verdrängten Volumens. Um diese Volumensverkleinerung in den beiden Arbeitskammern 305 und 306b zusammengenommen kompensieren zu können, muß Flüssigkeit von der oberen Arbeitskammer 306b in die untere Teilarbeitskammer 306a übergehen. Da das Rückschlagventil 464 hierfür nicht zur Verfügung steht, bleibt nur der Weg über den Erstanschluß 432, die Durchflußkammer 430, den Zweitanschluß 410 und den Ringkanal 437. Um diesen Weg verfügbar zu machen, muß aber zuerst der Abdichtkolben 412 von dem Erstanschluß 432 abheben und hierzu ist wegen der Kleinheit des Fluidbeaufschlagungsquerschnitts 422 bei entsprechender Konstruktion und Vorspannung der Schraubendruckfeder 414 ein verhältnismäßig großer Druck in der oberen Teilarbeitskammer 306b erforderlich. Es muß also beim Beginn des Einschiebens der Kolbenstange 304 in die Teilarbeitskammer 306b ein verhältnismäßig großer Druck erzeugt werden, damit der Abdichtkolben 412 von dem Erstanschluß 432 abhebt. Ist diese Abhebung einmal erfolgt, so findet eine dem zunehmenden Eintauchen der Kolbenstange 304 in den Zylinder 303 entsprechende Flüssigkeitsströmung von der Teilarbeitskammer 306b in die Teilarbeitskammer 306a statt. In der Durchflußkammer 430 baut sich wieder ein Zwischendruck auf, der im Sinne eines Abhebens des Abdichtkolbens 412 von dem Erstanschluß 432 wirkt, so daß fortan der Abdichtkolben 412 auch mit geringerem Druck in der Teilarbeitskammer 306b offengehalten werden kann. Dies bedeutet, daß die Kolbenstange, wenn sie einmal in Bewegung gesetzt worden ist, mit einer verhältnismäßig kleinen Druckkraft auf das Gelenkauge 301 weiter eingeschoben werden kann. Dieser Einschubbewegung wirkt der Durchflußwiderstand durch die Bohrung 310 und den Erstanschluß 332 entgegen. Dieser Durchflußwiderstand ist aber verhältnismäßig gering, weil ja der Abdichtkolben 312 in diesem Betriebsstadium wieder auf dem großen Fluidbeaufschlagungsquerschnitt 335 beaufschlagt wird. Weiterhin wirkt der Einschubbewegung der Durchflußwiderstand von der Teilarbeitskammer 306b zur Teilarbeitskammer 306a entgegen. Aber auch dieser Durchflußwiderstand kann kleingehalten werden, weil nach einmal erfolgter Einleitung der Einschubbewegung der Kolbenstange 304 der in der Teilarbeitskammer 306b sich aufbauende Druck an den großen Fluidbeaufschlagungsquerschnitt 445 des Abdichtkolbens 412 wirkt. Schließlich wirkt dem Einschieben der Kolbenstange 304 in den Zylinder 303 auch das Gasvolumen 366 entgegen, das bei Zustrom von Flüssigkeit in die untere Arbeitskammer 306a unter Abwärtsbewegung der schwimmenden Trennwand 365 komprimiert werden muß. Diese Kompressionskraft ist aber verhältnismäßig gering und hierin liegt ein besonderer Vorteil der vorstehend beschriebenen Konstruktion: Wäre die Trennwandeinheit 460 nicht vorhanden und wäre es nicht notwendig, zur Öffnung des Erstanschlusses 432 einen großen Druck in der oberen Arbeitskammer 306b aufzubauen, so könnte ein ausreichender Einschubwiderstand, wie er beispielsweise notwendig ist, um das unbeabsichtigte Schließen einer Kraftfahrzeugtür zu verhindern, nur dadurch bereitgestellt werden, daß das Gasvolumen 366 unter entsprechend hohen Druck gesetzt würde. Dieser hohe Druck würde aber dann dazu führen, daß beim beabsichtigten Schließen der Kraftfahrzeugtür auf dem gesamten Schließweg eine große Kraft von Hand an die Tür angelegt werden müßte. Dies ist nicht beabsichtigt. Es entspricht vielmehr dem Wunsch des Kraftfahrzeughalters, die Tür auch in Schließrichtung nach kurzfristiger Aufbringung einer Anstoßkraft leicht bewegen zu können und dies ist wie vorstehend beschrieben durch die Konstruktion gemäß Figur 4 erreicht. Der kleine Druck des Gasvolumens 366 hat auch den Vorteil, daß das Ausschieben der Kolbenstange 304 nicht wesentlich durch das Kolbenzylinderaggregat unterstützt wird. Eine solche Unterstützung ist in vielen Fällen, insbesondere bei vertikaler Schwenkachse einer Kraftfahrzeugtür, nicht erwünscht, da es zu einem raschen Öffnen der Tür führen könnte. Es soll aber nicht ausgeschlossen sein, daß der Gasdruck zur Unterstützung des Türöffnens herangezogen wird, etwa dann, wenn bei entsprechender Schrägstellung der Schwenkachse der Kraftfahrzeugtür durch deren Eigengewicht ein Schließmoment in Schließrichtung erzeugt wird. Man kann ein solches Schließmoment durch entsprechende Bemessung des Gasdrucks in dem Gasvolumen 366 kompensieren.

Es ist noch darauf hinzuweisen, daß das Gasvolumen 366, welches auf die schwimmende Trennwand 365 einwirkt, auch durch eine Schraubendruckfeder ersetzt werden kann. Es ist weiter darauf hinzuweisen, daß das durch die schwimmende Trennwand 365 in Figur 4 am unteren Ende des Zylinders 303 bereitgestellte Ausgleichsvolumen für das veränderliche Verdrängungsvolumen der Kolbenstange auch am oberen Ende des Zylinders 303 gebildet werden kann, etwa dadurch, daß unterhalb der Dichtung 345 ein Gasvolumen eingebracht wird. Es muß damit gerechnet werden, daß das Kolbenzylinderaggregat auch horizontal oder auf den Kopf gestellt zum Einsatz kommt. Deshalb empfiehlt es sich, eine ringförmige schwimmende Trennwand vorzusehen, welche dann das Gasvolumen am oberen Ende des Zylinders 303 von der Flüssigkeit der Arbeitskammer 305 trennt. Auch in diesem Fall könnte das Gasvolumen wieder durch eine Schraubendruckfeder ersetzt werden.

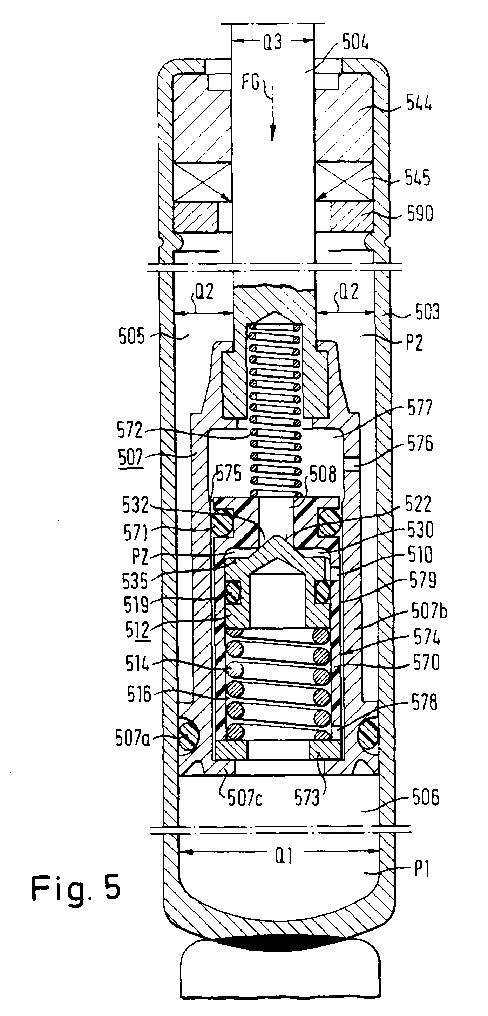

In Figur 5 ist eine Gasfeder dargestellt, die den Konstruktionsprinzipien nach den Figuren 1-4 weitestgehend entspricht. Analoge Teile sind mit gleichen Bezugszeichen versehen wie in den vorangehenden Figuren, jeweils mit der Erstzahl 500.

In dieser Ausführungsform ist an der Kolbenstange 504 wiederum die Trennkolbeneinheit 507 mit einem Kolbenhohlkörper fest angebracht, welche unter Vermittlung der Dichtung 507a die beiden Arbeitskammern 505 und 506 voneinander trennt. Der Kolbenhohlkörper ist dabei mit 507b bezeichnet und an der Kolbenstange starr befestigt. In dem Kolbenhohlkörper 507b ist ein Hülsenkörper 570 verschiebbar aufgenommen. Dieser Hülsenkörper 570 nimmt in dem Raum 516 den Abdichtkolben 512 auf, der genauso konstruiert ist wie in den vorangehenden Ausführungsbeispielen und dementsprechend mit 512 bezeichnet. Der Hülsenkörper 570 bildet unterhalb einer Dichtung 571 einen Ringspalt 579 mit der Innenumfangsfläche des Kolbenhohlkörpers 507b. Die Durchflußkammer 530 mit dem Erstanschluß 532, dem Zweitanschluß 510, der Dichtung 519, dem großen Fluidbeaufschlagungsquerschnitt 535, dem kleinen Fluidbeaufschlagungsquerschnitt 522 und der Bohrung 508 ist genauso ausgebildet wie die entsprechenden Teile in den vorangegangenen Figuren, was durch Übereinstimmung der beiden letzten Ziffern in den jeweiligen Bezugszeichen zum Ausdruck gebracht ist. Im Unterschied zu den vorangegangenen Ausführungsformen ist der Abdichtkolben 512 auf seiner von dem Erstanschluß 532 abgelegenen Seite dem Druck in der unteren Arbeitskammer 506 ausgesetzt zusätzlich zu der Federkraft der Schraubendruckfeder 514. Der Hülsenkörper 570 übernimmt einerseits die Funktion eines Fluidenleitkörpers und andererseits die Funktion eines Rückschlagventilkörpers. Er ist in die in Figur 5 gezeichnete Stellung durch eine Schraubendruckfeder 572 vorgespannt. Durch diese Feder wird der Hülsenkörper 570 im Anschlag gegen einen Stützbund 507c gehalten unter Vermittlung einer Ringscheibe 573, an welcher die Schraubendruckfeder 514 abgestützt ist. Das Rückschlagventil, welchem der Hülsenkörper 570 zugehört, ist insgesamt mit 574 bezeichnet. Zu diesem Rückschlagventil 574 gehört eine Abstufung 575 an der Innenumfangsfläche des Kolbenhohlkörpers 507b und eine Radialbohrung 576, welche eine Rückschlagventilkammer 577 mit der oberen Arbeitskammer 505 verbindet. Diese Ausführungsform nach Figur 5 verhält sich sehr ähnlich wie die zuvor beschriebene Ausführungsform nach Figur 4. Wenn die Kolbenstange 504 aus dem Zylinder 503 nach oben ausgezogen wird, so baut sich in der oberen Arbeitskammer 505 ein vergrößerter Druck auf. Dieser vergrößerte Druck wirkt über die Bohrung 576 und die Bohrung 508 auf den kleinen Fluidbeaufschlagungsquerschnitt 522 des Abdichtkolbens 512 ein.

Bei Einleitung der Aufwärtsbewegung der Kolbenstange 504 ist wieder ein verhältnismäßig großer Druck in der Arbeitskammer 505 und damit in der Bohrung 508 erforderlich, damit trotz des kleinen Fluidbeaufschlagungsquerschnitts 522 der Abdichtkolben 512 von dem Erstanschluß 532 der Durchflußkammer 530 abhebt. Ist diese Abhebung einmal erfolgt, so wirkt der durch die Auszugskraft auf die Kolbenstange 504 erzeugte vergrößerte Druck innerhalb der oberen Arbeitskammer 505 infolge des Druckabfalls in dem Zweitanschluß 510 auch auf den größeren Fluidbeaufschlagungsquerschnitt 535 des Abdichtkolbens 512 ein, so daß dieser bei weiterer Fortsetzung der Auswärtsbewegung der Kolbenstange 504 auch dann von dem Erstanschluß 532 abgehoben bleibt, wenn der Druck in der oberen Arbeitskammer 505 wieder geringer wird. Es liegt also wie bei allen vorangehenden Ausführungsformen auch hier ein Element vor, bei dem zur Einleitung einer Kolbenstangenbewegung eine größere Anstoßkraft notwendig ist und danach eine Auszugsbewegung auch mit geringerer Auszugskraft fortgesetzt werden kann. Nähert sich die Auszugsgeschwindigkeit der Kolbenstange 504 gegenüber dem Zylinder 503 dem Wert NULL, so wird der Druck auf dem größeren Fluidbeaufschlagungsquerschnitt 535 so gering, daß er dem Druck der Schraubendruckfeder 514 und dem Druck des Gasvolumens in der unteren Arbeitskammer 506 das Gleichgewicht nicht mehr halten kann. Der Erstanschluß 532 wird damit wieder geschlossen und die Bewegung der Kolbenstange 504 kommt zum Stillstand.

Bei einer Einwärtsverschiebung der Kolbenstange 504 gegenüber dem Zylinder 503 öffnet das Rückschlagventil 574. Eine verhältnismäßig geringe Druckerhöhung in der unteren Arbeitskammer 506 genügt, um den Hülsenkörper 570 nach oben zu verschieben. Der erhöhte Druck in der Arbeitskammer 506 wirkt nämlich auf die Rückseite des Abdichtkolbens 512 ein; dieser wird nach oben bewegt und nimmt unter fortgesetzter Absperrung des Erstanschlusses 532 den Hülsenkörper 570 mit nach oben solange, bis die Dichtung 571 über die Abstufung 575 hinweggeglitten ist. Dann kann Gas aus der unteren Arbeitskammer 506 über eine Kerbe 578, den Ringraum 579, die Kammer 577 und die Bohrung 576 in die obere Arbeitskammer 505 überströmen.

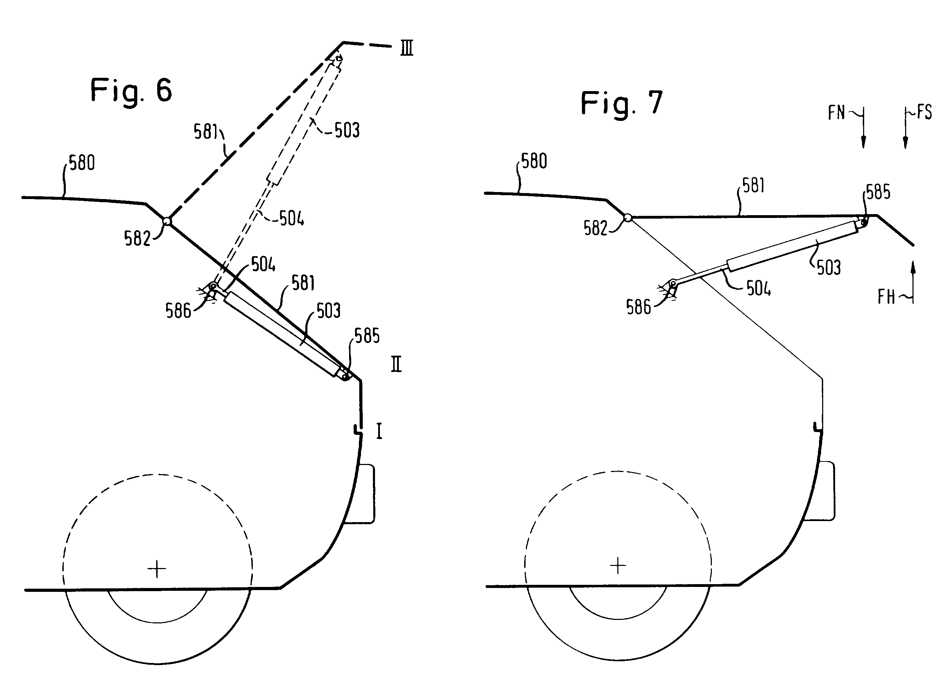

Die Besonderheit, die sich aus der Gasfüllung und einer von der Gasfüllung auf die Kolbenstange 504 ausgeübten Ausschubkraft ergibt, lassen sich am einfachsten unter Berücksichtigung einer Anordnung erläutern, wie sie in den Figuren 6 und 7 dargestellt ist. In diesen Figuren ist eine Kraftfahrzeugkarosserie mit 580 und eine Heckklappe mit 581 bezeichnet. Die Heckklappe 581 ist bei 582 an der Karosserie 580 angelenkt. In Figur 6 erkennt man die Schließstellung der Heckklappe 581 in vollen Linien und die vollständig geöffnete Stellung in gestrichelten Linien. In Figur 7 erkennt man die Heckklappe in einer Zwischenstellung. Ein Zylinderkolbenaggregat 503,504 in der Bauart gemäß Figur 5 ist bei 585 an der Heckklappe 581 angelenkt und bei 586 an der Karosserie 580. Es können zwei solche Kolbenzylinderaggregate parallel angeordnet sein, etwa je eines an den beiden Längsbegrenzungswänden der Karosserie. Für die nachstehende Funktionsbeschreibung wird von der Annahme ausgegangen, daß ein einziges Zylinderkolbenaggregat vorgesehen ist. Die Verhältnisse ändern sich bei Vorhandensein zweier solcher Kolbenzylinderaggregate nur insofern, als dann jedes dieser Kolbenzylinderaggregate nur die Hälfte der Hubunterstützung und Feststellkräfte aufzubringen hat.

Es wird nun zunächst die Figur 7 in Verbindung mit Figur 5 betrachtet, und es sei zunächst einmal nur festgestellt, daß die durch den Gasdruck innerhalb des Zylinders 503 auf die Kolbenstange 504 ausgeübte Ausschubkraft grundsätzlich in der Lage ist, die Klappe 581 aus der Stellung gemäß Figur 7 ohne Handunterstützung weiter anzuheben. Bei der Betrachtung der Figur 5 wird nun weiter angenommen, daß die Kolbenstange 504 im Stillstand ist. Der Erstanschluß 532 ist geschlossen; das Rückschlagventil 574 ist ebenfalls geschlossen. Es besteht keine Verbindung zwischen den beiden Gasvolumina in den Arbeitskammern 505 und 506. Die Klappe 581, welche um die Gelenkachse 582 schwenkbar ist, erfährt durch ihr Eigengewicht ein Drehmoment um die Gelenkachse 582, dieses Drehmoment versucht, die Klappe 581 zu schließen und übt eine Kraft auf das Kolbenzylinderaggregat 503,504 aus, welche die Kolbenstange 504 in den Zylinder 503 einzuschieben versucht.

Gemäß Figur 5 herrscht in einer Position entsprechend der Figur 7 in der unteren Arbeitskammer, auch Bodenkammer genannt, ein Druck P1 und in der oberen Arbeitskammer 505, auch Stangenkammer genannt, ein Druck P2. Der Druck P1 wirkt auf den vollen Querschnitt der Trennkolbeneinheit 507, der mit Q1 bezeichnet ist. Der Druck P2 wirkt auf einen Ringquerschnitt Q2, der sich ergibt aus der Differenz des Querschnitts Q1 und des Querschnitts Q3 der Kolbenstange 504. Auf die Kolbenstange 504 wirkt außerdem eine Gewichtskraft FG, welche durch das Gewicht der Klappe 581 und durch die Lage der Gelenkpunkte 582, 585 und 586 bestimmt ist. Im Gleichgewichtszustand gilt angenähert die Gleichung: P1xQ1=P2xQ2+FG. Dabei ist im Gleichgewichtszustand der Druck P2 größer als der Druck P1. Die Drücke P2 und P1, die beide an dem Abdichtkolben 512 angreifen, sind dabei aber unter Mitberücksichtigung der Schraubendruckfeder 514 so eingestellt, daß der Abdichtkolben 512 nicht von dem Erstanschluß 532 abhebt. Im übrigen sind die Drücke P1,P2 so eingestellt, daß unter Mitberücksichtigung der Federn 514 und 572, der Hülsenkörper 570 seine in der Figur 5 eingestellte Lage beibehält, das Rückschlagventil 574 also geschlossen ist.

Es sei nun weiter angenommen, daß der Benutzer des Kraftfahrzeugs die Klappe 581 gegenüber der Position nach Figur 7 weiter öffenen will in Richtung auf den Zustand der vollen Öffnung gemäß gestrichelter Darstellung in Figur 6. Der Benutzer legt hierzu an der Klappe 581 eine Hubkraft FH von Hand an. Diese Hubkraft ergibt eine Auszugskraft auf die Kolbenstange 504. Diese Auszugskraft verändert das Gleichgewicht, so daß der Druck P2 in der Arbeitskammer 505 ansteigt. Dieser Druckanstieg in der oberen Arbeitskammer 505 führt nun dazu, daß auch an dem kleinen Fluidbeaufschlagungsquerschnitt 522 ein Druckanstieg stattfindet. Dieser Druckanstieg führt dazu, daß der Abdichtkolben 512 von dem Erstanschluß 532 abhebt. Um auch schwachen Benutzern des Kraftfahrzeugs zu ermöglichen, ein Abheben des Abdichtkolbens 512 von dem Erstanschluß 532 herbeizuführen, wird durch entsprechende Anordnung und Auslegung des als Gasfeder ausgebildeten Kolbenzylinderaggregats dafür gesorgt, daß bereits bei einer Hubkraft FH von weniger als 100 N, vorzugsweise bei einer Hubkraft FH von weniger als 50 N, der Anstieg des Gasdrucks P2 in der oberen Arbeitskammer 505 ausreicht, um den Abdichtkolben 512 zum Abheben von dem Erstanschluß 532 zu bringen. Wenn nun der Abdichtkolben 512 von dem Erstanschluß 532 abgehoben hat, so tritt eine Gasströmung von der oberen Arbeitskammer 505 zur unteren Arbeitskammer 506 ein auf dem Wege 576,577,508,530,510, 579,578. Die Strömungsrichtung ergibt sich daraus, wie weiter oben festgestellt, daß der Druck P2 im Gleichgewichtszustand größer ist als der Druck P1. Bei dieser Strömung von der Arbeitskammer 505 zur Arbeitskammer 506 tritt nun, wie in den vorher beschriebenen Ausführungsbeispielen schon ausführlich erläutert, ein Druckabfall an dem Zweitanschluß 510 ein. Dieser Druckabfall bewirkt, daß sich in der Durchflußkammer 530 ein Zwischendruck PZ einstellt, welcher größer ist als der Druck P1. Dieser Zwischendruck PZ wirkt dann auf den größeren Fluidbeaufschlagungsquerschnitt 535 und bewirkt, daß der Abdichtkolben 512 gegenüber dem Erstanschluß 532 abgehoben bleibt, auch wenn die durch das Anlegen der Hebekraft FH vorübergehend eingetretene Erhöhung des Drucks P2 in der oberen Arbeitskammer 505 wieder rückgängig gemacht wird.

Wenn der Abdichtkolben einmal von dem Erstanschluß 532 abgehoben hat und infolge der Einwirkung des Zwischendrucks PZ offengehalten wird, dann kann die Kolbenstange 504 selbsttätig aus dem Zylinder 503 unter Anhebung der Klappe 581 ausgeschoben werden. Man braucht nur dafür zu sorgen, daß die vom Druck P1 auf den Querschnitt Q1 ausgeübte Ausschubkraft größer ist als die Summe der vom Druck P2 auf den Querschnitt Q2 ausgeübte Kraft, der Gewichtskraft FG und dem sich einstellenden Durchflußwiderstand von der Arbeitskammer 505 zur Arbeitskammer 506. Dabei muß man allerdings beachten, daß die Ausschubbewegung der Kolbenstange 504 mit einer Geschwindigkeit erfolgt, welche ausreicht, um den Zwischendruck PZ an dem größeren Fluidbeaufschlagungsquerschnitt 535 über demjenigen Wert zu halten, der notwendig ist, um den Abdichtkolben 512 von dem Erstanschluß 532 abgehoben zu halten. Die für die Erfüllung dieser Bedingungen notwendigen Bemessungen in der Gasfeder 504,503 lassen sich von einem Fachmann unter Berücksichtigung des Klappengewichts und der Anlenkpunkte 582,585,586 leicht rechnerisch und/oder experimentell ermitteln. Sind diese Bedingungen dann einmal erfüllt, so braucht man also zur Anhebung der Klappe 581 gegenüber der Ruhestellung gemäß Figur 7 nur eine kurzfristige und relativ geringfügige Hebekraft FH auf die Klappe auszuüben, dann steigt die Klappe von selbst an bis sie wieder zum Stillstand gebracht wird oder bis die Klappe 581 die in Figur 6 dargestellte maximale Öffnungsstellung erreicht hat, die durch Anschläge zwischen Karosserie und Klappe oder durch einen Anschlag der Trennkolbeneinheit 507 an dem Anschlagring 590 definiert ist. Will man die Aufwärtsbewegung der Klappe 581 zum Stillstand bringen, bevor die oberste Stellung gemäß Fig. 6 erreicht ist, so kann man dies dadurch erreichen, daß man an der Klappe gemäß Figur 7 kurzfristig eine Niederhaltekraft FN von Hand anlegt. Dann passiert folgendes: Die Ausfahrgeschwindigkeit der Kolbenstange 504 wird reduziert, infolgedessen sinkt der Zwischendruck PZ in der Durchflußkammer 530 ab und reicht nicht mehr aus, um den Abdichtkolben 512 von dem Erstanschluß 532 abgehoben zu halten. Der Abdichtkolben 512 verschließt so den Erstanschluß 532; die Arbeitskammern 505,506 sind wieder voneinander getrennt; die Kolbenstange 504 steht gegenüber dem Zylinder 503 fest; die Klappe 581 hat eine neue Zwischenstellung erreicht. Für diese neue Zwischenstellung gelten die gleichen Betrachtungen, die vorstehend für die Zwischenstellung gemäß Figur 7 angestellt worden sind.

Hier ist anzumerken, daß durch entsprechende Berechnungen oder Experimente wieder eine solche Bemessung des Kolbenzylinderaggregats und seiner Einbauverhältnisse gewählt werden soll, daß nur eine relativ kleine Niederhaltekraft FN notwendig ist, um die Aufwärtsbewegung der Klappe zum Stillstand zu bringen.

Vorzugsweise wird man dafür sorgen, daß diese Niederhaltekraft FN kleiner ist als 100 N, vorzugsweise kleiner als 50 N. Ist diese Niederhaltekraft FN einmal kurzfristig angelegt worden, so bleibt die Klappe in der erreichten Stellung im Ruhezustand stehen, entsprechend Figur 7, auch wenn die Niederhaltekraft FN wieder von der Klappe 581 abgenommen wird. Was die Größe der Anhebekraft FH und der Niederhaltekraft FN anbelangt, so wurden vorstehend nur jeweils die oberen Grenzwerte angegeben mit Rücksicht darauf, daß auch eine schwache Person diese Kräfte aufbringen kann. Es sei gleichwohl erwähnt, daß man diese Kräfte FN und FH nicht beliebig klein machen sollte. Sie sollten so groß sein, daß durch ein zufälliges Anstoßen an der Klappe oder durch Windkräfte keine unbeabsichtigten Vorgänge ausgelöst werden.

Will man, ausgehend von einem Zustand gemäß Figur 7 eine Absenkung der Klappe in Richtung auf den Schließzustand erreichen, wie er in Figur 6 mit starken Linien dargestellt ist, so muß man an die Klappe eine Senkkraft FS gemäß Figur 7 anlegen. Dann erhöht sich in der Arbeitskammer 506 der Druck P1 und dieser erhöhte Druck wirkt auf den Abdichtkolben 512 und den Hülsenkörper 570 ein. Infolge dieses erhöhten Drucks wird der Hülsenkörper 570 zusammen mit dem Abdichtkolben 512 in Figur 5 nach aufwärts verschoben bis der Dichtring 571 die Stufe 575 an der Innenfläche des Raums 577 überschritten hat. Dann ist eine Durchflußmöglichkeit von der Arbeitskammer 506 auf dem Weg 578,579,577,576 zur Arbeitskammer 505 eröffnet. Die Senkkraft FS muß dabei auf dem ganzen beabsichtigten Senkweg aufrecht erhalten bleiben.

Man kann wieder rechnerisch oder experimentell eine solche Bemessung der Gasfeder unter Berücksichtigung des Klappengewichts und der Anordnung der Gelenkpunkte 582,585,586 erreichen, daß auch die zur Absenkung der Klappe notwendige Senkkraft FS den Bedürfnissen einer schwachen Person Rechnung trägt und insbesondere nicht größer wird als 100 N, vorzugsweise nicht größer als 50 N.

Es ist aus Figur 7 ohne weiteres zu ersehen, daß die Verhältnisse sich im Laufe einer Schwenkbewegung der Klappe 581 laufend verändern. Diesen Veränderungen muß natürlich auch bei der Bemessung der Gasfeder Rechnung getragen werden, damit die vorstehend beschriebenen Zustände und Vorgänge in allen Punkten längs des Schwenkwegs annähernd gelten können. Wenn die Klappe sich der in Figur 6 in starken Linien dargestellten Schließposition nähert, so ist es häufig gar nicht erwünscht, daß die Klappe dann noch durch die Gasfeder in Zwischenstellungen gehalten wird und es ist auch dann nicht mehr notwendig, daß das Anheben der Klappe durch die Gasfeder unterstützt wird. Zwischenstellungen sind in einem kurzen Schwenkbereichsabschnitt vor der Schließstellung ohnehin nicht notwendig, weil solche Zwischenstellungen in der Praxis kaum erforderlich sind. Eine Unterstützung des Anhebens der Klappe ist in diesem der Verschlußstellung angrenzenden Grenzbereich auch nicht erwünscht, weil man unter Berücksichtigung üblicher Schloßkonstruktionen bei Annäherung an die Verschlußstellung die Klappenbewegung beschleunigen muß, um ein Einschnappen des Schlosses zu bewirken. Man kann die vorstehend beschriebene Wirkung des selbsttätigen Schließens auf einen Bewegungsbereich beschränken, der in Figur 6 etwa vom Punkt I entsprechend der Verschlußstellung bis zum Punkt II reicht. Innerhalb dieses Bewegungsbereichs I-II muß man dann eine Kraft zum Öffnen der Klappe aufbringen und kann auch keine Zwischenpositionen feststellen. Damit ist zum einen den individuellen Bedürfnissen kleingewachsener Personen Rechnung getragen, zum anderen kann die Klappe 581 im Bewegungsbereich II-III jeweils auf denjenigen Öffnungswinkel eingestellt werden, welcher zum Be- und Entladen kleinerer oder größerer Gegenstände jeweils erforderlich ist. Außerdem kann man die Klappe in jeweils diejenige Stellung einstellen, die beim Unterfahren von Hindernissen, z.B. beim Einfahren in Garagentore, gerade noch zulässig ist.

Es sei hier noch vermerkt, daß man auf das Rückschlagventil 574 gemäß Figur 5 unter Umständen verzichten kann, weil der Abdichtkolben 512 grundsätzlich selbst als Rückschlagventil dienen kann. Es sei daran erinnert, daß der Druck P1 in der Arbeitskammer 506 auf den größeren Fluidbeaufschlagungsquerschnitt 535 einwirkt, so daß bei einem Einschieben der Kolbenstange 504 durch eine Senkkraft FS die Öffnung von der Arbeitskammer 506 zur Arbeitskammer 505 auch dadurch herbeigeführt werden kann, daß der Abdichtkolben 512 infolge des auf den großen Fluidbeaufschlagungsquerschnitt 535 einwirkenden Drucks P1 von dem Erstanschluß 532 abgehoben wird und sich damit ein Durchflußweg 578,579,510,530,508,576 ergibt. Die Ausgestaltung entsprechend Figur 5 bietet aber bei der Berechnung und Konstruktion eine größere Zahl von Freiheitsgraden an, die zu einem Betriebsverhalten von optimaler Bequemlichkeit für die Bedienungsperson ausgenutzt werden können.

Abschließend sei erwähnt, daß die Trennkolbeneinheit 507 grundsätzlich auch in einer Stellvorrichtung, etwa gemäß Figur 4 anstelle der dortigen Trennkolbeneinheit 307, eingesetzt werden kann, daß aber auch umgekehrt die Trennkolbeneinheit 307 nach Figur 4 in der Ausführungsform nach Figur 5 anstelle der dortigen Trennkolbeneinheit 507 verwendet werden kann. Weiter sei noch erwähnt, daß die Konstruktion gemäß Figur 5 nicht notwendig daran gebunden ist, daß in beiden Arbeitskammern 505 und 506 jeweils nur Druckgas vorhanden ist. Die Konstruktion gemäß Figur 5 könnte vielmehr auch dahingehend abgewandelt werden, daß die obere Arbeitskammer 505 mit Flüssigkeit gefüllt ist und die untere Arbeitskammer 506 in einen Flüssigkeits- und einen Druckgasraum unterteilt ist, so wie in Figur 4 dargestellt.

Zur Figur 5 ist noch nachtragen, daß die Stützscheibe 573 bei entsprechender Bemessung der Federn 514 und 572 auch an dem Hülsenkörper 570 axial unbeweglich befestigt sein kann.

Unter Bezugnahme auf die Figuren 5 - 7 wurde eine Konstruktion erörtert, bei welcher die Klappe durch das Zylinderkolbenaggregat bzw. die Zylinderkolbenaggregate selbsttätig angehoben wird, sobald eine Hubkraft FH kurzfristig angelegt worden ist.

Es ist grundsätzlich auch denkbar, ein Zylinderkolbenaggregat 503, 504 zwar dazu einzusetzen, um das Anheben der Klappe zu erleichtern, den Gasdruck in dem Zylinderkolbenaggregat 503,504 aber so zu bemessen, daß das bzw. die Zylinderkolbenaggregate beim Anheben nur unterstützend wirken. Man kann dann trotzdem eine Feststellmöglichkeit erzielen. Man kann in diesem Fall die Durchflußrichtungen des Rückschlagventils 574 einerseits und die Durchflußrichtung durch den Erstanschluß 532 andererseits bei gleichbleibender Zuordnung von Zylinderrohr 503 und Kolbenstange 504 gemäß Figur 5 vertauschen, indem man die ganze Trennkolbeneinheit 507 in Figur 5 auf den Kopf stellt und mit ihrem - in Figur 5 unteren - Ende an der Kolbenstange 504 anbringt. Auch dann stellt sich wieder ein Gleichgewichtszustand ein, wenn die Klappe die Stellung gemäß Figur 7 einnimmt. Will man dann von der Stellung gemäß Figur 7 in eine weiter angehobene Stellung der Klappe kommen, so muß man auf dem ganzen Anhebeweg eine Hubkraft FH anlegen, wobei sich dann das Überdruckventil 574 öffnet. Will man andererseits ausgehend von der Stellung gemäß Figur 7 eine tieferliegende Stellung der Klappe 581 erreichen, so muß man eine Senkkraft FS anwenden, um zunächst einmal den Abdichtkolben 512 von dem Erstanschluß 532 abzuheben. Ist diese Öffnung einmal erreicht, so bleibt der Abdichtkolben 512 von dem Erstanschluß 532 abgehoben und die Klappe sinkt selbsttätig nach unten.

Auch bei einer solchen Lösung kann man die von Hand aufzubringenden Kräfte so bemessen, daß sie von einer kleinen Person aufgebracht werden können.

Es sei ferner vermerkt, daß der in Fig. 5 gezeigte Feststeller auch in einer Konstruktion wie in den Fig. 6 und 7 gezeigt verwendet werden kann, wenn die Gasfüllung des Zylinders 503 nicht ausreicht, die Gewichtkraft der Klappe 581 zu überwinden, selbst nachdem der Abdichtkolben 512 von dem Erstanschluß 532 abgehoben ist. In diesem Fall muß eine Hubkraft FH während des gesamten gewünschten Hubvorgangs der Klappe 581 aufrechterhalten werden. Die Hubkraft ist allerdings wiederum reduziert, nachdem der Abdichtkolben 512 einmal von dem Erstanschluß 532 abgehoben ist. Diese Lösung würde deshalb den Vorteil bieten, daß zu. Beginn einer Aufwärtsbewegung der Klappe 581 eine kurzzeitig vergrößerte Hubkraft angewendet werden muß. Damit kann eine unbeabsichtigte Aufwärtsbewegung der Klappe 581, z.B. durch Einwirkung von Wind, vermieden werden, wobei dennoch die Aufwärtsbewegung der Klappe 581 erleichtert ist. Für eine Abwärtsbewegung ist es wiederum notwendig, das Rückschlagventil 574 durch Anwendung einer nach unten gerichteten Senkkraft FS auf die Klappe zu öffnen.

Es sei weiterhin vermerkt, daß die Feststeller der Fig. 1 - 4 auch in Konstruktionen nach der Art von Fig. 6 und 7 verwendet werden können, um die Handhabung einer Heckklappe oder eines Kofferraumdeckels oder einer Motorhaube zu erleichtern.

Im Fall einer Verwendung des Feststellers der Fig. 1 für eine Konstruktion wie in den Fig. 6 und 7 gezeigt kann die Kolbenstangenverlängerung 25 weggelassen werden,und die Arbeitskammern 5 und 6 können mit unter Druck stehendem Gas gefüllt sein. Im Fall der Fig. 2 können die Trennwände 160 und 165 weggelassen werden, und die Arbeitskammern 105 und 106 können mit unter Druck stehendem Gas gefüllt sein.

## Patentansprüche

1. Feststeller zum Feststellen zweier relativ zueinander beweglicher Objekte gegen äußere Kräfte in zwei gegenläufigen Bewegungsrichtungen, wobei der Feststeller in beiden Bewegungsrichtungen eine der Bewegungseinleitung entgegenwirkende Haltekraft und einen - verglichen mit der Haltekraft kleineren - der fortgesetzten Bewegung entgegenwirkenden Bewegungswiderstand erzeugt, wobei weiter dieser Feststeller ausgeführt ist mit zwei relativ zueinander beweglichen Feststeller-Baugruppen (3;4,7), von denen eine (3) mit einem der Objekte (bei 2) und eine andere (4,7) mit dem anderen der Objekte (bei 1) gekoppelt ist, wobei weiter durch Relativbewegung dieser Feststeller-Baugruppen (3;4,7) mindestens zwei ein Arbeitsfluid enthaltende, volumenveränderliche Arbeitskammern (5,6) in der Größe ihres jeweiligen Arbeitsvolumens derart beeinflußbar sind, daß sich das Volumenverhältnis dieser Arbeitskammern (5,6) in Abhängigkeit von der Bewegungsrichtung gegensinnig verändert, wobei weiter diese Arbeitskammern (5,6) durch ein Fluiden-Austauschsystem (36,9,31,33,8,32,30,10,37) miteinander verbunden sind, welches einen Fluidenaustausch zwischen den beiden Arbeitskammern (5,6) in beiden Austauschrichtungen gestattet, und zwar so, daß der Fluidendurchflußwiderstand während eines Fluidenaustauschvorganges bei dessen Beginn größer ist als im weiteren Verlauf, dadurch gekennzeichnet,
daß das Fluiden-Austauschsystem (36,9,31,33,8,32,30, 10,37) eine Reihenschaltung von zwei jeweils in beiden Richtungen durchströmbaren, in eine Schließstellung vorgespannten Drosselstellen (33-11,32-12) mit je einem ersten Durchflußanschluß (9,10) in Verbindung mit einer zugehörigen Arbeitskammer (5,6) und je einem zweiten Durchflußanschluß (33) in Verbindung mit dem zweiten Durchflußanschluß (32) der jeweils anderen Drosselstelle aufweist, wobei ein erster Druckwert am ersten Durchflußanschluß (9) einer Drosselstelle (33-11) ausreicht, um beide Drosselstellen (33-11,32-12) zu öffnen, und ein zweiter kleinerer Druckwert am ersten Durchflußanschluß (9) der Drosselstelle (33-11) ausreicht, um beide Drosselstellen (33-11,32-12) bei fortgesetzter Durchströmung offen zu halten.

2. Feststeller nach Anspruch 1,
dadurch gekennzeichnet,
daß der erste Druckwert für beide Drosselstellen (33-11, 32-12) gleich ist.

3. Feststeller nach Anspruch 1,
dadurch gekennzeichnet,
daß der erste Druckwert für beide Drosselstellen (33-11, 32-12) verschieden ist.

4. Feststeller nach einem der Ansprüche 1 - 3,
dadurch gekennzeichnet,
daß der zweite Druckwert für beide Drosselstellen (33-11, 32-12) gleich ist.

5. Feststeller nach einem der Ansprüche 1 - 3,
dadurch gekennzeichnet,
daß der zweite Druckwert für beide Drosselstellen (33-11, 32-12) verschieden ist.

6. Feststeller nach einem der Ansprüche 1 - 5,
dadurch gekennzeichnet,
daß eine Drosselstelle (33-11) eine Durchflußkammer (31) mit dem ersten (9) und zweiten (33 ) Durchflußanschluß und einen längs einer Bewegungsbahn beweglichen, die Durchflußkammer (31) abdichtenden Drosselkörper (11) angrenzend an diese Durchflußkammer (31) umfaßt, wobei der Drosselkörper (11) durch die Wirkung von Vorspannmitteln (13) in eine Schließstellung vorgespannt ist, in welcher der zweite Durchflußanschluß (33) von der Durchflußkammer (31) getrennt ist, wobei weiter der erste Durchflußanschluß (9) ständig mit der Durchflußkammer (31) verbunden ist, wobei weiter in der Schließstellung des Drosselkörpers (11) dieser (11) einem am zweiten Durchflußanschluß (33) herrschenden Fluidendruck eine kleinere Beaufschlagungsfläche (21) und einem in der Durchflußkammer (31) herrschenden Fluidendruck eine größere Beaufschlagungsfläche (34) gleicher Beaufschlagungsrichtung darbietet und wobei zwischen der Durchflußkammer (31) der Drosselstelle (33-11) und der zugehörigen, über den ersten Durchflußanschluß (9) angeschlossenen Arbeitskammer (5) eine Druckabfallstrecke (9) vorgesehen ist.

7. Feststeller nach Anspruch 6,
dadurch gekennzeichnet,
daß die Druckabfallstrecke (9) in dem ersten Durchflußanschluß (9) gebildet ist.

8. Feststeller nach einem der Ansprüche 1 - 7,
dadurch gekennzeichnet,
daß die zweiten Durchflußanschlüsse (33,32) der beiden Drosselstellen (33-11,32-12) von den Enden eines Verbindungskanals (8) gebildet sind, welcher die beiden Drosselstellen (33-11,32-12) miteinander verbindet.

9. Feststeller nach einem der Ansprüche 1 - 8,
dadurch gekennzeichnet,
daß die beiden Drosselstellen (33-11,32-12) in einem gemeinsamen Fluidleitungskörper (7) untergebracht sind.

10. Feststeller nach Anspruch 9,
dadurch gekennzeichnet,
daß Durchflußkammern (31,30) der beiden Drosselstellen (33-11,32-12) in dem Fluidleitungskörper (7) koaxial angeordnet und durch eine Trennwand (7c) voneinander getrennt sind, welche von einem die Durchflußkammern (31,30) der beiden Drosselstellen (33-11,32-12) verbindenden Verbindungskanal (8) durchsetzt ist, wobei die Einmündungen des Verbindungskanals (8) in die Durchflußkammern (31,30) die zweiten Durchflußanschlüsse (33,32) der beiden Drosselstellen (33-11,32-12) bilden.

11. Feststeller nach einem der Ansprüche 1 - 10,
dadurch gekennzeichnet,
daß die eine Feststeller-Baugruppe als ein Zylinder (3) und die andere als eine Kolbenstangeneinheit (4,7) mit einem Trennkolben (7) zwischen zwei Arbeitskammern ( 5, 6 ) ausgebildet ist.

12. Feststeller nach Anspruch 11,
dadurch gekennzeichnet,
daß der Fluidleitungskörper (7) ein Teil der Kolbenstangeneinheit (4,7) ist.

13. Feststeller nach Anspruch 12,
dadurch gekennzeichnet,
daß der Fluidleitungskörper (7) wenigstens zum Teil von dem Trennkolben (7) gebildet ist.

14. Feststeller nach einem der Ansprüche 1 - 13,
dadurch gekennzeichnet,
daß in einem Trennkolbenkörper des Trennkolbens (7) im wesentlichen zueinander konzentrisch je eine Drosselkörper-Aufnahmekammer (15,16) der beiden Drosselstellen (33-11,32-12) untergebracht und durch eine einstückige Trennwand (7c) des Trennkolbenkörpers voneinander getrennt sind, und daß voneinander abgelegene Enden dieser Drosselkörper-Aufnahmekammern (15,16) durch je einen Stopfen (4,25) verschlossen sind, welche mit dem Trennkolbenkörper verbunden sind, und von denen mindestens einer (4) von einem Kolbenstangenabschnitt (4) gebildet ist.

15. Feststeller nach Anspruch 14,
dadurch gekennzeichnet,
daß die Stopfen (4,25) in Verlängerungen (39,38) der Drosselkörper-Aufnahmekammern (15,16) eingesetzt und darin festgemacht sind.

16. Feststeller nach Anspruch 15,
dadurch gekennzeichnet,
daß die Verlängerungen (39,38) der Drosselkörper-Aufnahmekammern (15,16) größeren Durchmesser besitzen als die Drosselkörper-Aufnahmekammern (15,16) selbst und daß die Stopfen (4,25) in axialer Richtung an jeweils einer Übergangsschulter zwischen einer Drosselkörper-Aufnahmekammer (15,16) und der Verlängerung (39,38) anstoßen.

17. Feststeller nach Anspruch 15,oder 16,
dadurch gekennzeichnet,
daß die Stopfen (4,25) in den Verlängerungen (39,38) der Drosselkörper-Aufnahmekammern (15,16) durch Deformation des Trennkolbenkörpers fixiert sind.

18. Feststeller nach Anspruch 17,
dadurch gekennzeichnet,
daß Endabschnitte (7e,7f) des Trennkolbenkörpers über Endverdickungen (40, 41) der Stopfen (4,25) übergebördelt sind.

19. Feststeller nach einem der Ansprüche 14 - 18,
dadurch gekennzeichnet,
daß die ersten Durchflußanschlüsse (9,10) der Durchflußkammern (31,30) von Radialbohrungen des Trennkolbenkörpers gebildet sind und daß diese Radialbohrungen (9,10) in Ringräume (36,37) münden, welche zwischen je einem verjüngten Endabschnitt (7e, 7f) des Trennkolbenkörpers und einer Innenumfangsfläche (3c) des Zylinders (3) gebildet sind.

20. Feststeller nach einem der Ansprüche 14 - 19,
dadurch gekennzeichnet,
daß der Trennkolbenkörper an mittlerer Stelle seiner Länge in Achsrichtung des Zylinders (3) eine Verdickung (7b) aufweist, welche an einer Innenumfangsfläche (3c) des Zylinders (3) ggf. unter Vermittlung einer Dichtungsanordnung (7a) anliegt.

21. Feststeller nach einem der Ansprüche 14 - 20,
dadurch gekennzeichnet,
daß die auf einen in der jeweiligen Drosselkörper-Aufnahmekammer (15,16) aufgenommenen Drosselkörper (11,12) einwirkenden Vorspannmittel (13,14) wenigstens zum Teil innerhalb des jeweiligen Stopfens (4,25) untergebracht sind.

22. Feststeller nach einem der Ansprüche 1 - 21,
dadurch gekennzeichnet,
daß die Arbeitskammern (5,6) in einem oder mehreren Abschnitten des relativen Bewegungsbereichs durch einen Fluiden-By-Pass (3d) überbrückbar sind.

23. Feststeller nach Anspruch 22,
dadurch gekennzeichnet,
daß die Arbeitskammern (5,6) in einem oder in zwei Endabschnitten des relativen Bewegungsbereichs durch den Fluiden-By-Pass (3d) überbrückbar sind.

24. Feststeller nach einem der Ansprüche 1 - 23,
dadurch gekennzeichnet,
daß er zur Feststellung von Türen, Fenstern, Klappen oder dgl. gegenüber einem jeweiligen Rahmen ausgebildet ist.

25. Feststeller nach einem der Ansprüche 1 - 24,
dadurch gekennzeichnet,
daß er einen elektrischen Schalter (53,54) umfaßt.

26. Feststeller nach einem der Ansprüche 1 - 25,
dadurch gekennzeichnet,
daß der relative Bewegungsbereich an mindestens einem Ende durch elastische Anschlagmittel (52) begrenzt ist.

27. Feststeller nach einem der Ansprüche 11 - 26,
dadurch gekennzeichnet,
daß die Kolbenstangeneinheit (4,7) mit einer Kolbenstangenverlängerung (25) ausgeführt ist, wobei die Kolbenstangenverlängerung (25) annähernd gleichen Querschnitt besitzt wie die Kolbenstange (4), und daß die Kolbenstange (4) und die Kolbenstangenverlängerung (25) durch je eine Endwand (44,46) dichtend hindurchgeführt sind.

28. Feststeller nach einem der Ansprüche 11 - 26,
dadurch gekennzeichnet,
daß bei Flüssigkeitsfüllung in den Arbeitskammern (105, 106) angrenzend an mindestens eine Arbeitskammer (106) ein Kompensationsvolumen innerhalb des Zylinders (103) vorgesehen ist.

29. Feststeller nach Anspruch 28,
dadurch gekennzeichnet,
daß das Kompensationsvolumen von einer beweglichen Trennwand und einem diese bewegliche Trennwand (165) beaufschlagenden Vorspannmittel (166) gebildet ist.

30. Feststeller nach Anspruch 29,
dadurch gekennzeichnet,
daß zwischen dem Trennkolben (107) und der beweglichen Trennwand (165) ein Trennelement (160) zylinderfest angeordnet ist und daß dieses Trennelement (160) zwei in gegenläufiger Richtung durchlässige Einweg-Ventile (161-162, 163-164) aufweist, von denen eines (161-162) mit größerer und ein anderes (163-164) mit kleinerer Schließkraft beaufschlagt ist, wobei das mit größerer Schließkraft beaufschlagte Einweg-Ventil (161-162) bei Einfahren der Kolbenstange (104) eine Verbindung von einer an den Trennkolben (107) angrenzenden Teilarbeitskammer (106b) zu einer an die bewegliche Trennwand (165) angrenzenden Teilarbeitskammer (106a) öffnet.

31. Feststeller nach Anspruch 30,
dadurch gekennzeichnet,
daß das von der trennkolbenseitigen Teilarbeitskammer (106b) zu der trennwandseitigen Teilarbeitskammer (106a) öffnende, mit größerer Schließkraft belastete Einweg-Ventil (161-162) bei einem Druck in der zugehörigen Arbeitskammer (106b) öffnet, welcher größer ist als derjenige Druckwert in dieser Arbeitskammer (106b), welcher zu einer Öffnung beider Drosselstellen (133-111,132-112) führt.

32. Feststeller nach Anspruch 27,
dadurch gekennzeichnet,
daß an mindestens eine der Arbeitskammern (5,6) ein elastischer Kompensationsraum (51) angrenzt, wobei die zur Einengung dieses elastischen Kompensationsraums (51) notwendige Kraft auf die Kolbenstangeneinheit (4,7) größer ist als eine zur Erzeugung des ersten Druckwerts notwendige Kraft.

33. Fluidenaustauschsystem zwischen zwei Arbeitskammern (305,306), insbesondere eines als Zylinderkolbenaggregat (303,304) ausgebildeten Feststellers nach einem der Ansprüche 1-32, umfassend eine innerhalb eines Fluidleitungskörpers (307) untergebrachte Durchflußkammer (330), wobei diese Durchflußkammer (330) durch einen in ihr beweglich angebrachten Abdichtkolben (312) begrenzt ist,
wobei weiter diese Durchflußkammer (330) über einen Erstanschluß (332) mit der einen Arbeitskammer (305) verbindbar ist,
wobei weiter ein ständig offener Zweitanschluß (310) der Durchflußkammer (330) zu der anderen Arbeitskammer (306) führt,
wobei weiter eine erstanschlußseitige Endfläche (322, 335) des Abdichtkolbens (312) durch ein Abdichtkolben-Vorspannmittel (314) in eine Schließstellung gegen den Erstanschluß (332) vorgespannt ist,
wobei weiter die erstanschlußseitige Endfläche (322,335) einem durch den Erstanschluß (332) auf sie einwirkenden Fluid in der Schließstellung einen kleineren Fluidbeaufschlagungsquerschnitt (322) darbietet,
und wobei die erstanschlußseitige Endfläche (322,335) einem in der Durchflußkammer (330) herrschenden Fluidendruck einen größeren Fluidbeaufschlagungsquerschnitt (335) darbietet,
**dadurch gekennzeichnet**,
daß dem Zweitanschluß (310) eine Druckabfallstrecke zugeordnet ist und daß eine von dem Erstanschluß (332) zu dem Zweitanschluß (310) hin gerichtet verlaufende Strömungsstrecke bei Durchstromung in dieser Richtung bypass-frei ist derart, daß bei einem vorbestimmten, auf den kleineren Fluidbeaufschlagungsquerschnitt (322) einwirkenden Mindestdruck die erstanschlußseitige Endfläche (322,335) von dem Erstanschluß (332) abhebt und danach der größere Fluidbeaufschlagungsquerschnitt (335) innerhalb der Durchflußkammer (330) einem Druck ausgesetzt ist, welcher von der Strömungsrate durch die Durchflußkammer (330) abhängig ist und den Erstanschluß (332) bis zum Unterschreiten einer vorbestimmten Mindestdurchflußrate offen hält.

34. Fluidenaustauschsystem nach Anspruch 33,
dadurch gekennzeichnet,
daß der Fluidleitungskörper (307) innerhalb eines zylindrischen Hohlraums (305,306) im wesentlichen konzentrisch zu diesem untergebracht ist, wobei der Erstanschluß (332) in Richtung der Achse des zylindrischen Hohlraums (305,306) verlaufend mit einer Erstanschlußkammer (305) innerhalb des zylindrischen Hohlraums in Verbindung steht und diese Erstanschlußkammer (305) wiederum mit der einen Arbeitskammer in Verbindung steht oder diese bildet und wobei weiter der Zweitanschluß (310) im wesentlichen radial zur Achse des zylindrischen Hohlraums (305,306) angeordnet und mit einer Verbindungsleitung (337) verbunden ist, welche - vorzugsweise ringzylindrisch zwischen dem Fluidleitungskörper (307) und einer Innenumfangsfläche des zylindrischen Hohlraums (305,306) verlaufend - zu der anderen Arbeitskammer (306) führt.

35. Fluidenaustauschsystem nach Anspruch 33 oder 34,
dadurch gekennzeichnet,
daß die Druckabfallstrecke von dem als Bohrung ausgestalteten Zweitanschluß (310) selbst gebildet ist.

36. Fluidenaustauschsystem nach Anspruch 34 oder 35,
dadurch gekennzeichnet,
daß der Erstanschluß (332) und der Zweitanschluß (310) durch eine Ringdichtung (307a) voneinander getrennt sind, welche zwischen einer Außenumfangsfläche des Fluidleitungskörpers (307) und einer Innenumfangsfläche des zylindrischen Kohlraums (305,306) gebildet ist.

37. Fluidenaustauschsystem nach einem der Ansprüche 33-36,
dadurch gekennzeichnet,
daß der Fluidleitungskörper (307) innerhalb einer Trennkolbeneinheit (307) untergebracht ist, welche innerhalb eines Zylinderrohrs (303) angeordnet ist.

38. Fluidenaustauschsystem nach einem der Ansprüche 33-37,
dadurch gekennzeichnet,
daß das Abdichtkolben-Vorspannmittel (314) wenigstens zum Teil von einer Schraubendruckfeder (314) gebildet ist.

39. Fluidenaustauschsystem nach einem der Ansprüche 33-38,
dadurch gekennzeichnet,
daß das Abdichtkolben-Vorspannmittel (314) in einer abgeschlossenen Kammer (316) untergebracht ist, welche innerhalb des Fluidleitungskörpers (307) ausgebildet ist.

40. Fluidenaustauschsystem nach einem der Ansprüche 33-39,
dadurch gekennzeichnet,
daß das Abdichtkolben-Vorspannmittel wenigstens zum Teil von einem Fluidendruck in der anderen Arbeitskammer (506) abgeleitet ist.

41. Fluidenaustauschsystem nach einem der Ansprüche 33-40,
dadurch gekennzeichnet,
daß es zur Durchströmung in entgegengesetzten Durchströmungsrichtungen ausgebildet ist, wobei in einer ersten Durchströmungsrichtung (305 → 306) der Erstanschluß (332) als Eingang und der Zweitanschluß (310) als Ausgang wirkt und in einer zweiten Durchströmungsrichtung (306 → 305) der Zweitanschluß (310) als Eingang und der Erstanschluß (332) als Ausgang des Fluidenaustauschsystems wirken.

42. Fluidenaustauschsystem nach einem der Ansprüche 33-40,
dadurch gekennzeichnet,
daß es nur für Strömung von der einen (505) zur anderen (506) Arbeitskammer vorgesehen ist und daß für eine Fluidenströmung von der anderen Arbeitskammer (506) zu der einen Arbeitskammer (505) ein druckdifferenzabhängig öffnendes Rückschlagventil (570,575) vorgesehen ist.

43. Fluidenaustauschsystem nach Anspruch 42,
dadurch gekennzeichnet,
daß das Rückschlagventil (570,575) als ein Schieberventil ausgebildet ist, wobei der Fluidleitungskörper (570) als Ventilschieber innerhalb eines zylindrischen Hohlraums (577) ausgebildet, in eine Schließstellung vorgespannt und durch einen von dem Druck in der anderen Arbeitskammer (506) abgeleiteten Druck in eine Öffnungsstellung tiberführbar ist.

44. Zylinderkolbenaggregat unter Verwendung eines Fluidenaustauschsystems nach einem der Ansprüche 33-43,
dadurch gekennzeichnet,
daß das Fluidenaustauschsystem innerhalb einer Trennkolbeneinheit (307) des Zylinderkolbenaggregats untergebracht ist, welche zwei Arbeitskammern (305,306) innerhalb eines Zylinderrohrs (303) des Zylinderkolbenaggregats (303,304) voneinander trennt.

45. Zylinderkolbenaggregat,
dadurch gekennzeichnet,
daß innerhalb der Trennkolbeneinheit (7) zwei Fluidenaustauschsysteme nach einem der Ansprüche 33-41 zwischen den beiden Arbeitskammern (5,6) des Zylinderkolbenaggregats (3,4) in Reihe geschaltet angeordnet sind, und zwar so, daß die Erstanschlüsse (21,22) der beiden Fluidenaustauschsysteme miteinander verbunden sind, während die Zweitanschlüsse (9,10) der beiden Fluidenaustauschsysteme je mit einer Arbeitskammer (5 bzw. 6) des Zylinderkolbenaggregats (3,4) verbunden sind.

46. Zylinderkolbenaggregat nach Anspruch 45,
dadurch gekennzeichnet,
daß die Trennkolbeneinheit (7) mit den beiden in Reihe geschalteten Fluidenaustauschsystemen innerhalb eines Zylinderrohrhohlraums (5,6) untergebracht ist, welcher an seinen beiden Enden mit je einer Durchführungs- und Dichtungseinheit (44,45;46,26) abgeschlossen ist, wobei eine mit der Trennkolbeneinheit (7) verbundene Kolbenstange (4) durch die eine (44,45) der Führungs- und Dichtungseinheiten dichtend hindurchgeführt ist und ein mit der Trennkolbeneinheit (7) verbundener Kolbenstangenfortsatz (25) durch die andere (46;26) der Führungs- und Dichtungseinheiten hindurchgeführt ist.

47. Zylinderkolbenaggregat nach Anspruch 44,
dadurch gekennzeichnet,
daß die Trennkolbeneinheit (307) innerhalb eines Zylinderrohrhohlraums (305,306) untergebracht ist, welcher an einem Ende (bei 365) über seinen gesamten Querschnitt abgeschlossen ist und nur an seinem anderen Ende (bei 344,345) eine Führungs- und Dichtungseinheit aufweist, wobei eine Kolbenstange (304) mit der Trennkolbeneinheit verbunden und durch die Führungs- und Dichtungseinheit (344,345) hindurchgeführt ist und wobei Maßnahmen (365, 366) zur Kompensation der Veränderung des Verdrängungsvolumens der Kolbenstange (304) innerhalb des Zylinderrohrhohlraums (305,306) bei Verschiebung der Kolbenstange (304) gegenüber dem Zylinderrohrhohlraum (305, 306) getroffen sind, welche eine Ausschubkraft auf die Kolbenstange (304) erzeugen.

48. Zylinderkolbenaggregat nach Anspruch 47,
dadurch gekennzeichnet,
daß bei Vorhandensein nur eines einzigen Fluidenaustauschsystems innerhalb der Trennkolbeneinheit (307) dessen Erstanschluß (332) mit einer kolbenstangenseitigen Arbeitskammer (305) des Zylinderrohrhohlraums (305,306) verbunden ist, im folgenden genannt die Stangenkammer (305), und daß der Zweitanschluß (310) dieses Fluidenaustauschsystems mit einer kolbenstangenfernen Arbeitskammer (306) des Zylinderkolbenaggregats (303,304) verbunden ist, im folgenden genannt die Bodenkammer (306).

49. Zylinderkolbenaggregat nach Anspruch 48,
dadurch gekennzeichnet,
daß bei Füllung der Stangenkammer (305) und der Bodenkammer (306) mit einem inkompressiblen Fluid die Bodenkammer (306) durch eine stationäre Trennwandeinheit (460) in eine kolbenstangennahe Teilbodenkammer (306b) und eine kolbenstangenferne Teilbodenkammer (306a) unterteilt ist, daß angrenzend an die kolbenstangenferne Teilbodenkammer (306a) ein elastisch komprimierbares Ausgleichsvolumen (366,365) vorgesehen ist und daß in der stationären Trennwandeinheit (460) ein weiteres Fluidenaustauschsystem nach einem der Ansprüche 33-43 vorgesehen ist, und zwar so, daß dessen Erstanschluß (432) mit der kolbenstangennahen Teilbodenkammer (306b) in Verbindung steht.

50. Zylinderkolbenaggregat nach Anspruch 47,
dadurch gekennzeichnet,
daß ein Kolbenhohlkörper (507b) der Trennkolbeneinheit (507) mit der Kolbenstange (504) verbunden ist, welcher gegen eine Innenumfangswand des Zylinderrohrhohlraums (505, 506) dichtend anliegt, daß innerhalb dieses Kolbenhohlkörpers der Fluidleitungskörper (570) des Fluidenaustauschsystems untergebracht ist, und zwar in der Weise, daß der Erstanschluß (532) der Durchflußkammer (530) mit einer kolbenstangenseitigen Arbeitskammer (505), genannt Stangenkammer, des Zylinderrohrhohlraums (505,506) in Verbindung steht und daß der Fluidleitungskörper (570) als Ventilschieber mit dem Kolbenhohlkörper zur Bildung eines Rückschlagventils (575,570) zusammenwirkt, welches von einer kolbenstangenfernen Arbeitskammer (506) des Zylinderrohrhohlraums (505,506), genannt bodenseitige Arbeitskammer (506), zur stangenseitigen Arbeitskammer (505) führt.

51. Konstruktionsbaugruppe
umfassend eine Grundkonstruktion (580) und ein bewegliches Konstruktionselement (581), welches gegen Schwerkraftwirkung zwischen einer unteren Endstellung und einer oberen Endstellung relativ zur Grundkonstruktion (580) durch Führungsmittel (582) geführt und verstellbar ist,
wobei zur erleichterten Überführung des beweglichen Konstruktionselements (581) zwischen der unteren Endstellung und der oberen Endstellung und zur Feststellung des beweglichen Konstruktionselements (581) in Zwischenstellungen mindestens ein mit Druckfluid gefülltes Zylinderkolbenaggregat (503,504) vorgesehen ist,
wobei weiter dieses Zylinderkolbenaggregat (503,504) ausgeführt ist mit einem Zylinderrohr (503), einem innerhalb dieses Zylinderrohrs ausgebildeten Zylinderrohrhohlraum (505,506), einer Führungs- und Dichtungseinheit (544,545) am einen Ende des Zylinderrohrhohlraums (505,506), einem dichtenden Abschluß am anderen Ende des Zylinderrohrhohlraums (505,506), einer durch die Führungs- und Dichtungseinheit (544,545) eingeführten Kolbenstange (504), einer innerhalb des Zylinderrohrhohlraums (505,506) mit der Kolbenstange (504) verbundenen Trennkolbeneinheit (507), einer Stangenkammer (505) auf der Kolbenstangenseite der Trennkolbeneinheit (507), einer Bodenkammer (506) auf der kolbenstangenfernen Seite der Trennkolbeneinheit (507) und einer Druckfluidfüllung in der Stangenkammer (505) und in der Bodenkammer (506),
wobei weiter Maßnahmen zur Kompensation von Veränderungen des Verdrängungsvolumens der Kolbenstange (504) innerhalb des Zylinderrohrhohlraums (505,506) bei Verschiebungen der Kolbenstange (504) gegenüber dem Zylinderrohrhohlraum (505,506) getroffen sind, welche eine Ausschubkraft auf die Kolbenstange (504) erzeugen,
wobei weiter ein Fluidenaustauschsystem, insbesondere nach einem der Ansprüche 33-43, zwischen der Stangenkammer (505) und der Bodenkammer (506) vorgesehen ist, wobei weiter von den beiden Teilen Zylinderrohr (503) und Kolbenstange (504) der eine (504) mit der Grundkonstruktion (580) und der andere (503) mit dem beweglichen Konstruktionselement (581) verbunden ist
und wobei das Gewicht des beweglichen Konstruktionselements (581), die Führungsmittel (582) des beweglichen Konstruktionselements (581), die Angriffspunkte (585, 586) zwischen dem Zylinderkolbenaggregat (503,504), der Grundkonstruktion (580) und dem beweglichen Konstruktionselement (581), der Querschnitt (Q1) des Zylinderrohrhohlraums (505,506), der Querschnitt (Q3) der Kolbenstange (504), die Fluidenfüllung in dem Zylinderrohrhohlraum (505,506) und das Fluidenaustauschsystem derart ausgebildet und bemessen sind, daß die folgenden Bedingungen erfüllt sind:
a) Wenn das bewegliche Konstruktionselement (581) sich in einer Zwischenstellung in Ruhelage befindet, sind die Bodenkammer (506) und die Stangenkammer (505) voneinander getrennt und das bewegliche Konstruktionselement (581) ist durch ein in der Bodenkammer (506) enthaltenes Bodenkammerfluid gegen Absinken und durch ein in der Stangenkammer (505) enthaltenes Stangenkammerfluid gegen Steigen gesichert, indem
aa) der an einem Vollquerschnitt (Q1) der Trennkolbeneinheit (507) anliegende Druck (P1) des Bodenkammerfluids auf die Trennkolbeneinheit (507) eine Ausschubwirkung ausübt,
ab) durch diese Ausschubwirkung in der Stangenkammer (505) ein Druck des Stangenkammerfluids erzeugt wird, der an dem Differenzquerschnitt (Q2) zwischen dem Vollquerschnitt (Q1) der Trennkolbeneinheit (507) und einem Stangenquerschnitt (Q3) der Kolbenstange (504) anliegend eine Einschubwirkung auf die Trennkolbeneinheit (507) ausübt,
ac) die vom Stangenkammerdruck (P2) erzeugte Einschubwirkung zusammen mit einer vom Gewicht des beweglichen Konstruktionselements (581) ausgehenden zusätzlichen Einschubwirkung (FG) der Ausschubwirkung das Gleichgewicht hält, wobei der Druck (P2) in der Stangenkammer (505) größer ist als der Druck (P1) in der Bodenkammer (506),
ad) ein von der Stangenkammer (505) zur Bodenkammer (506) öffnendes Anheberückschlagventil-System (532,512, 514) dem Druck in der Stangenkammer (505) mit einem kleineren Fluidbeaufschlagungsquerschnitt (522) ausgesetzt und so eingestellt ist, daß es im Gleichgewichtszustand durch den Druck in der Stangenkammer (505) nicht geöffnet werden kann,
ae) ein von der Bodenkammer zur Stangenkammer öffnendes Senkrückschlagventil-System (574) dem Druck in der Bodenkammer (506) ausgesetzt und so eingestellt ist, daß es im Gleichgewichtszustand durch den Druck in der Bodenkammer (506) nicht geöffnet werden kann;
b) eine geringfügige, kurzzeitige Fremdhubkrafteinwirkung (FH) auf das bewegliche Konstruktionselement (581) führt zu einer Steigerung des auf den kleinen Fluidbeaufschlagungsquerschnitt (522) des Anheberückschlagventil-Systems (532,512,514) einwirkenden Drucks in der Stangenkammer (505), welche zu einer Öffnung des Anheberückschlagventil-Systems (532,512,514) führt;
ba) ist das Anheberückschlagventil-System (532,512, 514) einmal geöffnet, so findet eine Fluidenströmung von der Stangenkammer (505) zur Bodenkammer (506) statt;
bb) die Strömung von der Stangenkammer (505) zur Bodenkammer (506) erfährt einen Druckabfall in einer zwischen dem Anheberückschlagventil-System (532,512,514) und der Bodenkammer (506) gelegenen Druckabfallstrecke (510);
bc) infolge dieses Druckabfalls wird innerhalb des Anheberückschlagventil-Systems (532,512,514) ein Zwischendruck (PZ) eingestellt, welcher großer ist als der Druck in der Bodenkammer (506); dieser Zwischendruck (PZ) wirkt auf einen größeren Fluidbeaufschlagungsquerschnitt (535) des Anheberückschlagventil-Systems (532,512,514) im Sinne einer Öffnung des Anheberückschlagventil-Systems (532,512,514) ein; infolge der Fluidenströmung von der Stangenkammer (505) durch das Anheberückschlagventil-System (532,512,514) zur Bodenkammer (506) sinkt der Druck in der Stangenkammer (505) ab; das Gleichgewicht ist gestört und die Kolbenstange (504) wird aus dem Zylinderrohr (503) ausgeschoben;
bd) die Ausschiebung der Kolbenstange (504) aus dem Zylinderrohr (503) bewirkt fortgesetzte Strömung von der Stangenkammer (505) zur Bodenkammer (506); diese fortgesetzte Strömung sorgt weiterhin für die Aufrechterhaltung eines Zwischendrucks (PZ) in dem Anheberückschlagventil-System (532,512,514); dieser Zwischendruck (PZ) wirkt weiterhin auf den größeren Fluidbeaufschlagungsquerschnitt (535) des Anhebertickschlagventil-Systems (532,512,514) und hält dieses offen, auch wenn die Fremdhubkrafteinwirkung (FH) aufhört; die Ausschubbewegung der Kolbenstange (504) und damit die Anhebung des beweglichen Konstruktionselements (581) werden also durch die Wirkung des Zylinderkolbenaggregats (503,504) fortgesetzt, ohne daß die fortgesetzte Anlegung einer Fremdhubkraft (FH) notwendig ist;
be) wenn während der fortgesetzten Ausschubbewegung der Kolbenstange (504) kurzfristig eine Niederhaltekraft (FN) an das bewegliche Konstruktionselement (581) angelegt wird, so sinkt die Strömungsrate durch das Anheberückschlagventil-System (532,512,514); der auf den größeren Fluidbeaufschlagungsquerschnitt (535) des Anheberückschlagventil-Systems (532,512,514) wirkende Zwischendruck (PZ) sinkt ab; das Anheberückschlagventil-System (532,512,514) wird wieder geschlossen; das bewegliche Konstruktionselement (581) kommt zum Stillstand und bleibt stehen, auch wenn die Niederhaltekraft (FN) wieder aufhört;
c) wenn das bewegliche Konstruktionselement (581) sich in einer Zwischenstellung in Ruhelage befindet, kann es durch eine kleine Senkkraft (FS) in Richtung auf die untere Endstellung bewegt werden, indem
ca) zunächst eine Vergrößerung des Drucks (P1) in der Bodenkammer (506) eintritt, wobei eine geringfügige Vergrößerung des Drucks (P1) in der Bodenkammer (506) zu einer Öffnung des Senkrückschlagventil-Systems (574) führt,
cb) demzufolge ein annähernder Druckausgleich zwischen der Bodenkammer (506) und der Stangenkammer (505) eintritt und
cc) der nach Eintritt dieses annähernden Druckausgleichs zwischen Stangenkammer (505) und Bodenkammer (506) in den beiden Kammern herrschende Druck auf den Kolbenstangenquerschnitt (Q3) einwirkend eine Stangenausschubkraft ergibt, welche die schwerkraftbedingte Kolbenstangeneinschubwirkung des beweglichen Konstruktionselements (581) auf die Kolbenstange (504) nur geringfügig übersteigt, so daß sie durch die bis zum Erreichen einer gewünschten tieferen Stellung des beweglichen Konstruktionselements (581) dauernd anzulegende Senkkraft (FS) überwunden werden kann.

## Claims

1. A locking device for securing against external forces two objects movable relative to one another, in two opposite directions of movement, the locking device generating in both directions of movement a restraining force counteracting the initiation of movement and - smaller compared with the restraining force - a movement resistance counteracting continued movement, whereby this locking device is furthermore constructed with two locking device sub-assemblies (3; 4, 7) movable relative to one another, of which one (3) is coupled to one of the objects (at 2) and another (4, 7) is coupled to the other of the objects (at 1), whereby furthermore due to the relative movement of these locking device sub-assemblies (3; 4, 7) at least two variable-volume working chambers (5, 6) containing a working fluid can be influenced in the size of their respective working volume such that the volumetric ratio of these working chambers (5, 6) changes in contrary direction as a function of the direction of movement, whereby furthermore these working chambers (5, 6) are connected to each other by a fluid exchange system (36, 9, 31, 33, 8, 32, 30, 10, 37), which allows an exchange of fluid between the two working chambers (5, 6) in both exchange directions, i.e. so that the resistance to fluid throughflow during a fluid exchange process is greater at its start than during its further progress,
characterised in that
the fluid exchange system (36, 9, 31, 33, 8, 32, 30, 10, 37) has a series connection of two throttle means (33-11, 32-12), which are pretensioned towards a closed position and through which flow is possible in both directions, each throttle means having a first throughflow connection (9, 10) in association with an associated working chamber (5, 6) and a second throughflow connection (33) in association with the second throughflow connection (32) of the respective other throttle means, whereby a first pressure value at the first throughflow connection (9) of a throttle means (33-11) is sufficient to open both throttle means (33-11, 32-12), and a second smaller pressure value at the first throughflow connection (9) of the throttle means (33-11) is sufficient to maintain both throttle means (33-11, 32-12) open with continued throughflow.

2. Locking device according to Claim 1, characterised in that the first pressure value is the same for both throttle means (33-11, 32-12).

3. Locking device according to Claim 1, characterised in that the first pressure value is different for the two throttle means (33-11, 32-12).

4. Locking device according to one of Claims 1-3, characterised in that the second pressure value is the same for both throttle means (33-11, 32-12).

5. Locking device according to one of Claims 1-3, characterised in that the second pressure value is different for the two throttle means (33-11, 32-12).

6. Locking device according to one of Claims 1-5, characterised in that a throttle means (33-11) comprises a throughflow chamber (31) with a first (9) and a second (33) throughflow connection and a throttle member (11), which is movable along a movement path and seals the throughflow chamber (31), adjoining said throughflow chamber (31), whereby the throttle member (11) is pretensioned towards a closed position by the action pretensioning means (13), in said closed position the second throughflow connection (33) is separated from the throughflow chamber (31), whereby furthermore the first throughflow connection (9) is constantly connected to the throughflow chamber (31), whereby further in the closed position of the throttle member (11) this member (11) offers a smaller working surface (21) for application of a fluid pressure prevailing at the second throughflow connection (33) and a larger working surface (34) in the same direction of application of a fluid pressure prevailing in the throughflow chamber (31), and whereby a pressure drop path (9) is provided between the throughflow chamber (31) of the throttle means (33-11) and the associated working chamber (5) which is connected thereto via the first throughflow connection (9).

7. Locking device according to Claim 6, characterised in that the pressure drop path (9) is formed in the first throughflow connection (9).

8. Locking device according to one of Claims 1-7, characterised in that the second throughflow connections (33, 22) of the two throttle means (33-11, 32-12) are formed by the ends of a connecting passage (8) which connects the two throttle means (33-11, 32-12) to each other.

9. Locking device according to one of Claims 1-8, characterised in that the two throttle means (33-11, 32-12) are accommodated in a common fluid conducting member (7).

10. Locking device according to Claim 9, characterised in that throughflow chambers (31, 30) of the two throttle means (33-11, 32-12) are disposed coaxially in the fluid conducting body (7) and are separated from one another by a partition (7c) traversed by a connecting passage (8) connecting the throughflow chambers (31, 30) of the two throttle means (33-11, 32-12), the mouths of the connecting passage (8) into the throughflow chambers (31, 30) forming the second throughflow connections (33, 32) of the two throttle means (33-11, 32-12).

11. Locking device according to one of Claims 1-10, characterised in that one locking device sub-assembly is constructed as a cylinder (3) while the other is constructed as a piston rod unit (4, 7) with a separating piston (7) between two working chambers (5, 6).

12. Locking device according to Claim 11, characterised in that the fluid conducting member (7) is a part of the piston rod unit (4, 7).

13. Locking device according to Claim 12, characterised in that the fluid conducting member (7) is at least partially formed by the separating piston (7).

14. Locking device according to one of Claims 1-13, characterised in that in each separating piston member of the separating piston (7), a respective throttle member accommodating chamber (15, 16) of the two throttle means (33-11, 32-12) is accommodated, these being arranged substantially concentric to each other and separated from one another by a one-piece partition (7c) of the separating piston member; and that remotely disposed ends of these throttle member accommodating chambers (15, 16) are each sealed by a respective plug (4, 25), said plugs being connected to the separating piston member and at least one (4) of them being formed by a piston rod portion (4).

15. Locking device according to Claim 14, characterised in that the plugs (4, 25) are inserted into extensions (39, 38) of the throttle member accommodating chambers (15, 16) and made rigid therein.

16. Locking device according to Claim 15, characterised in that the extensions (39, 38) of the throttle member accommodating chambers (15, 16) are larger in diameter than the throttle member accommodating chambers (15, 16) themselves; and that the plugs (4, 25) respectively abut in axial direction a transition shoulder between a throttle member accommodating chamber (15, 16) and the extension (39, 38).

17. Locking device according to Claim 15 or 16, characterised in that the plugs (4, 25) are fixed in the extensions (39, 38) of the throttle member accommodating chambers (15, 16) by deformation of the separating piston member.

18. Locking device according to Claim 17, characterised in that the end portions (7e, 7f) of the separating piston member are flanged over thickened end portions (40, 41) of the plugs (4, 25).

19. Locking device according to one of Claims 14-18, characterised in that the first throughflow connections (9, 10) of the throughflow chambers (31, 30) are formed by radial bores in the separating piston member; and that these radial bores (9, 10) open out into annular spaces (36, 37), which are formed between a respective tapered end portion (7e, 7f) of the separating piston member and an inner peripheral surface (3c) of the cylinder (3).

20. Locking device according to one of Claims 14-19, characterised in that at a central location of its length in an axial direction of the cylinder (3), the separating piston member has a thickening (7b) which abuts against an inner peripheral surface (3c) of the cylinder (3), possibly through provision of a gasket arrangement (7a).

21. Locking device according to one of Claims 14-20, characterised in that pretensioning means (13, 14) acting on a throttle member (11, 12) accommodated in the respective accommodating chamber (15, 16) are at least partially accommodated within the respective plug (4, 25).

22. Locking device according to one of Claims 1-21, characterised in that the working chambers (5, 6) can be bridged by a fluid bypass (3d) in one or more portions of a relative path of movement.

23. Locking device according to Claim 22, characterised in that the working chambers (5, 6) can be bridges by the fluid bypass (3d) in one or in two end portions of the relative path of movement.

24. Locking device according to one of Claims 1-23, characterised in that it is constructed for securing doors, windows, flaps or the like in relation to a respective frame.

25. Locking device according to one of Claims 1-24, characterised in that it comprises an electric switch (53, 54).

26. Locking device according to one of Claims 1-25, characterised in that the relative range of movement is restricted on at least one end by resilient abutment means (52).

27. Locking device according to one of Claims 11-26, characterised in that the piston rod unit (4, 7) is constructed with a piston rod extension (25), said piston rod extension (25) having approximately the same cross-section as the piston rod (4); and that the piston rod (4) and the piston rod extension (25) are constructed to pass seal-tight through a respective end wall (44, 46).

28. Locking device according to one of Claims 11-26, characterised in that when there is a filling of liquid in the working chambers (105, 106) a compensating space adjoining at least one working chamber (106) is provided inside the cylinder (103).

29. Locking device according to Claim 28, characterised in that the compensating space is formed by a movable partition and a pretensioning means (166) acting upon this partition (165).

30. Locking device according to Claim 29, characterised in that between the separating piston (107) and the movable partition (165) a separating element (160) is arranged to be rigid with the cylinder; and that this separating element (160) has two one-way valves (161-162, 163-164) permitting passage in contrary directions, of which one (161-162) is subjected to a greater closing force and another (163-164) is subjected to a lesser closing force, whereby on retraction of the piston rod (104), the one-way valve (161-162) subjected to the greater closing force opens a connection between a partial working chamber (106b) adjacent to the separating piston (107) and a partial working chamber (106a) adjacent to the movable partition (165).

31. Locking device according to Claim 30, characterised in that the one-way valve (161-162), which is subjected to the greater closing force and opens from the partial working chamber (106b) on the separating piston side to the partial working chamber (106a) on the partition side, opens at a pressure in the associated working chamber (106b) which is greater than the pressure value in this working chamber (106b), causing both throttle means (133-111, 132-112) to open.

32. Locking device according to Claim 27, characterised in that a flexible compensating space (51) adjoins at least one of the working chambers (5, 6), whereby the necessary force applied to the piston rod unit (4, 7) to restrict this flexible compensating space (51) is greater than a force necessary to generate the first pressure value.

33. A system for fluid exchange between two working chambers (305, 306), especially of a locking device according to one of Claims 1-32 constructed in the form of a cylinder piston unit (303, 304), comprising a throughflow chamber (330) accommodated within a fluid conducting member (307), whereby this throughflow chamber (330) is confined by a sealing piston (312) movably attached therein, whereby furthermore this throughflow chamber (330) may be connected via a first connection (332) to one working chamber (305), whereby furthermore a constantly open second connection (310) of the throughflow chamber (330) leads to the other working chamber (306), whereby furthermore an end face (322, 335) of the sealing piston (312) on the same side as the first connection is pretensioned by a sealing piston pretensioning means (314) into a closed position against the first connection (332), whereby furthermore, in the closed position, the end face (322, 335) on the first connection side offers a smaller cross-section exposed to fluid (322) to a fluid acting upon it through the first connection (332), and whereby the end face (322, 335) on the first connection side offers a larger cross-section exposed to fluid (335) to a fluid pressure prevailing in the throughflow chamber (330), characterised in that a pressure drop path is allocated to the second connection (310); and that a flow path extending from the first connection (332) to the second connection (310) and extending towards the latter is bypass-free on throughflow in this direction in such a way that with a predetermined minimum pressure acting on the smaller cross-section exposed to fluid (322), the end face (322, 335) on the first connection side lifts from the first connection (332), and subsequently the larger cross-section exposed to fluid (335) within the throughflow chamber (330) is exposed to a pressure which is dependent on the flow rate through the throughflow chamber (330) and maintains the first connection (332) open until the throughflow rate falls below a predetermined minimum value.

34. Fluid exchange system according to Claim 33, characterised in that the fluid conducting member (307) is accommodated within a cylindrical cavity (305, 306) essentially concentrically thereto, whereby the first connection (332) extending in the direction of the axis of the cylindrical cavity (305, 306) communicates with a first connection (305) within the cylindrical cavity, and this first connection chamber (305) in turn connects with a working chamber or forms this, and whereby furthermore the second connection (310) is disposed substantially radially to the axis of the cylindrical cavity (305, 306) and is connected to a connecting line (337), which - extending preferably in the manner of an annular cylinder between the fluid conducting member (307) and an inner peripheral surface of the cylindrical cavity (305, 306) - leads to the other working chamber (306).

35. Fluid exchange system according to Claim 33 or 34, characterised in that the pressure drop path is formed by the second connection (310) itself which is constructed as a bore.

36. Fluid exchange system according to Claim 34 or 35, characterised in that the first connection (332) and the second connection (310) are separated from each other by an annular gasket (307a), which is formed between an outer peripheral surface of the fluid conducting member (307) and an inner peripheral surface of the cylindrical cavity (305, 306).

37. Fluid exchange system according to one of Claims 33-36, characterised in that the fluid conducting member (307) is accommodated within a separating piston unit (307) disposed inside a cylindrical tube (303).

38. Fluid exchange system according to one of Claims 33-37, characterised in that the sealing piston pretensioning means (314) is formed at least partially by a coil thrust spring (314).

39. Fluid exchange system according to one of Claims 33-38, characterised in that the sealing piston pretensioning means (314) is accommodated in a closed chamber (316) which is constructed inside the fluid conducting member (307).

40. Fluid exchange system according to one of Claims 33-39, characterised in that the sealing piston pretensioning means is at least partially derived from a fluid pressure in the other working chamber (506).

41. Fluid exchange system according to one of Claims 33-40, characterised in that it is constructed for throughflow in opposite directions, whereby in a first throughflow direction (305 → 306), the first connection (332) acts as an input while the second connection (310) acts as an output, and in a second throughflow direction (306 → 305), the second connection (310) acts as an input and the first connection (332) acts as an output of the fluid exchange system.

42. Fluid exchange system according to one of Claims 33-40, characterised in that it is only provided for flow from one (505) to another (506) working chamber; and that a fluid flow from the other working chamber (506) to the one working chamber (505), a non-return valve (570, 575) is provided which opens as a function of a pressure differential.

43. Fluid exchange system according to Claim 42, characterised in that the non-return valve (570, 575) is constructed as a slide valve, whereby the fluid conducting member (570) is constructed as a valve slide within a cylindrical cavity (577), is pretensioned into a closed position and can be moved into an open position by a pressure derived from the pressure in the other working chamber (506).

44. A cylinder-piston unit using a fluid exchange system according to one of Claims 33-43, characterised in that the fluid exchange system is accommodated inside a separating piston unit (307) of the cylinder-piston unit which separates two working chambers (305, 306) from each other within a cylindrical tube (303) of the cylinder-piston unit (303, 304).

45. Cylinder-piston, characterised in that within the separating piston unit (7), two fluid exchange systems according to one of Claims 33-41 are connected in series between the two working chambers (5, 6) of the cylinder-piston unit (3, 4), i.e. so that the first connections (21, 22) of the two fluid exchange systems are connected to each other, while the second connections (9, 10) of the two fluid exchange systems are each connected to a respective working chamber (5 or 6) of the cylinder-piston unit (3, 4).

46. Cylinder-piston unit according to Claim 45, characterised in that with the two series-connected fluid exchange systems, the separating piston unit (7) is accommodated within a cylindrical tubular cavity (5, 6), which is closed at its two ends by respective guiding and sealing units (44, 45; 46, 26), whereby a piston rod (4) connected to the separating piston unit (7) is guided through one (44, 45) of the guiding and sealing units so as to form a seal, and a piston rod extension (25) connected to the separating piston unit (7) is guided through the other (46; 26) of the guiding and sealing units.

47. Cylinder-piston unit according to Claim 44, characterised in that the separating piston unit (307) is accommodated within a cylindrical tubular cavity (305, 306), which is closed over its entire cross-section at one end (at 365) and has a guiding and sealing unit only at its other end (at 344, 345), whereby a piston rod (304) is connected to the separating piston unit and is guided through the guiding and sealing unit (344, 345), and whereby measures (365, 366) are adopted to compensate for the variation in the displacement volume of the piston rod (304) within the cylindrical tubular cavity (305, 306) upon displacement of the piston rod in relation to the cylindrical tubular cavity (305, 306), said measures generating a push-out force on the piston rod (304).

48. Cylinder-piston unit according to Claim 47, characterised in that in the presence of only one fluid exchange system within the separating piston unit (307), its first connection (332) is connected to a working chamber (305) of the cylindrical tubular cavity (305, 306) on the piston rod side, hereinafter referred to as the rod chamber (305); and that the second connection (310) of this fluid exchange system is connected to a work chamber (306) of the cylinder- piston unit (303, 304) remote from the piston rod, hereinafter referred to as the end chamber (306).

49. Cylinder-piston unit according to Claim 48, characterised in that when the rod chamber (305) and the end chamber (306) are filled with an incompressible fluid, the end chamber (306) is subdivided by a stationary partition unit (460) into a partial end chamber (306b) closed to the piston rod and a partial end chamber (306a) remote from the piston rod; that adjoining the partial end chamber (306a) remote from the piston rod, a resiliently compressible compensating space (366, 365) is provided; and that in the stationary partition unit (460), a further fluid exchange system according to Claims 33-43 is provided, i.e. such that its first connection (432) is connected to the partial end chamber (306b) closed to the piston rod.

50. Cylinder-piston unit according to Claim 47, characterised in that a hollow piston body (507b) of the separating piston unit (507) is connected to the piston rod (504) which abuts in a seal-tight manner against an inner peripheral wall of the cylindrical tubular cavity (505, 506); that the fluid conducting member (570) of the fluid exchange system is accommodated in this hollow piston body, i.e. in such a manner that the first connection (532) of the throughflow chamber (530) communicates with a working chamber (505) on the piston rod side, referred to as the rod chamber, of the cylindrical tubular cavity (505, 506); and that the fluid conducting member (570) as a slide valve member cooperates with the hollow piston body (507b) to form a non-return valve (575, 570) which conducts from a working chamber (506) of the cylindrical tubular cavity (505, 506) removed from the piston rod, referred to as the end chamber (506), to the working chamber (505) on the piston rod side.

51. Structural sub-assembly comprising a basic structure (580) and a movable structural element (581), which is adapted for movement guided by a guide means (582) against the force of gravity between a lower end position and an upper end position in relation to the basic structure (580), whereby to facilitate movement of the movable structural element (581) between the lower end position and the upper end position and to arrest the movable structural element (581) in intermediate positions, at least one cylinder-piston unit (503, 504) filled with pressurised fluid is provided, whereby furthermore this cylinder-piston unit (503, 504) is constructed with a cylindrical tube (503), a cylindrical tubular cavity (505, 506) constructed within this cylindrical tube, a guiding and sealing unit (544, 545) at one end of the cylindrical tubular cavity (505, 506), a seal-tight closure at the other end of the cylindrical tubular cavity (505, 506), a piston rod (504) inserted through the guiding and sealing unit (544, 545), a separating piston unit (507) connected inside the cylindrical tubular cavity (505, 506) to the piston rod (504), a rod chamber (505) on the piston rod side of the separating piston unit (507), an end chamber (506) on the side of the separating piston unit (507) remote from the piston rod and a filling of pressurised fluid in the rod chamber (505) and in the end chamber (506), whereby furthermore measures are taken to compensate for variations in the displacement volume of the piston rod (504) within the cylindrical tubular cavity (505, 506) upon displacements of the piston rod (504) in relation to the cylindrical tubular cavity (505, 506), said measures being to generate a push-out force on the piston (504), whereby furthermore a fluid exchange system, in particular according to Claims 33-43, is provided between the rod chamber (505) and the end chamber (506), whereby furthermore of the two parts: cylindrical tube (503) and piston rod (504), the one (504) is connected to the base structure (580) and the other (503) is connected to the movable structural element (581), and whereby the weight of the movable structural element (581), the guide means (582) of the movable structural element (581), the points of application (585, 586) between the cylinder-piston unit (503, 504), the base structure (580) and the movable structural element (581), the cross-section (Q1) of the cylindrical tubular cavity (505, 506), the cross-section (Q3) of the piston rod (504), the filling of fluid in the cylindrical tubular cavity (505, 506) and the fluid exchange system are constructed and dimensioned in such a way that the following conditions are met:
a) when the movable structural element (581) is located in an intermediate position at rest, the end chamber (506) and the rod chamber (505) are separated from one another and the movable structural element (581) is secured against sinking by an end chamber fluid contained in the end chamber (506) and against rising by a rod chamber fluid contained in the rod chamber (505), in that
aa) the pressure (P1) of the end chamber fluid applied to a full cross-section (Q1) of the separating piston unit (507) exerts a push-out effect on the separating piston unit (507),
ab) as a result of this push-out effect in the rod chamber (505), a pressure of the rod chamber fluid is generated which exerts on a differential cross-section (Q2) between the full cross-section (Q1) of the separating piston unit (507) and a rod cross-section (Q3) of the piston rod (504) a push-in effect on the separating piston unit (507),
ac) the push-in effect generated by the rod chamber pressure (P2), together with an additional push-in effect (FG) emanating from the weight of the movable structural element (581) maintains equilibrium with the push-out effect (FG), the pressure (P2) in the rod chamber (505) being greater than the pressure (P1) in the end chamber (506),
ad) a lifting non-return valve system (532, 512, 514) opening from the rod chamber (505) to the end chamber (506) is exposed to the pressure in the rod chamber (505) with a smaller cross-section exposed to fluid (522), and is adjusted so that in the state of equilibrium it cannot be opened by the pressure in the rod chamber (505),
ae) a lowering non-return valve system (574) opening from the end chamber to the rod chamber is exposed to the pressure in the end chamber (506) and is adjusted so that in the state of equilibrium it cannot be opened by the pressure in the end chamber (506);
b) a low, momentary application of external lifting force (FH) on the movable structural element (581) results in an increase in the pressure in the rod chamber (505) acting on the smaller cross-section exposed to fluid (522) of the lifting non-return valve system (532, 512, 514), which causes the lifting non-return valve system (532, 512, 514) to be opened;
ba) once the lifting non-return valve system (532, 512, 514) has been opened, there is a flow of fluid from the rod chamber (505) to the end chamber (506);
bb) the flow from the rod chamber (505) to the end chamber (506) suffers a drop in pressure in a pressure drop path (510) situated between the lifting non-return valve system (532, 512, 514) and the end chamber (506);
bc) as a result of this pressure drop, an intermediate pressure (PZ) is established within the lifting non-return valve system (532, 512, 514) which is greater than the pressure in the end chamber (506); this intermediate pressure (PZ) acts on a larger cross-section exposed to fluid (535) of the lifting non-return valve system (532, 512, 514) in the sense of opening the lifting non-return valve system (532, 512, 514); as a result of the fluid flow from the rod chamber (505) through the lifting non-return valve system (532, 512, 514) to the end chamber (506), the pressure in the rod chamber (505) drops; the balance is disturbed and the piston rod (504) is pushed out of the cylindrical tube (503);
bd) the pushing of the piston rod (504) out of the cylindrical tube (503) causes continued flow from the rod chamber (505) to the end chamber (506); this continued flow continues to ensure maintenance of an intermediate pressure (PZ) in the lifting non-return valve system (532, 512, 514); this intermediate pressure (PZ) furthermore acts on the larger cross-section exposed to fluid (535) of the lifting non-return valve system (532, 512, 514) and holds it open, even when the exertion of external lifting force (FH) ceases; the pushing-out movement of the piston rod (504) and therefore the lifting of the movable structural element (581) are therefore continued by the action of the cylinder-piston unit (503, 504), without the need for the continued application of an external lifting force (FH);
be) if during the continued pushing-out movement of the piston rod (504) a depressing force (FN) is applied momentarily to the movable structural element (581), then the flow rate through the lifting non-return valve system (532, 512, 514) drops; the intermediate pressure (PZ) acting on the larger cross-section exposed to fluid (535)of the lifting non-return valve system (532,512,514) drops; the lifting non-return valve system (532, 512, 514) is closed again; the movable structural element (581) comes to a standstill and remains stationary, even if the depressing force (FN) ceases again;
c) when the movable structural element (581) is located in an intermediate position at rest, it can be moved by a minor lowering force (FS) in the direction of the lower end position, in that
ca) firstly there is an increase in the pressure (P1) in the end chamber (506), a slight increase in pressure (P1) in the end chamber (506) causing the lowering non-return valve system (574) to open,
cb) consequently, there is an approximation of pressures between the end chamber (506) and the rod chamber (505), and
cc) the pressure acting on the piston rod cross-section (Q3) and prevailing in the two chambers after this approximation of the pressure balance is established between the rod chamber (505) and the end chamber (506) produces a force to push the rod out, which only slightly exceeds the gravity-induced push-in effect on the piston rod of the movable structural element (581) on the piston rod (504), so that it can be overcome by the lowering force (FS) to be permanently applied until a desired lower position of the movable structural element (581) has been reached.

## Revendications

1. Organe de blocage pour le blocage de deux objets mobiles l'un par rapport à l'autre à l'encontre de forces extérieures, dans deux sens de déplacement contraires, l'organe de blocage produisant dans les deux sens de déplacement une force de maintien s'opposant à l'amorce de mouvement et une résistance au déplacement - inférieure à la force de maintien - s'opposant à la poursuite du déplacement, cet organe de blocage étant réalisé en outre avec deux groupes d'organes de blocage (3 ; 4, 7) mobiles l'un par rapport à l'autre dont un (3) est accouplé avec l'un des objets (en 2) et un autre (4, 7) est accouplé avec l'autre des objets (en 1), par déplacement relatif de ces groupes d'organes de blocage (3 ; 4, 7), au moins deux chambres de travail (5, 6) de volume variable, contenant un fluide de travail, étant en outre influençables dans la dimension de leur volume de travail respectif, de manière que le rapport des volumes de ces chambres de travail (5, 6) soit modifié en sens contraire en fonction du sens de déplacement, ces chambres de travail (5, 6) étant en outre reliées entre elles par un système d'échange de fluide (36, 9, 31, 33, 8, 32, 30, 10, 37), qui autorise un échange de fluide entre les deux chambres de travail (5, 6) dans les deux sens d'échange, et ce de manière que la résistance au passage du fluide pendant une opération d'échange de fluide soit plus grande à son début que par la suite,
caractérisé
en ce que le système d'échange de fluide (36, 9, 31, 33, 8, 32, 30, 10, 37) comporte un montage en série de deux points d'étranglement (33-11, 33-12) traversables chacun dans les deux sens, précontraints dans une position de fermeture avec chacun un premier raccord de passage (9, 10) en liaison avec une chambre de travail (5, 6) correspondante et chacun un deuxième raccord de passage (33) en liaison avec le deuxième raccord de passage (32) de l'autre point d'étranglement, une première valeur de pression sur le premier raccord de passage (9) d'un point d'étranglement (33-11) étant suffisante pour ouvrir les deux points d'étranglement (33-11, 32-12), et une deuxième valeur de pression plus petite sur le premier raccord de passage (9) du point d'étranglement (33-11) étant suffisante pour maintenir ouverts les deux points d'étranglement (33-11, 32-12) lors de la poursuite de l'écoulement.

2. Organe de blocage selon la revendication 1,
caractérisé
en ce que la première valeur de pression est la même pour les deux points d'étranglement (33-11, 32-12).

3. Organe de blocage selon la revendication 1,
caractérisé
en ce que la première valeur de pression est différente pour les deux points d'étranglement (33-11, 32-12).

4. Organe de blocage selon l'une des revendications 1 à 3,
caractérisé
en ce que la deuxième valeur de pression est la même pour les deux points d'étranglement (33-11, 32-12).

5. Organe de blocage selon l'une des revendications 1 à 3,
caractérisé
en ce que la deuxième valeur de pression est différente pour les deux points d'étranglement (33-11, 32-12).

6. Organe de blocage selon l'une des revendications 1 à 5,
caractérisé
en ce qu'un point d'étranglement (33-11) comprend une chambre de passage (31) avec le premier raccord de passage (9) et le deuxième raccord de passage (33) et un corps d'étranglement (11), adjacent à cette chambre de passage (31), mobile le long d'une trajectoire, assurant l'étanchéité de la chambre de passage (31), le corps d'étranglement (11) étant précontraint par l'effet de moyens de précontrainte (13) dans une position de fermeture, dans laquelle le deuxième raccord de passage (33) est séparé de la chambre de passage (31), le premier raccord de passage (9) étant en outre relié en permanence avec la chambre de passage (31), dans la position de fermeture du corps d'étranglement (11), celui-ci (11) offrant en outre à une pression de fluide régnant sur le deuxième raccord de passage (33), une plus petite surface d'action (21) et à une pression de fluide régnant dans la chambre de passage (31), une plus grande surface d'action (34) de même sens d'action et un parcours de chute de pression (9) étant prévu entre la chambre de passage (31) du point d'étranglement (33-11) et la chambre de travail (5) correspondante, raccordée par le premier raccord de passage (9).

7. Organe de blocage selon la revendication 6,
caractérisé
en ce que le parcours de chute de pression (9) est formé dans le premier raccord de passage (9).

8. Organe de blocage selon l'une des revendications 1 à 7,
caractérisé
en ce que les deuxièmes raccords de passage (33, 32) des deux points d'étranglement (33-11, 32-12) sont formés par les extrémités d'un canal de liaison (8), qui relie entre eux les deux points d'étranglement (33-11, 32-12).

9. Organe de blocage selon l'une des revendications 1 à 8,
caractérisé
en ce que les deux points d'étranglement (33-11, 32-12) sont logés dans un corps de conduite de fluide (7) commun.

10. Organe de blocage selon la revendication 9,
caractérisé
en ce que des chambres de passage (31-30) des deux points d'étranglement (33-11, 32-12) sont disposées coaxialement dans le corps de conduite de fluide (7) et sont séparées l'une de l'autre par une cloison (7c), qui est traversée par un canal de liaison (8), reliant les chambres de passage (31-30) des deux points d'étranglement (33-11, 32-12), les embouchures du canal de liaison (8) dans les chambres de passage (31-30) formant les deuxièmes raccords de passage (33-32) des deuxièmes points d'étranglement (33-11, 32-12).

11. Organe de blocage selon l'une des revendications 1 à 10,
caractérisé
en ce qu'un groupe d'organes de blocage est conformé en un cylindre (3) et l'autre groupe en une unité à tige de piston (4, 7) avec un piston de séparation (7) entre deux chambres de travail (5, 6).

12. Organe de blocage selon la revendication 11,
caractérisé
en ce que le corps de conduite de fluide (7) fait partie de l'unité à tige de piston (4, 7).

13. Organe de blocage selon la revendication 12,
caractérisé
en ce que le corps de conduite de fluide (7) est formé au moins en partie par le piston de séparation (7).

14. Organe de blocage selon l'une des revendications 1 à 13,
caractérisé
en ce que dans un corps de piston de séparation du piston de séparation (7) sont logées des chambres de logement de corps d'étranglement (15, 16), sensiblement concentriques l'une à l'autre, pour chacun des deux points d'étranglement (33-11, 32-12), qui sont séparées l'une de l'autre par une cloison (7c) d'une seule pièce du corps de piston de séparation, et en ce que des extrémités éloignées l'une de l'autre de ces chambres de logement de corps d'étranglement (15, 16) sont fermées chacune par un bouchon (4, 25), qui sont reliés par le corps de piston de séparation, et dont au moins un (4) est formé par une portion de tige de piston (4).

15. Organe de blocage selon la revendication 14,
caractérisé
en ce que les bouchons (4, 25) sont insérés dans des prolongements (39, 38) des chambres de logement de corps d'étranglement (15, 16) et y sont bloqués.

16. Organe de blocage selon la revendication 15,
caractérisé
en ce que les prolongements (39, 38) des chambres de logement de corps d'étranglement (15, 16) possèdent un plus grand diamètre que les chambres de logement de corps d'étranglement (15, 16) elles-mêmes et en ce que les bouchons (4, 25) sont jointifs axialement avec chaque fois un épaulement de transition entre une chambre de logement de corps d'étranglement (15, 16) et le prolongement (39, 38).

17. Organe de blocage selon la revendication 15 ou 16,
caractérisé
en ce que les bouchons (4, 25) sont fixés dans les prolongements (39, 38) des chambres de logement de corps d'étranglement (15, 16) par déformation du corps de piston de séparation.

18. Organe de blocage selon la revendication 17,
caractérisé
en ce que des portions d'extrémité (7e, 7f) du corps de piston de séparation présentent un rebord réalisé par des surépaisseurs d'extrémité (40, 41) des bouchons (4, 25).

19. Organe de blocage selon l'une des revendication 14 à 18,
caractérisé
en ce que les premiers raccords de passage (9, 10) des chambres de passage (31, 30) sont formés par des perçages radiaux du corps de piston de séparation et en ce que ces perçages radiaux (9, 10) débouchent dans des espaces annulaires (36, 37), qui sont formés entre une portion d'extrémité (7e, 7f) rétrécie du corps de piston de séparation et une surface périphérique intérieure (3c) du cylindre (3).

20. Organe de blocage selon l'une des revendications 14 à 19,
caractérisé
en ce que le corps de piston de séparation présente au point central de sa longueur, dans la direction axiale du cylindre (3), une surépaisseur (7b), qui s'applique contre une surface périphérique intérieure (3c) du cylindre (3), éventuellement par l'intermédiaire d'un dispositif d'étanchéité (7a).

21. Organe de blocage selon l'une des revendications 14 à 20,
caractérisé
en ce que les moyens de précontrainte (13, 14) agissant sur un corps d'étranglement (11, 12), logé dans la chambre de logement de corps d'étranglement (15, 16) respective, sont logés au moins en partie à l'intérieur du bouchon (4, 25) respectif.

22. Organe de blocage selon l'une des revendications 1 à 21,
caractérisé
en ce que les chambres de travail (5, 6) peuvent être pontées dans une ou plusieurs portions de la zone de déplacement relative, par une dérivation de fluide (3d).

23. Organe de blocage selon la revendication 22,
caractérisé
en ce que les chambres de travail (5, 6) peuvent être pontées dans ou deux portions d'extrémité de la zone de déplacement relative, par la dérivation de fluide (3d).

24. Organe de blocage selon l'une des revendications 1 à 23,
caractérisé
en ce qu'il est conçu pour le blocage de portes, de fenêtres, de clapets ou similaires par rapport à un cadre respectif.

25. Organe de blocage selon l'une des revendications 1 à 24,
caractérisé
en ce qu'il comprend un interrupteur électrique (53, 54).

26. Organe de blocage selon l'une des revendications 1 à 25,
caractérisé
en ce que la zone de déplacement relative est limitée à au moins une extrémité par des moyens de butée (52) élastiques.

27. Organe de blocage selon l'une des revendications 11 à 26,
caractérisé
en ce que l'unité de tige de piston (4, 7) est réalisée avec un prolongement de tige de piston (25), le prolongement de tige de piston (25) possédant à peu près la même section transversale que la tige de piston (4), et en ce que la tige de piston (4) et le prolongement de tige de piston (25) traversent chacun une paroi d'extrémité (44, 46), de manière étanche.

28. Organe de blocage selon l'une des revendications 11 à 26,
caractérisé
en ce qu'en cas de remplissage de liquide dans les chambres de travail (105, 106), il est prévu, à la limite d'au moins une chambre de travail (106), un volume de compensation à l'intérieur du cylindre (103).

29. Organe de blocage selon la revendication 28,
caractérisé
en ce que le volume de compensation est formé par une cloison mobile et un moyen de précontrainte (166) agissant sur cette cloison (165) mobile.

30. Organe de blocage selon la revendication 29,
caractérisé
en ce qu'entre le point de séparation (107) et la cloison (165) mobile il est placé un élément de séparation (160), fixe par rapport au cylindre et en ce que cet élément de séparation (160) comporte deux soupapes à une voie (161-162, 163-164), passantes en sens contraire, dont une (161-162) est sollicitée par une force de fermeture plus grande et une autre (163-164) par une force de fermeture plus petite, la soupape à une voie (161-162) sollicitée par une plus grande force de fermeture ouvrant, lors de la rentrée de la tige de piston (104), une liaison entre une chambre de travail partielle (106b), adjacente au piston de séparation (107), et une chambre de travail partielle (106a), adjacente à la cloison (165) mobile.

31. Organe de blocage selon la revendication 30,
caractérisé
en ce que la soupape à une voie (161-162) ouvrant de la chambre de travail partielle (106b) côté piston de séparation vers la chambre de travail partielle (106a) côté cloison, sollicitée par la plus grande force de fermeture, s'ouvre pour une pression dans la chambre de travail (106b) correspondante qui est supérieure à la valeur de la pression dans cette chambre de travail (106b), qui conduit à une ouverture des deux points d'étranglement (133-111, 132-112).

32. Organe de blocage selon la revendication 27,
caractérisé
en ce qu'un volume de compensation (51) élastique est adjacent à au moins l'une des chambres de travail (5, 6), la force nécessaire sur l'unité à tige de piston (4, 7) pour rétrécir ce volume de compensation (51) élastique étant supérieure à une force nécessaire pour produire la première valeur de pression.

33. Système d'échange de fluide entre deux chambres de travail (305, 306), en particulier d'un organe de blocage conformé en ensemble cylindre et piston (303, 304) selon l'une des revendications 1 à 32, comprenant une chambre de passage (330) logée à l'intérieur d'un corps de conduite de fluide (307), dans lequel cette chambre de passage (330) est limitée par un piston d'étanchéité (312), placé mobile dans celle-ci,
cette chambre de passage (330) pouvant être en outre reliée avec une chambre de travail (305), par un premier raccord (332),
un deuxième raccord (310) constamment ouvert de la chambre de passage (330) menant en outre à l'autre chambre de travail (306),
une surface d'extrémité (322, 335) du côté du premier raccord, du piston d'étanchéité (312), étant en outre précontrainte par un moyen de précontrainte de piston d'étanchéité (314) dans une position de fermeture, contre le premier raccord (332),
la surface d'extrémité (322, 335) du côté du premier raccord, offrant en outre à un fluide, agissant sur elle par le premier raccord (332), dans la position de fermeture, une plus petite section d'action de fluide (322),
et la surface d'extrémité (322, 335) du côté du premier raccord, offrant à une pression de fluide régnant dans la chambre de passage (330), une plus grande section transversale d'action de fluide (335),
caractérisé
en ce qu'au deuxième raccord (310) est associé un parcours de chute de pression et en ce qu'un parcours d'écoulement, s'étendant depuis le premier raccord (332) vers le deuxième raccord (310), en cas de passage dans ce sens, ne comporte pas de dérivation de manière qu'en cas de pression minimale prédéterminée, agissant sur la plus petite section transversale d'action de fluide (322), la surface d'extrémité (322, 335) du côté du premier raccord, se soulève du premier raccord (332) et ensuite la plus grande section transversale d'action de fluide (335), à l'intérieur de la chambre de passage (330), est soumise à une pression, qui dépend du débit à travers la chambre de passage (330) et maintient ouvert le premier raccord (332) jusqu'à ce qu'un débit minimum prédéterminé ne soit plus atteint.

34. Système d'échange de fluide selon la revendication 33,
caractérisé
en ce que le corps de conduite de fluide (307) à l'intérieur d'une cavité cylindrique (305, 306), est logé sensiblement concentriquement à celle-ci, le premier raccord (332), s'étendant en direction de l'axe de la cavité cylindrique (305, 306) étant en liaison avec une chambre de premier raccord (305) à l'intérieur de la cavité cylindrique et cette chambre de premier raccord (305) étant à nouveau en liaison avec une chambre de travail ou formant celle-ci et le deuxième raccord (310) étant disposé en outre sensiblement radialement par rapport à l'axe de la cavité cylindrique (305, 306) et étant relié à une conduite de liaison (337), qui - s'étendant de préférence de façon cylindrique annulaire entre le corps de conduite de fluide (307) et une surface périphérique intérieure de la cavité cylindrique (305, 306) - mène à l'autre chambre de travail (306).

35. Système d'échange de fluide selon la revendication 33 ou 34,
caractérisé
en ce que le parcours de chute de pression est formé par le deuxième raccord (310) lui-même, conformé en perçage.

36. Système d'échange de fluide selon la revendication 34 ou 35,
caractérisé
en ce que le premier raccord (332) et le deuxième raccord (310) sont séparés l'un de l'autre par une étanchéité annulaire (307a), qui est formée entre une surface périphérique extérieure du corps de conduite de fluide (307) et une surface périphérique intérieure de la cavité cylindrique (305, 306).

37. Système d'échange de fluide selon l'une des revendications 33 à 36,
caractérisé
en ce que le corps de conduite de fluide (307) est logé à l'intérieur d'une unité à piston de séparation (307), qui est placée à l'intérieur d'un tube cylindrique (303).

38. Système d'échange de fluide selon l'une des revendications 33 à 37,
caractérisé
en ce que le moyen de précontrainte de piston d'étanchéité (314) est formé au moins en partie par un ressort de pression hélicoïdal (314).

39. Système d'échange de fluide selon l'une des revendications 33 à 38,
caractérisé
en ce que le moyen de précontrainte de piston d'étanchéité (314) est logé dans une chambre (316) fermée, qui est formée à l'intérieur du corps de conduite de fluide (307).

40. Système d'échange de fluide selon l'une des revendications 33 à 39,
caractérisé
en ce que le moyen de précontrainte de piston d'étanchéité est obtenu au moins en partie par une pression de fluide dans l'autre chambre de travail (506).

41. Système d'échange de fluide selon l'une des revendications 33 à 40,
caractérisé
en ce qu'il est conçu pour le passage dans des sens de passage opposés, dans un premier sens de passage (305 → 306) le premier raccord (332) agissant comme entrée et le deuxième raccord (310) comme sortie et dans un deuxième sens de passage (306 → 305) le deuxième raccord (310) agissant comme entrée et le premier raccord (332) comme sortie du système d'échange de fluide.

42. Système d'échange de fluide selon l'une des revendications 33 à 40,
caractérisé
en ce qu'il est prévu uniquement pour l'écoulement d'une chambre de travail (505) vers l'autre chambre de travail (506) et en ce que pour un écoulement de fluide de l'autre chambre de travail (506) vers la première chambre de travail (505), il est prévu une soupape anti-retour (570, 575) s'ouvrant en fonction de la différence de pression.

43. Système d'échange de fluide selon la revendication 42,
caractérisé
en ce que la soupape anti-retour (570, 575) est conformée en soupape à coulisse, le corps de conduite de fluide (570) étant conformé en soupape à coulisse à l'intérieur d'une cavité cylindrique (577), précontraint dans une position de fermeture et pouvant passer dans une position d'ouverture, par une pression dérivée de la pression dans l'autre chambre de travail (506).

44. Ensemble à cylindre et piston avec utilisation d'un système d'échange de fluide selon l'une des revendications 33 à 43,
caractérisé
en ce que le système d'échange de fluide est logé à l'intérieur d'une unité à piston de séparation (307) de l'ensemble à cylindre et piston, qui sépare l'une de l'autre deux chambres de travail (305, 306) à l'intérieur d'un tube cylindrique (303) de l'ensemble à cylindre et piston (303, 304).

45. Ensemble à cylindre et piston,
caractérisé
en ce qu'à l'intérieur de l'unité à piston de séparation (7) sont montés en série deux systèmes d'échange de fluide selon l'une des revendications 33 à 41, entre les deux chambres de travail (5, 6) de l'ensemble à cylindre et piston (3, 4), et ce de manière que les premiers raccords (21, 22) des deux systèmes d'échange de fluide soient reliés entre eux, tandis que les deuxièmes raccords (9, 10) des deux systèmes d'échange de fluide sont reliés chacun avec une chambre de travail (5 ou 6) de l'ensemble à cylindre et piston (3, 4).

46. Ensemble à cylindre et piston selon la revendication 45,
caractérisé
en ce que l'unité à piston de séparation (7) avec les deux systèmes d'échange de fluide montés en série, est logée à l'intérieur d'une cavité tubulaire cylindrique (5, 6), qui est fermée à chacune de ses deux extrémités avec une unité de traversée et d'étanchéité (44, 45 ; 46, 26), une tige de piston (4), reliée à l'unité à piston de séparation (7), traversant de manière étanche l'une (44, 45) des unités de guidage et d'étanchéité et un prolongement de tige de piston (25), relié à l'unité à piston de séparation (7), traversant l'autre (46 ; 26) des unités de guidage et d'étanchéité.

47. Ensemble à cylindre et piston selon la revendication 44,
caractérisé
en ce que l'unité à piston de séparation (307) est logée à l'intérieur d'une cavité tubulaire cylindrique (305, 306), qui est fermée à une extrémité (en 365) sur toute sa section transversale et présente seulement à son autre extrémité (en 344, 345) une unité de guidage et d'étanchéité, une tige de piston (304) étant reliée à l'unité à piston de séparation et traversant l'unité de guidage et d'étanchéité (344, 345) et des moyens (365, 366) étant adoptés pour la compensation de la variation du volume de déplacement de la tige de piston (304) à l'intérieur de la cavité tubulaire cylindrique (305, 306), avec déplacement de la tige de piston (304) par rapport à la cavité tubulaire cylindrique (305, 306), moyens qui produisent une force d'éjection sur la tige de piston (304).

48. Ensemble à cylindre et piston selon revendication 47,
caractérisé
en ce qu'en présence uniquement d'un seul système d'échange de fluide à l'intérieur de l'unité à piston de séparation (307), son premier raccord (322) est relié à une chambre de travail (305) côté tige de piston de la cavité tubulaire cylindrique (305, 306), dénommée ci-après la chambre de tige (305), et en ce que le deuxième raccord (310) de ce système d'échange de fluide est relié à une chambre de travail (306) éloignée de la tige de piston, de l'ensemble à cylindre et piston (303, 304), dénommée ci-après la chambre de fond (306).

49. Ensemble à cylindre et piston selon revendication 48,
caractérisé
en ce qu'en cas de remplissage de la chambre de tige (305) et de la chambre de fond (306) avec un fluide incompressible, la chambre de fond (306) est partagée par une cloison fixe (460) en une chambre de fond partielle (306b) proche de la tige de piston et une chambre de fond partielle (306a) éloignée de la tige de piston, en ce qu'il est prévu à la limite de la chambre de fond partielle (306a) éloignée de la tige de piston, en ce qu'un volume de compensation (366, 365) compressible élastiquement est prévu à côté de la chambre de fond partielle (306a) éloignée de la tige de piston, et en ce que dans l'unité à cloison fixe (460) il est prévu un autre système d'échange de fluide selon l'une des revendications 33 à 43, et ce de manière que son premier raccord (432) soit en liaison avec la chambre de fond partielle (306b) proche de la tige de piston.

50. Ensemble à cylindre et piston selon revendication 47,
caractérisé
en ce qu'un corps creux de piston (507b) de l'unité à piston de séparation (507) est relié à la tige de piston (504), qui s'applique de manière étanche contre une paroi périphérique intérieure de la cavité tubulaire cylindrique (505, 506), en ce qu'à l'intérieur de ce corps creux de piston est logé le corps de conduite de fluide (570) du système d'échange de fluide, et ce de manière que le premier raccord (532) de la chambre de passage (530) soit en liaison avec une chambre de travail (505) côté tige de piston, dénommée chambre de tige, de la cavité tubulaire cylindrique (505, 506) et en ce que le corps de conduite de fluide (570) coopère en tant que coulisse de soupape avec le corps creux de piston pour former une soupape anti-retour (575, 570), qui mène d'une chambre de travail (506) éloignée de la tige de piston de la cavité tubulaire cylindrique (505, 506), dénommée chambre de travail (506) côté fond, à la chambre de travail (505) côté tige.

51. Groupe de construction
comprenant une construction de base (580) et un élément de construction (581) mobile, qui est guidé par des moyens de guidage (582) et réglable à l'encontre de la force de gravité, entre une position de fin de course inférieure et une position de fin de course supérieure, par rapport à la construction de base,
dans lequel pour faciliter le passage de l'élément de construction (581) mobile entre la position de fin de course inférieure et la position de fin de course supérieure et pour bloquer l'élément de construction (581) mobile dans des positions intermédiaires, il est prévu au moins un ensemble à cylindre et piston (503, 504) rempli de fluide sous pression, dans lequel en outre cet ensemble à cylindre et piston (503, 504) est réalisé avec un tube cylindrique (503), une cavité tubulaire cylindrique (505, 506) formée à l'intérieur de ce tube cylindrique, une unité de guidage et d'étanchéité (544, 545) à une extrémité de la cavité tubulaire cylindrique (505, 506), une fermeture étanche à l'autre extrémité de la cavité tubulaire cylindrique (505, 506), une tige de piston (504) introduite à travers l'unité de guidage et d'étanchéité (544, 545), une unité à piston de séparation (507) reliée à l'intérieur de la cavité tubulaire cylindrique (505, 506) avec la tige de piston (504), une chambre de tige (505) sur le côté de tige de piston de l'unité à piston de séparation (507), une chambre de fond (506) sur le côté éloigné de la tige de piston de l'unité à piston de séparation (507) et un remplissage de fluide sous pression dans la chambre de tige (505) et dans la chambre de fond (506),
dans lequel en outre sont adoptées des mesures pour la compensation de variations du volume de déplacement de la tige de piston (504) à l'intérieur de la cavité tubulaire cylindrique (505, 506) avec déplacements de la tige de piston (504) par rapport à la cavité tubulaire cylindrique (505, 506), mesures qui produisent une force d'éjection sur la tige de piston (504),
dans lequel en outre un système d'échange de fluide, en particulier selon l'une des revendications 33 à 43, est prévu entre la chambre de tige (505) et la chambre de fond (506),
dans lequel en outre des deux éléments, tube cylindrique (503) et tige de piston (504), l'un (504) est relié à la construction de base (580) et l'autre (503) à l'élément de construction (581) mobile,
et dans lequel le poids de l'élément de construction (581) mobile, les moyens de guidage (582) de l'élément de construction (581) mobile, les points d'attaque (585, 586) entre l'ensemble à cylindre et piston (503, 504), la construction de base (580) et l'élément de construction (581) mobile, la section transversale (Q1) de la cavité tubulaire cylindrique (505, 506), la section transversale (Q3) de la tige de piston (504), le remplissage de fluide dans la cavité de tube cylindrique (505, 506) et le système d'échange de fluide sont conçus et dimensionnés de manière que soient satisfaites les conditions suivantes :
a) lorsque l'élément de construction (581) mobile se trouve dans une position intermédiaire en position de repos, la chambre de fond (506) et la chambre de tige (505) sont séparées l'une de l'autre et l'élément de construction (581) mobile est protégé contre une descente par un fluide de chambre de fond contenu dans la chambre de fond (506) et est protégé contre une montée par un fluide de chambre de tige contenu dans la chambre de tige (505), en ce que
aa) la pression (P1) du fluide de chambre de fond, s'appliquant sur toute la section transversale (Q1) de l'unité à piston de séparation (507), exerce un effet d'éjection sur l'unité à piston de séparation (507),
ab) par cet effet d'éjection il est produit dans la chambre de tige (505) une pression du fluide de chambre de tige, qui, s'appliquant contre la section transversale différentielle (Q2) entre toute la section transversale (Q1) de l'unité à piston de séparation (507) et une section transversale de tige (Q3) de la tige de piston (504), exerce un effet d'introduction sur l'unité à piston de séparation (507),
ac) l'effet d'introduction, produit par la pression de chambre de tige (P2) avec un effet d'introduction (FG) supplémentaire, partant du poids de l'élément de construction mobile (581), maintient l'équilibre avec l'effet d'éjection, la pression (P2) dans la chambre de tige (505) étant supérieure à la pression (P1) dans la chambre de fond (506),
ad) un système de soupape anti-retour de soulèvement (532, 512, 514), s'ouvrant de la chambre de tige (505) vers la chambre de fond (506) est soumis à la pression dans la chambre de tige (505) avec une plus petite section transversale d'action de fluide (522) et est réglé de manière qu'à l'état d'équilibre il ne peut être ouvert par la pression dans la chambre de tige (505),
ae) un système de soupape de non-retour d'abaissement (574), s'ouvrant de la chambre de fond vers la chambre de tige, est soumis à la pression dans la chambre de fond (506) et est réglé de manière qu'à l'état d'équilibre il ne peut être ouvert par la pression régnant dans la chambre de fond (506) ;
b) l'action d'une force de levage extérieure (FH) légère et de courte durée sur l'élément de construction mobile (581) conduit à une augmentation de la pression dans la chambre de tige (505), agissant sur la petite section transversale d'action de fluide (522) du système de soupape anti-retour de soulèvement (532, 512, 514), qui conduit à une ouverture du système de soupape anti-retour de soulèvement (532, 512, 514) ;
ba) si le système de soupape anti-retour de soulèvement (532, 512, 514) est ouvert une fois, il se produit un écoulement de fluide de la chambre de tige (505) vers la chambre de fond (506) ;
bb) l'écoulement de la chambre de tige (505) vers la chambre de fond (506) subit une chute de pression dans un parcours de chute de pression (510) situé entre le système de soupape anti-retour de soulèvement (532, 512, 514) et la chambre de fond (506) ;
bc) par suite de cette chute de pression, il s'établit à l'intérieur du système de soupape anti-retour de soulèvement (532, 512, 514) une pression intermédiaire (PZ), qui est supérieure à la pression dans la chambre de fond (506) ; cette pression intermédiaire (PZ) agit sur une plus grande section transversale d'action de fluide (535) du système de soupape anti-retour de soulèvement (532, 512, 514) dans le sens d'une ouverture du système de soupape anti-retour de soulèvement (532, 512, 514) ; par suite de l'écoulement du fluide de la chambre de tige (505) à travers le système de soupape anti-retour de soulèvement (532, 512, 514) vers la chambre de fond (506), la pression diminue dans la chambre de tige (505) ; l'équilibre est perturbé et la tige de piston (504) est éjectée du tube cylindrique (503) ;
bd) l'éjection de la tige de piston (504) du tube cylindrique (503) provoque un écoulement poursuivi de la chambre de tige (505) vers la chambre de fond (506) ; cet écoulement poursuivi assure en outre le maintien d'une pression intermédiaire (PZ) dans le système de soupape anti-retour de soulèvement (532, 512, 514) ; cette pression intermédiaire (PZ) continue d'agir sur la plus grande section transversale d'action de fluide (535) du système de soupape anti-retour de soulèvement (532, 512, 514) et maintient celui-ci ouvert, même lorsque cesse l'action d'une force de levage extérieure (FH) ; le mouvement d'éjection de la tige de piston (504) et donc le soulèvement de l'élément de construction mobile (581) sont donc poursuivis par l'action de l'ensemble à cylindre et piston (503, 504), sans que l'application poursuivie d'une force de levage extérieure (FH) soit nécessaire ;
be) si pendant le mouvement d'éjection poursuivi de la tige de piston (504) une force d'abaissement (FN) est appliquée à l'élément de construction mobile (581), le débit diminue à travers le système de soupape anti-retour de soulèvement (532, 512, 514) ; la pression intermédiaire (PZ) agissant sur la plus grande section transversale d'action de fluide (535) du système à soupape anti-retour de soulèvement (532, 512, 514), diminue ; le système à soupape anti-retour de soulèvement (532, 512, 514) est à nouveau fermé ; l'élément de construction mobile (581) vient à l'arrêt et reste arrêté, même lorsque la force d'abaissement (FN) cesse à nouveau ;
c) si l'élément de construction mobile (581) se trouve dans une position intermédiaire en position de repos, il peut être déplacé par une petite force d'abaissement (FS) en direction de la position de fin de course inférieure, en ce que
ca) il se produit d'abord une augmentation de la pression (P1) dans la chambre de fond (506), une légèrement augmentation de la pression (P1) dans la chambre de fond (506) conduisant à une ouverture du système à soupape anti-retour d'abaissement (574),
cb) en conséquence il se produit un équilibre de pression approximatif entre la chambre de fond (506) et la chambre de tige (505) et
cc) la pression régnant dans les deux chambres, après intervention de cet équilibre approximatif de pression entre la chambre de tige (505) et la chambre de fond (506), agissant sur la section transversale de tige de piston (Q3), donne une force d'éjection de tige, qui ne dépasse que légèrement l'effet d'introduction de tige de piston dû à la force de gravité de l'élément de construction mobile (581) sur la tige de piston (504), de sorte qu'elle peut être vaincue par la force d'abaissement (FS) à appliquer en permanence jusqu'à ce que soit atteinte une position plus basse voulue de l'élément de construction mobile (581).
